# EUROPEAN PATENT APPLICATION

(11) **EP 1 553 733 A1**
(43) Date of publication of application: **13.07.2005**
(21) Application number: 03748700.6
(22) Date of filing: 03.10.2003
(51) Int. Cl.: H04L 12/56

(54) **TRANSMISSION DATA STRUCTURE, DATA RECEIVING METHOD, DATA RECEIVING APPARATUS, AND DATA RECEIVING PROGRAM**

(30) Priority: 08.10.2002 JP 2002295423; 31.01.2003 JP 2003024613
(71) Applicant: MATSUSHITA ELECTRIC INDUSTRIAL CO., LTD., Kadoma-shi, Osaka 571-8501 (JP)
(72) Inventor: MATSUI, Yoshinori, Ikoma-shi, Nara 630-0212 (JP); NOTOYA, Youji, Neyagawa-shi, Osaka 572-0055 (JP); TOMA, Tadamasa, Toyonaka-shi, Osaka 560-0085 (JP); IDO, Daiji, Yokohama-shi, Kanagawa 236-0005 (JP)
(74) Representative: Eisenführ, Speiser & Partner
(86) International application number: PCT/JP2003/012702
(87) International publication number: WO 2004/034654

(57) **Abstract**

A transmission data structure suitable for the use of Timed Text in deliverly of streaming type. A PES packet (1) has a data structure for transferring a text track of an MP4 file and causing a data receiving apparatus to perform a streaming type of reproduction. Track header (111), Sample description (112) and Config information (113) are information related to reproduction of the whole text track. Text frames (114) have text samples and segment text headers. The text samples include text. Each segment text header is provided for a respective text sample, and is information related to a respective reproduction of the text sample.

## Description

### Technical Field

The present invention relates to transmission data structures of text data, data receiving methods, data receiving apparatuses and data receiving programs.

### Background Art

In recent years, techniques for distributing video, audio and the like have been developed. One example is a method in which digitized video and audio are transmitted after being packetized. Conventional methods (see, e.g., JP2002-199370A (page 6)) relating to distribution of video and audio are known which use MPEG-4 for the audio and video encoding method and an MP4 (ISO/IEC 14496-1:2001) file for the file format for video and audio.

SA (Service and System Aspect) WG4 of 3GPP (Third Generation Partnership Project), a group developing the global standard for third generation mobile communication (W-CDMA), has been developing the video distribution specification TS26.234. The version 5.0.0 of the video distribution specification TS26.234 defines a data structure of text data by expanding an MP4 file that can be used for a download type video distribution (Timed Text). This has enabled reproduction of not only video and audio, but also text in services in which MP4 files are reproduced while being downloaded (e.g., see "3GPP TS26.234 v5.0.0". Page 56. [online]. 3GPP, 2002. [Retrieved on 2002-10-07]. Retrieved from the Internet:
<URL:ftp://ftp.3gpp.org/Specs/2002-03/Rel-5/26_series/26234-500.zip>).

Information notification using text is a very important information notifying means, since it allows the desired information to be directly transmitted to the user and requires significantly less amount of data than information notification using video. The above-described services in which MP4 files are reproduced while being downloaded transmit text as an independent track, instead of transmitting video and text after combining and encoding them. This reduces the likelihood that text is deformed to be rendered illegible, thus making it possible to perform information notification effectively.

Furthermore, with Timed Text defined in 3GPP, it is possible to modify or move a portion of text, or to attach a link to another URL to a character string (style, highlight, karaoke, text box, blinking, scrolling, hyperlink and others). This makes it possible to reproduce the desired information in a variety of formats of presentation.

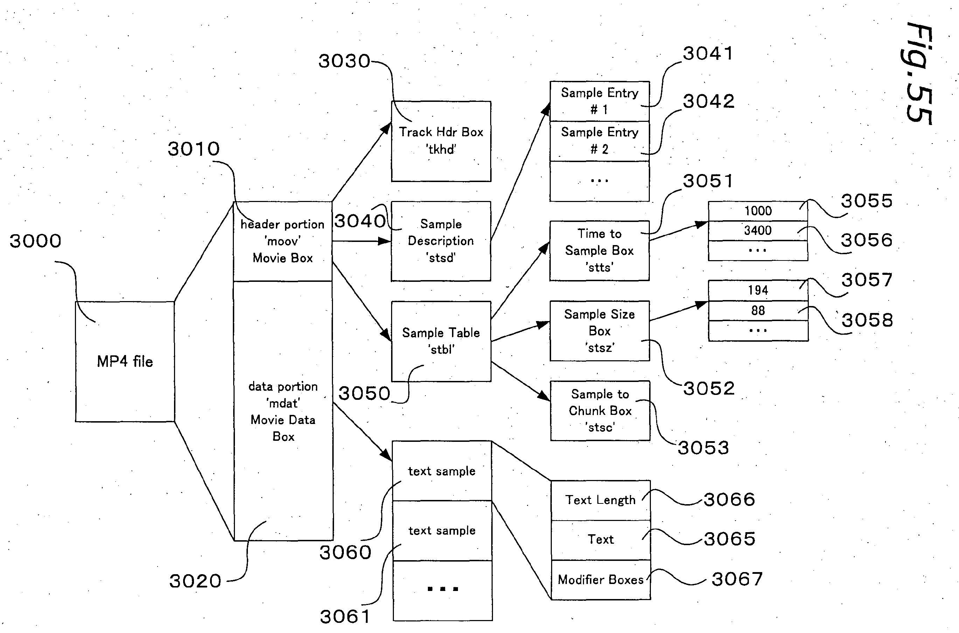

Here, the data structure of Timed Text defined in 3GPP is described with reference to FIG. 55. With Timed Text defined in 3GPP, it is possible to modify or move a portion of text, or to attach a link to another URL (style, highlight, karaoke, text box, blinking, scrolling, hyperlink and others). For this reason, the data structure of Timed Text is constituted by text data and modifying information corresponding thereto.

An MP4 file 3000 is made up of a header portion 3010 and a data portion 3020. The header portion 3010 includes a track header 3030, a sample description 3040 and a sample table 3050. The data portion 3020 includes text samples 3060, 3061, ....

The track header 3030 is information relating to reproduction of Timed Text, and contains information such as a layout (the size of a display area, the relative position with respect to video), a layer (the hierarchical relationship with other media such as video), the reproduction time period of Timed Text, the date of creation of a file and the time scale of a Time-to-Sample-Box 3051 that will be described later.

The sample description 3040 has a plurality of sample entries 3041, 3042, .... The sample entries 3041, 3042, ... are information relating to the default formats of the text samples 3060, 3061, ..., and include, for example, the presence or absence and the direction of scrolling, horizontal and vertical justifications, a background color, a font name, a font size and the like.

The sample table 3050 has a Time-to-Sample-Box 3051, a Sample-Size-Box 3052 and a Sample-to-Chunk-Box 3053. The Time-to-Sample-Box 3051 contains information 3055, 3056, ... relating to the respective reproduction time periods of the text samples 3060, 3061, ... in the order in which the samples 3060, 3061, ... are placed. The time scale of values stored in the information 3055, 3056, ... is specified by the track header 3030. Specifically, the track header 3030 stores the resolution within one second as a time scale; for example, when the time scale value stored in the track header 3030 is [1000], the resolution is 1/1000 second. Therefore, the respective reproduction time periods in terms of seconds of the text samples 3060, 3061, ... are values obtained by respectively dividing the information 3055, 3056, ... by the time scale value stored in the track header 3030; for example, when the time scale value is [1000], a value of [3400] indicated by the information 3056 means that the text sample 3061 is reproduced for 3.4 seconds. The following description is based on that the time scale value is set to [1000]. The Sample-Size-Box 3052 contains information 3057, 3058, ... relating to the respective data lengths of the text samples 3060, 3061, ... in the order in which the text samples 3060, 3061, ... are placed. This enables the reproducing end to detect the boundaries between the respective information sets of the text samples 3060, 3061, .... The Sample-to-Chunk-Box 3053 contains information that associates each of the text samples 3060, 3061, ... with each of the sample entries 3041, 3042, .....

The text sample 3060 has a text 3065, a data length 3066 of the text 3065 and a modifier 3067. The text 3065 stores character information itself. The character code is encoded with UTF-8 or UTF-16 Big Endian of the Unicode standards. Discrimination between UTF-8 and UTF-16 is performed with a Byte Order Mark (BOM) described in the first two bytes of the text 3065. When the first two bytes are [0x FEFF], it indicates that the encoding is performed with UTF-16: On the other hand, when no BOM is included at the start of the text 3065, it indicates that the encoding is performed with UTF-8. The data length 3066 indicates the byte length of the character information itself. The modifier 3067 is optional modifying information of the text 3065, for which seven modification types such as highlight, karaoke, blinking and hyperlink are defined. The remaining text samples 3061, ... have the same data structure as the text sample 3060, and therefore the description has been omitted.

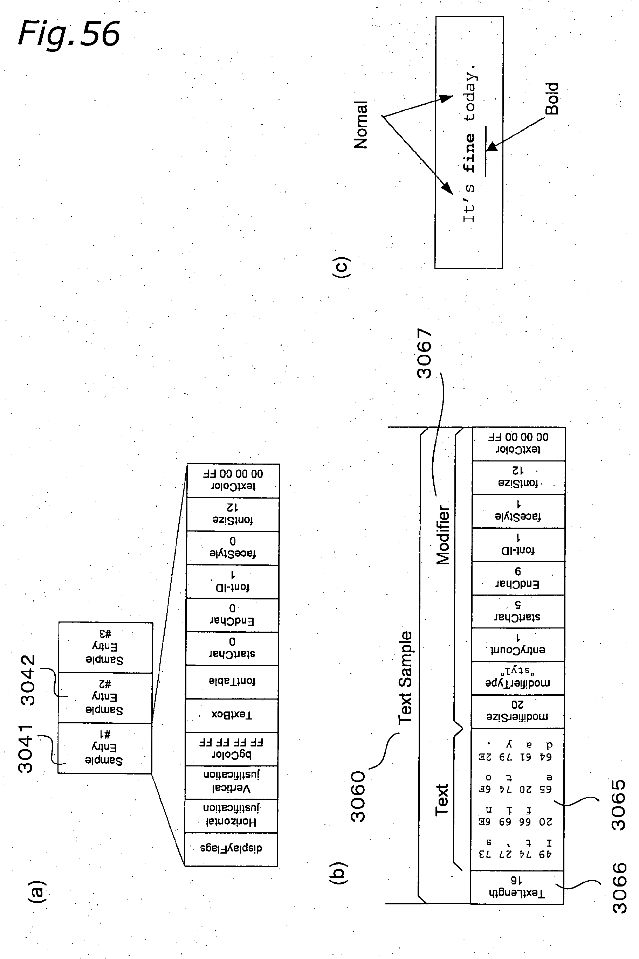

The reproduction of Timed Text is specifically described with reference to FIG. 56.

First, the detailed structure of the sample entry 3041 is described with reference to FIG. 56(a). The remaining sample entries 3042, ... have the same data structure, and therefore the description has been omitted. The sample entry 3041 contains, for example, the presence or absence and the direction of scrolling (displayFlags), horizontal and vertical justifications within a display area (Horizontal justification, Vertical justification), a background color specified with an RGB value and a transparency (bgColor), a display area (TextBox), a font name (fontTable, font-ID), a font size (fontSize), a style such as Bold, Italic or Underline (faceStyle) and a font color specified with an RGB value and a transparency (fontColor). It should be noted that data (startChar, EndChar) specifying the range in which this format is applied always assume a value of [0] to indicate that this format is applied to the entire range of text included in a text sample to which the format specified by the sample entry 3041 is applied. The respective values of the sample entry 3041 shown in FIG. 56(a) mean that the background color is specified as white, the font color as black and the style as Normal in the default format of the text 3065.

Next, the detailed structure of the modifier 3067 is described with reference to FIG. 56(b). The modifier 3067 includes, for example, the data length of the modifier 3067 (modifierSize), specification of an optional format of the text 3065 (modifierType, entryCount), specification of the range of the text 3065 in which the optional format is applied (startChar, EndChar), a font name (font-ID), a font size (fontSize), a style such as Bold, Italic or Underline (faceStyle) and a font color specified with an RGB value and a transparency (fontColor). This specification of an optional format is applied preferentially over the format specified in any of the sample entries 3041, 3042, .... The respective values of the modifier 3067 shown in FIG. 56(b) mean that the fifth through eighth characters in the text 3065 are specified as [Bold].

FIG. 56(c) shows how the text sample 3060 to which the above-described format is applied is reproduced. For example, when the content indicated by the text 3065 is [It's fine today.], the fifth through eighth characters [fine] are reproduced in bold.- Further, a value of [1000] of the information 3055 placed first in the Time-to-Sample-Box 3051 shows that the reproduction time period is 1000 [msec] (see, FIG. 55).

When reproducing an MP4 file having the above-described structure, the MP4 file is downloaded on a receiving terminal in advance and reproduction of the MP4 file is carried out on the receiving terminal after completion of the download.

### Disclosure of Invention

On the other hand, it has become common to employ streaming type distribution, in place of the download type, in services for distributing media data containing video and audio. In the streaming type distribution, the process of receiving media data and the process of reproducing the received media data are executed in parallel at the receiving terminal. For this reason, it has the advantage of reducing the waiting period from the time when the media data is requested to the time when it is reproduced, even in the case of reproducing long-duration media data. Furthermore, this distribution is suitable for distributing media data that is broadcasted live.

In the case of performing information notification using Timed Text in such a streaming type distribution, Timed Text has a data structure that cannot be isolated from an MP4 file, which is its container file format, and thus is difficult to be used in the streaming type distribution.

Therefore, a problem to be solved by the present invention is to provide a transmission data structure suitable for using Timed Text in the streaming type distribution. Furthermore, in another aspect of the present invention, a problem to be solved is to provide a data receiving method, a data receiving apparatus and a data receiving program for receiving data having this transmission data structure.

A transmission data structure of data for text transmission according to claim 1 is a transmission data structure of data for text transmission for transferring data for text reproduction relating to reproduction of text data and successively reproducing the data for text reproduction with a data receiving apparatus, including: full text header data; fragment text data; and fragment text header data. The full text header data relates to reproduction of the text data as a whole. The fragment text data contains fragmented portions of the text data. The fragment text header data is placed for each instance of the fragment text data and relating to individual reproduction of the fragment text data.

Here, the data for text reproduction is, for example, data such as an MP4 file.

In the data receiving apparatus, information relating to reproduction of the text data as a whole is obtained from the full text header data. Furthermore, information relating to reproduction of the fragment text data is obtained from the fragment text header data. The fragment text data are successively reproduced based on the full text header data and the fragment text header data.

With the transmission data structure of the present invention, it is possible to successively reproduce the fragment text data, even when not all the data for text reproduction are received. That is, a transmission data structure suitable for streaming distribution can be provided.

A transmission data structure according to claim 2 is the transmission data structure of data for text transmission described in claim 1, wherein the fragment text header data contains reproduction time period information relating to a reproduction time period of the fragment text data.

In the data receiving apparatus, information relating to the reproduction time period of the fragment text data is obtained from the fragment text header data. The fragment text header data are successively reproduced based on the obtained reproduction time period information.

With the transmission data structure of the present invention, the fragment text header data can be successively reproduced each for the reproduction time period included in the reproduction time period information.

A transmission data structure of data for text transmission according to claim 3 is the transmission data structure of data for text transmission described in claim 1 or 2, wherein the fragment text header data contains data length information relating to a data length of the fragment text data.

With the transmission data structure of the present invention, the data boundary of the fragment text data becomes clear in the data for text transmission that are successively transmitted. Accordingly, it is possible to prevent, for example, erroneous reproduction in streaming transmission.

A transmission data structure of data for text transmission according to claim 4 is the transmission data structure of data for text transmission described in any of claims 1 to 3, wherein the full text header data contains text reproduction information containing information relating to a reproduction area of the text data, and format information containing information relating to a format of the fragment text data.

Here, the text reproduction information is, for example, information relating to the layout of the text data (the size of the display area, the relative position with respect to other media such as video) and a layer (the hierarchical relationship with other media) The format information is, for example, the presence or absence and the direction of scrolling, the reproduction position, the background cooler, the font formats (e.g., a font name, a size, a color, Bold, Underline and Italic) and the like of the fragment text data.

The data receiving apparatus determines the reproduction area of each instance of the fragment text data, based on the text reproduction information. Furthermore, it determines the format applied to each instance of the fragment text data based on the format information.

A transmission data structure of data for text transmission according to claim 5 is the transmission data structure of data for text transmission described in claim 4, wherein the full text header data further contains data length configuration information for configuring a data length of the fragment text header data.

In the data receiving apparatus, the data length of the fragment text header data is determined based on the data length configuration information. The data length configuration information specifies the data length of the fragment text header data, for example, in units of bits.

With the transmission data structure of the present invention, it is possible to configure the data length of the fragment text header data relating to individual reproduction of the fragment text data, as necessary. That is, it is possible to configure the amount of information of the fragment text header data to an amount that is necessary and sufficient. As a result, it is possible to reduce the amount of information required for individual reproduction of the fragment text data.

A transmission data structure of data for text transmission according to claim 6 is the transmission data structure of data for text transmission described in claim 4 or 5, wherein the fragment text header data contains an index indicating a relation between the fragment text data and the format information.

In the data receiving apparatus, the format applied to the fragment text data is determined from the format information based on the index.

With the transmission data structure of the present invention, it is not necessary to transmission information relating to the format, for example, for each instance of the fragment text data. Accordingly, it is possible to improve the bit efficiency.

A transmission data structure of data for text transmission according to claim 7 is the transmission data structure of data for text transmission described in any of claims 4 to 6, wherein the data for text transmission includes a plurality of packets. The text reproduction information is packetized in a different type from the fragment text data and the fragment text header data.

Here, the text reproduction information is packetized in a section format. The fragment text data and the fragment text header data are packetized, for example, in a PES format.

With the transmission data structure of the present invention, it is possible to improve the transmission efficiency of the fragment text data. That is, it is possible to secure more bandwidth for transmission of the fragment text data, by transmitting information such as the text reproduction information that does not need to be frequently transmitted in a different type from the fragment text data.

A transmission data structure of data for text transmission according to claim 8 is the transmission data structure of data for text transmission described in claim 7, wherein the format information is packetized in the same type as the text reproduction information.

Here, the text reproduction information and the format information are packetized, for example, in a section format.

With the transmission data structure of the present invention, it is possible to secure even more bandwidth for transmission of the fragment text data when the format information does not need to be frequently transmitted.

A transmission data structure of data for text transmission according to claim 9 is the transmission data structure of data for text transmission described in claim 7, wherein the format information is packetized in the same type as the fragment text data and the fragment text header data.

Here, the format information, the fragment text data and the fragment text header data are packetized, for example, in a PES format.

With the transmission data structure of the present invention, it is possible to transmit the format information in the same packet as the fragment text data. Accordingly, even when there is any change in the format information, the changed format information can be received before the fragment text data to which the format is applied. That is, it is possible to reflect, for example, the change in the format information more reliably.

A transmission data structure of data for text transmission according to claim 10 is the transmission data structure of data for text transmission described in claim 9, wherein the format information includes a plurality of format information units. The format information unit is placed for each instance of the fragment text data.

The data receiving apparatus obtains the format information unit placed for each instance of the fragment text data, and determines the format of each instance of the fragment text data.

With the transmission data structure of the present invention, it is possible to reflect, for example, the change of the format applied to the fragment text data more reliably.

A transmission data structure of data for text transmission according to claim 11 is the transmission data structure of data for text transmission described in any of claims 1 to 10, wherein the data for text transmission is data that is transmitted as multiplexed data.

In the data receiving apparatus, data for text transmission is obtained through separation from multiplexed data.

A data receiving method for data for text transmission according to claim 12 is a data receiving method for data for text transmission, including: a receiving step; and a reproducing step. The receiving step receives data for text transmission having the transmission data structure according to any of claims 1 to 11. The reproducing step successively reproduces fragmented portions of the text data contained in the fragment text data, based on the full text header data, the fragment text data and the fragment text header data that are contained in the data for text transmission.

In this data receiving method, information relating to reproduction of the text data as a whole is obtained from the full text header data. Furthermore, information relating to reproduction of the fragment text data is obtained from the fragment text header data. The fragment text data are successively reproduced based on the full text header data and the fragment text header data.

With the data receiving method of the present invention, it is possible to successively reproduce fragment text data even when not all the data for text transmission are received. That is, a data receiving method suitable for streaming transmission can be provided.

A data receiving apparatus for data for text transmission according to claim 13 is a data receiving apparatus for data for text transmission, including: a receiving means; and a reproducing means. The receiving means receives data for text transmission having the transmission data structure according to any of claims 1 to 11. The reproducing means successively reproduces fragmented portions of the text data contained in the fragment text data, based on the full text header data, the fragment text data and the fragment text header data that are contained in the data for text transmission.

In this data receiving apparatus, information relating to reproduction of the text data as a whole is obtained from the full text header data. Furthermore, information relating to reproduction of the fragment text data is obtained from the fragment text header data. The fragment text data are successively reproduced based on the full text header data and the fragment text header data.

With the data receiving apparatus of the present invention, it is possible to successively reproduce fragment text data even when not all the data for text transmission are received. That is, a data receiving apparatus suitable for streaming transmission can be provided.

A data receiving program according to claim 14 is a data receiving program for performing, with a computer, a data receiving method for data for text transmission having the transmission data structure according to any of claims 1 to 11, wherein the data receiving method includes: a receiving step; and a reproducing step. The receiving step receives data for text transmission having the transmission data structure according to any of claims 1 to 11. The reproducing step successively reproduces fragmented portions of the text data contained in the fragment text data, based on the full text header data, the fragment text data and the fragment text header data that are contained in the data for text transmission.

In this data receiving program, information relating to reproduction of the text data as a whole is obtained from the full text header data. Furthermore, information relating to reproduction of the fragment text data is obtained from the fragment text header data. The fragment text data are successively reproduced based on the full text header data and the fragment text header data.

With the data receiving program of the present invention, it is possible to successively reproduce fragment text data even when not all the data for text transmission are received. That is, a data receiving program suitable for streaming transmission can be provided.

A transmission data structure of data for text transmission according to claim 15 is a transmission data structure of data for text transmission for transferring and successively reproducing data for text reproduction relating to reproduction of text data, wherein the data for text reproduction contains a plurality of instances of fragment text data obtained by fragmenting the text data, and text header data containing information for reproducing the fragment text data. The data for text transmission includes a plurality of packets. Additionally, the fragment text data are placed in each of the packets in an order in which they are displayed. Furthermore, the packet contains reproduction time information of each instance of the fragment text data. Further still, a second packet contains fragment text data whose reproduction time information overlaps that of fragment text data of a first packet preceding the second packet.

Here, the reproduction time information is information constituted by the reproduction time of the fragment text data placed first in the packet and the respective reproduction time periods of the fragment text data, or information constituted by the respective reproduction times of the fragment text data.

The second packet and the first packet preceding the second packet have fragment text data whose reproduction time information overlap. That is, the fragment text data having overlapping reproduction time information are allowed to be transmitted in different packets for a plurality of times. This makes it possible to improve error tolerance of the data for text transmission.

A transmission data structure of data for text transmission according to claim 16 is the transmission data structure of data for text transmission described in claim 15, wherein the number of the fragment text data contained in the packet is determined as such a number that the packet is transmitted in a bandwidth substantially corresponding to a transmission channel bandwidth secured for transmission of the data for text transmission.

This makes it possible to effectively utilize the transmission channel bandwidth secured for transmission of the data for text transmission, and to transmit fragment text data having overlapping reproduction time information for a plurality of times, thus further improving the error tolerance of the data for text transmission.

A transmission data structure of data for text transmission according to claim 17 is the transmission data structure of data for text transmission described in claim 15 or 16, wherein the data for text transmission is data that is transmitted as multiplexed data

In the data receiving apparatus, the data for text transmission is obtained through separation from multiplexed data.

A data receiving method for data for text transmission according to claim 18 is a data receiving method for data for text transmission having the transmission data structure described in any of claims 15 to 17, including: a time obtaining step; and a replacing step. The time obtaining step obtains a time Tn indicated by reproduction time information of each instance of the fragment text data of the first packet, and a time Ta indicated by reproduction time information of the first fragment text data of the second packet. The replacing step replaces fragment text data whose time Tn is equal to or later than the time Ta in the first packet by fragment text data that has overlapping reproduction time information in the second packet.

With this data receiving method, it is possible to update fragment text data that has been transmitted in advance to the latest fragment text data, making it possible to always reproduce fragment text data having the latest information.

A data receiving method for data for text transmission according to claim 19 is a data receiving method for data for text transmission having the transmission data structure described in any of claims 15 to 17, including: a reception delay determining step; and a reproducing step. The reception delay determining step determines whether a receiving time Td of first fragment text data is later than a time Tn indicated by reproduction time information of the first fragment text data and is earlier than a time Tn+1 indicated by reproduction time information of subsequent second fragment text data. The reproducing step reproduces the first fragment text data from the receiving time Td to the time Tn+1, if the determination is positive.

With this data receiving method, even fragment text data that has been received later than a time indicated by the data reproduction time information can be reproduced before arrival of the reproduction time information of the subsequent fragment text data. That is, it is possible to reproduce text data that should have been reproduced even from the middle of the data, thus preventing the harmful effect of not being able to reproduce text data for a long period of time, for example.

A data receiving method for data for text transmission according to claim 20 is the data receiving method for data for text transmission described in claim 19, wherein, in the reproducing step, reproduction of the first fragment text data is started from a reproduction state of the point when the time Tn to the receiving time Td has elapsed in the first fragment text data.

With this data receiving method, it is possible to reproduce, for example, fragment text data that involves a temporal variation such as scroll reproduction and karaoke reproduction even from the middle of the data. This makes it possible to prevent the harmful effect of not being able to reproduce text data in a state that should have been reproduced at the time of reproduction.

A data receiving apparatus for data for text transmission according to claim 21 is a data receiving apparatus for data for text transmission having the transmission data structure described in any of claims 15 to 17, including: a time obtaining means; and a replacing means. The time obtaining means obtains a time Tn indicated by reproduction time information of each instance of the fragment text data of the first packet, and a time Ta indicated by reproduction time information of the first fragment text data of the second packet. The replacing means replaces fragment text data whose time Tn is equal to or later than the time Ta in the first packet by fragment text data that has overlapping reproduction time information in the second packet.

With this data receiving apparatus, it is possible to update fragment text data that has been transmitted in advance to the latest fragment text data, making it possible to always reproduce fragment text data having the latest information.

A data receiving apparatus for data for text transmission according to claim 22 is a data receiving apparatus for data for text transmission having the transmission data structure described in any of claims 15 to 17, including: a reception delay determining means; and a reproducing means. The reception delay determining means determines whether a receiving time Td of first fragment text data is later than a time Tn indicated by reproduction time information of the first fragment text data and is earlier than a time Tn+1 indicated by reproduction time information of subsequent second fragment text data. The reproducing means reproduces the first fragment text data from the receiving time Td to the time Tn+1, if the determination is positive.

With this data receiving apparatus, even fragment text data that has been received later than a time indicated by the data reproduction time information can be reproduced before arrival of the reproduction time information of the subsequent fragment text data. That is, it is possible to reproduce text data that should have been reproduced even from the middle of the data, thus preventing the harmful effect of not being able to reproduce text data for a long period of time, for example.

A data receiving apparatus for data for text transmission according to claim 23 is the data receiving apparatus for data for text transmission described in claim 22, wherein, in the reproducing means, reproduction of the first fragment text data is started from a reproduction state of the point when the time Tn to the receiving time Td has elapsed in the first fragment text data.

With this data receiving apparatus, it is possible to reproduce, for example, fragment text data that involves a temporal variation such as scroll reproduction and karaoke reproduction even from the middle of the data. This makes it possible to prevent the harmful effect of not being able to reproduce text data in a state that should have been reproduced at the time of reproduction.

A data receiving program according to claim 24 is a data receiving program for performing, with a computer, a data receiving method for data for text transmission having the transmission data structure described in any of claims 15 to 17, wherein the data receiving method includes: a time obtaining step; and a replacing step. The time obtaining step obtains a time Tn indicated by reproduction time information of each instance of the fragment text data of the first packet, and a time Ta indicated by reproduction time information of the first fragment text data of the second packet. The replacing step replaces fragment text data whose time Tn is equal to or later than the time Ta in the first packet by fragment text data that has overlapping reproduction time information in the second packet.

With this data receiving program, it is possible to update fragment text data that has been transmitted in advance to the latest fragment text data, making it possible to always reproduce fragment text data having the latest information.

A data receiving program according to claim 25 is a data receiving program for performing, with a computer, a data receiving method for data for text transmission having the transmission data structure described in any of claims 15 to 17, wherein the data receiving method includes: a reception delay determining step; and a reproducing step. The reception delay determining step determines whether a receiving time Td of first fragment text data is later than a time Tn indicated by reproduction time information of the first fragment text data and is earlier than a time Tn+1 indicated by reproduction time information of subsequent second fragment text data. The reproducing step reproduces the first fragment text data from the receiving time Td to the time Tn+1, if the determination is positive.

With this data receiving program, even fragment text data that has been received later than a time indicated by the data reproduction time information can be reproduced before arrival of the reproduction time information of the subsequent fragment text data. That is, it is possible to reproduce text data that should have been reproduced even from the middle of the data, thus preventing the harmful effect of not being able to reproduce text data for a long period of time, for example.

A data receiving program according to 26 is the data receiving program for data for text transmission described in claim 25, wherein, in the reproducing step, reproduction of the first fragment text data is started from a reproduction state of the point when the time Tn to the receiving time Td has elapsed.

With this data receiving program, it is possible to reproduce, for example, fragment text data that involves a temporal variation such as scroll reproduction and karaoke reproduction even from the middle of the data. This makes it possible to prevent the harmful effect of not being able to reproduce text data in a state that should have been reproduced at the time of reproduction.

### Brief Description of Drawings

FIG. 1 is a diagram showing the data structure of a PES packet according to the present invention (First embodiment).
FIG. 2 is a diagram illustrating the details of the data structure of a PES packet according to the present invention (First embodiment).
FIG. 3 is a block diagram of a data transmission apparatus according to the present invention (First embodiment).
FIG. 4 is an operation flowchart of a data transmission method according to the present invention (First embodiment).
FIG. 5 is a diagram illustrating the details of a data transmission method according to the present invention (First embodiment).
FIG. 6 is a block diagram of a data receiving apparatus according to the present invention (First embodiment).
FIG. 7 is an operation flowchart of a data receiving method according to the present invention (First embodiment).
FIG. 8 is diagram illustrating the syntax of data analysis in a data receiving apparatus according to the present invention (First embodiment).
FIG. 9 is a diagram illustrating the rules for determining the text frame to be decoded when the reproduction times of text frames included in a plurality of PES packets overlap (First embodiment).
FIG. 10 is a diagram illustrating the rules for determining the text frame to be decoded when the time at which a PES packet is received has passed the time indicated by the PTS of that PES packet (First embodiment).
FIG. 11 is a diagram illustrating a reproduction state when a text frame containing processing that involves a temporal variation is received (First embodiment).
FIG. 12 is a diagram showing the data structure of a PES packet as a modified example of the present invention (First embodiment).
FIG. 13 is a diagram showing the data structure of a PES packet as a modified example of the present invention (First embodiment).
FIG. 14 is a diagram showing the data structure of a sample description as a modified example of the present invention (First embodiment).
FIG. 15 is a diagram showing the data structure of a PES packet according to the present invention (Second embodiment).
FIG. 16 is a block diagram of a data transmission apparatus according to the present invention (Second embodiment).
FIG. 17 is a block diagram of a data receiving apparatus according to the present invention (Second embodiment).
FIG. 18 is a diagram showing the data structure of a PES packet as a modified example of the present invention (Second embodiment).
FIG. 19 is a diagram showing the data structure of a PES packet as a modified example of the present invention (Second embodiment).
FIG. 20 is a diagram illustrating a general processing of an RTP/RTSP sequence (Third embodiment).
FIG. 21 is a diagram showing the data structure of an RTP packet in an in-band transmission (Third embodiment).
FIG. 22 is a diagram showing the data structure of an RTP packet in an out-of-band transmission (Third embodiment).
FIG. 23 is a block diagram of a data transmission apparatus according to the present invention (Third embodiment).
FIG. 24 is a block diagram of a data receiving apparatus according to the present invention (Third embodiment).
FIG. 25 is a diagram illustrating a general processing flow at the time of obtaining media data in an MP4 file format (Fourth embodiment).
FIG. 26 is a diagram illustrating a basic packet Pt0, which is transmission when transmitting Timed Text as an RTP packet (Fourth embodiment).
FIG. 27 is a diagram illustrating the basic structure of a fragment packet (Fourth embodiment).
FIG. 28 is a diagram illustrating the outline of a fragment header having identification information of the character code of a text body Td0 (Fourth embodiment).
FIG. 29 is a diagram illustrating the outline of a fragment header having information for indicating the start position of a modifier Md0 (Fourth embodiment).
FIG. 30 is a diagram illustrating the outline of a fragment header having information for indicating the start position of a modifier Md0 (Fourth embodiment).
FIG. 31 is diagram illustrating the relationship between the variations of fragmentation of a text sample Ts0 and the start position information of a modifier or a modifier box (Fourth embodiment).
FIG. 32 is a diagram illustrating the outline of a fragment header having information relating to from what character through the last character of the entire text body are contained in the text body portion included in the fragment text sample (Fourth embodiment).
FIG. 33 is a diagram illustrating the outline of information stored for reproduction of a fragmented modifier box (Fourth embodiment).
FIG. 34 is a diagram illustrating information stored for reproduction of a fragmented karaoke style modifier box (Fourth embodiment).
FIG. 35 is a diagram illustrating information stored for reproduction of a fragmented character style modifier box (Fourth embodiment).
FIG. 36 is a diagram illustrating information stored for reproduction of a fragmented hyperlink style modifier box (Fourth embodiment).
FIG. 37 is a diagram illustrating an example of the structure of a header portion HdN of a fragment packet PtN (Fourth embodiment).
FIG. 38 is a block diagram of a data reproduction apparatus 710 for reproducing an RTP packet having the data structure according to the present invention (Fourth embodiment).
FIG. 39 is a flowchart illustrating a data reproduction method for reproducing an RTP packet having the data structure according to the present invention (Fourth embodiment).
FIG. 40 is a block diagram of a data multiplexing apparatus 720 for generating an RTP packet having the data structure according to the present invention (Fourth embodiment).
FIG. 41 is a flowchart illustrating a data multiplexing method for generating an RTP packet having the data structure according to the present invention (Fourth embodiment).
FIG. 42 is a diagram illustrating the structure of a fragment header FhN according to the fifth embodiment (Fifth embodiment).
FIG. 43 is a diagram illustrating information included in a fragment header FhN, in relation to the combination of a text indicator and a fragment header flag (Fifth embodiment).
FIG. 44 is a diagram illustrating information included in a sample header ShN, in relation to the combination of a text indicator and a fragment header flag (Fifth embodiment).
FIG. 45 is a table showing fragmentation states of a text sample (Fifth embodiment).
FIG. 46 is a block diagram of a data reproduction apparatus 730 for reproducing an RTP packet having the data structure according to the present invention (Fifth embodiment).
FIG. 47 is a flowchart illustrating a data reproduction method for reproducing an RTP packet having the data structure according to the present invention (Fifth embodiment).
FIG. 48 is a block diagram of a data multiplexing apparatus 740 for generating an RTP packet having the data structure according to the present invention (Fifth embodiment).
FIG. 49 is a flowchart illustrating a data multiplexing method for generating an RTP packet having the data structure according to the present invention (Fifth embodiment).
FIG. 50 is a diagram illustrating a recording medium for storing a program for realizing, with a computer system, the data transmission method or the data receiving method according to the' above-described embodiments (Sixth embodiment).
FIG. 51 is a block diagram of an overall structure of a contents supplying system (Seventh embodiment).
FIG. 52 shows an example of a cellular phone equipped with a moving image coding device according to the present invention (Seventh embodiment).
FIG. 53 is a block diagram of the structure of a cellular phone (Seventh embodiment).
FIG. 54 shows an example of a digital broadcasting system (Seventh embodiment).
FIG. 55 is a diagram illustrating the data structure of Timed Text defined in 3GPP (Background art).
FIG. 56 is a diagram illustrating the details of the data structure of Timed Text (Background art).

### Best Mode for Carrying Out the Invention

### First Embodiment

As a first embodiment of the present invention, the streaming transmission of a text track using MPEG-2 TS is described. The text track is data including information for reproducing text with the same representation as Timed Text defined in 3GPP.

### <Data structure of PES packet>

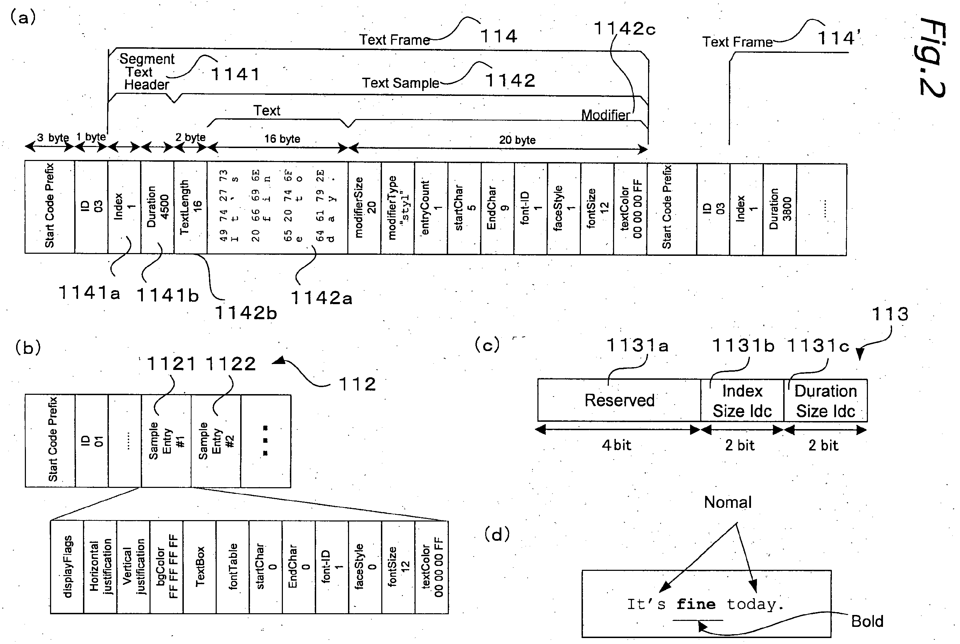

(1)

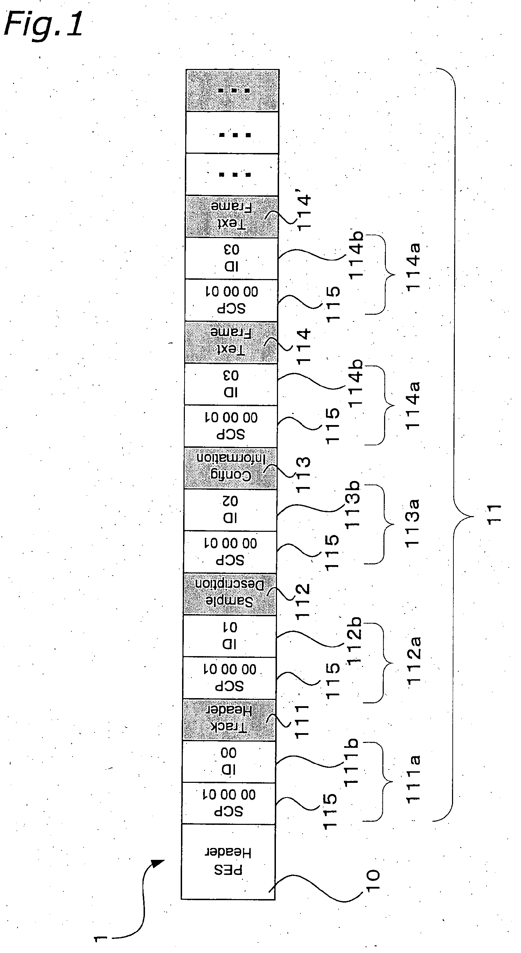

   FIG. 1 shows the data structure of a PES packet 1 for streaming transmission of a text track using MPEG-2 TS.
   In the MPEG-2 system, a signal constituting a track such as video, audio or text is called an ES (Elementary Stream). Further, an ES that is divided into variable length blocks and to which header information is added is called a PES (Packetized Elementary Stream). The MPEG-2 system defines a TS (Transport Stream) as a signal for multiplexing and transmitting a plurality of PESs.
(2)
   The data structure of the PES packet 1 shown in FIG. 1 is made up of a PES header portion 10 and a payload portion 11 that are defined in the MPEG-2 system. The PES header portion 10 has a PTS (Presentation Time Stamp), which is time information for synchronous reproduction between tracks such as video, audio or text. The payload portion 11 includes a track header 111, a sample description 112, config information 113, text frames 114, 114', ..., and identifiers (a track header identifier 111a, a sample description identifier 112a, a config information identifier 113a and a text frame identifier 114a) identifying the respective information sets.
   The track header 111 is information relating to reproduction of the entire text track, and contains information such as a layout (the size of a display area (the width and height), the relative position with respect to video (lateral and longitudinal translations from a video display area)), a layer (the hierarchical relationship with other media such as video), the reproduction time period of the text track, the date of creation and the time scale of a duration 1141 b that will be described later.
   The sample description 112 includes a plurality of sample entries 1121, 1122, ... (See FIG. 2(b)). Each of the sample entries 1121, 1122, ... is information relating to the format of the text track, ..., and includes, for example, the presence or absence and the direction of scrolling, horizontal and vertical justifications, a background color, a font name, a font size, other default format information and the like.
   The config information 113 contains information for configuring the data length of an index 1141a and a duration 1141b (see FIG. 2(a)) included in text frames 114, 114', ... that will be described later. For example, the data length of each of the index 1141a and the duration 1141b is set to one to 4 bytes.
   The text frames 114, 114', ... are placed in the order in which they are reproduced. In addition, the value indicated by the PTS in the PES header portion 10 indicates the reproduction time of the text frame 114, which is placed first in the payload portion 11.
   In the following, the text frame 114 is described with reference to FIG. 2(a). The remaining text frames 114', ... have the same structure as the text frame 114, and therefore the description has been omitted.
   The text frame 114 is made up of a segment text header 1141 and a text sample 1142.
   The segment text header 1141 has an index 1141a and a duration 1141b. The index 1141a indicates the default format of the text sample 1142 by specifying the sample entries 1121, 1122, ... (see FIG. 2(b)). The duration 1141b is information relating to the reproduction time period of the text sample 1142. The time scale of a value stored in the duration 1141b is specified in the track header 111 (see FIG. 1). The text sample 1142 has a text 1142a, a text length 1142b storing the data length of the text 1142a, and a modifier 1142c. The modifier 1142c is used when the format of a portion of the entire text 1142a is optionally modified (such as highlight, karaoke, blinking and hyperlink).
   The identifiers 111a, 112a, 113a and 114a shown in FIG. 1 are made up of a start code 115 common to each of them and their respective unique IDs 111b, 112b, 113b and 114b. For example, the identifiers 111a, 112a, 113a and 114a have structures in which a 3-byte start code 115 is added to one byte IDs 111b, 112b, 113b and 114b, respectively. In FIG. 1, the start code 115 is determined as [0x 00 00 01], the ID 111b of the track header identifier 111a as [0x 00], the ID 112b of the sample description identifier 112a as [0x 01], the ID 113b of the config information identifier 113a as [0x 02], and the ID 114b of the text frame identifier 114a as [0x 03]. However, in the present invention, the start code and each of the IDs are not limited to those described above.
   Furthermore, the identifiers 111a, 112a, 113a and 114a are added to the track header 111, the sample description 112, the config information 113 and the text frame 114, respectively.
(3)
   The specific contents of the sample description 112, the config information 113 and the text frame 114 are described with reference to FIG. 2.
   A value of [1] of the index 1141a included in the text frame 114 shown in FIG. 2(a) specifies the sample entry 1121, which should be referenced when reproducing the text sample 1142.
   The sample entry 1121 shown in FIG. 2(b) includes, for example, the presence or absence and the direction of scrolling (displayFlags), horizontal and vertical justifications within a display area (Horizontal justification, Vertical justification), a background color specified with an RGB value and a transparency (bgColor), a display area (TextBox), a font name (fontTable, font-ID), a font size (fontSize), a style such as Bold, Italic or Underline (faceStyle) and a font color specified with an RGB value and a transparency (fontColor). It should be noted that data (startChar, EndChar) specifying the range in which this format is applied always assume a value of [0] to indicate that this format is applied to the entire range of the text 1142a included in the text sample 1142 to which the format specified by the sample entry 1121 is applied. The values of the sample entry 1121 shown in FIG. 2(b) specify the background color as while, the font color as black and the style as Normal in the default format of the text 1142a.
   A value of [4500] of the duration 1141b represents the reproduction time period of the text sample 1142. The time scale of this value is specified by the track header 111 (see FIG. 1). Specifically, the track header 111 stores the resolution within one second as a time scale; for example, when the time scale value stored in the track header 111 is [1000], the resolution is 1/1000 second. Therefore, the reproduction time period in terms of seconds of the text sample 1142 is a value obtained by dividing the value of the duration 1141b by the time scale value stored in the track header 111; for example, when the time scale value is [1000], a value of [4500] of the duration 1141b means that the text sample 1142 is reproduced for 4.5 seconds. The following description is based on that the time scale value is set to [1000].
   The data lengths of the index 1141a and the duration 1141b can be specified by the config information 113 shown in FIG. 2(c). The config information 113 is a one byte data, and constituted by a 4-bit reserved area 1131a, a 2-bit index size indicator 1131b and a 2-bit duration size indicator 1131c. That is, the data lengths of the index 1141a and the duration 1141b are specified as one to 4 bytes by the 2-bit index size indicator 1131b and the 2-bit duration size indicator 1131c. For example, when the value of the index size indicator 1131b is [00] and the value of the duration size indicator 1131c is [01], the data lengths of the index 1141a and the duration 1141b of FIG. 2(a) are specified as one byte and 2 bytes, respectively.
   The text length 1142b in FIG. 2 (a) stores the data length of the text 1142a. In this embodiment, the data length of the text length 1142b is 2 bytes, and the data length of the text 1142a is therefore limited to the maximum of 65535 bytes; however, the data length of the text length 1142b may be varied as necessary.
   The modifier 1142c includes, for example, the data length of the modifier 1142c (modifierSize), specification of an optional format of the text 1142a (modifierType, entryCount), specification of the range of the text 1142a in which the optional format is applied (startChar, EndChar), a font name (font-ID), a font size (fontSize), a style such as Bold, Italic or Underline (faceStyle) and a font color specified with an RGB value and a transparency (fontColor). This specification of an optional format is applied preferentially over the format of the sample entry 1121 referenced with the index 1141a. The values shown in FIG. 2(a) mean that the fifth through eighth characters in the text 1142a are specified as [Bold].
   FIG. 2(d) shows how the text frame 114 is reproduced. The fifth through eighth characters (fine) of the text content (It's fine today.) shown by the text 1142a are reproduced in bold. Additionally, the reproduction time period is 4500 [msec].
(4)
   It was explained that the payload portion 11 of the PES packet 1 shown in FIG. 1 includes all of the track header 111, the sample description 112, the config information 113, and the text frames 114, 114', ....
   However, not all of the PES packets to be transmitted need to include all the above-described information. The track header 111, the sample description 112 or the config information 113 may appear in a PES packet with their respective predetermined timings. Furthermore, when a portion of the information is not included, the reproducing end may carry out the reproduction using information received in a past PES packet, or a pre-set default value.
   Thus, the information necessary for text reproduction can be sent with a desired frequency, making it possible to reduce the amount of the information necessary for transmission of a text track.

### <Data transmission apparatus>

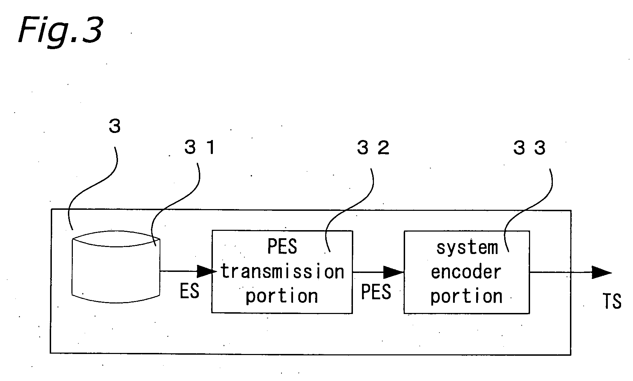

FIG. 3 shows a data transmission apparatus 3 used for transmitting MPEG-2 TS. The data transmission apparatus 3 includes a storage portion 31, a PES transmission portion 32 and a system encoder portion 33, and transmits stored media data as TS packets.

The storage portion 31 stores media data, for example, in an MP4 file format. The PES transmission portion 32 receives, from an MP4 file, an independent ES for each track such as video, audio or Timed Text. The PES transmission portion 32 separates the received Timed Text into the track header 3030, the sample description 3040, the sample table 3050 and the text sample 3060 (see FIG. 55) and buffers them. In addition, it generates the PES packet 1 shown in FIGS. 1 and 2 from the respective buffered information. Furthermore, the PTS of the PES header portion 10 of the PES packet 1 stores time information for reproducing the text frame 114, which is the first in the PES packet 1. The system encoder portion 33 multiplexes PES packets obtained for each track as TS packets and transmits them.

Additionally, since the feature of the present invention lies mainly in the PES transmission portion 32, the format of the data transmission apparatus is not limited to the data transmission apparatus 3. For example, it may include the storage portion 31 or the system encoder portion 33 as a separate entity outside, or may additionally perform modulation and transmission channel coding to the data transmitted as TS packets and then to transmit them as broadcast waves.

Furthermore, the media data included in the storage portion 31 is not limited to an MP4 file format, and does not need to have the same data structure as Timed Text. For example, it may contain the same information as that included in Timed Text, and may be stored in a data structure that is more suitable for streaming transmission.

### <Data transmission method>

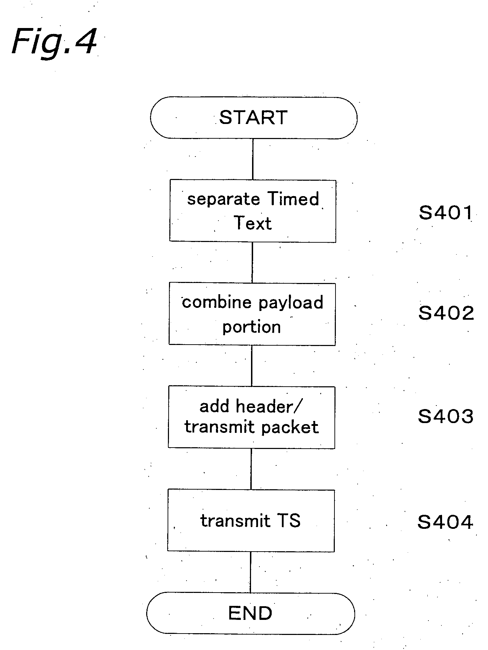

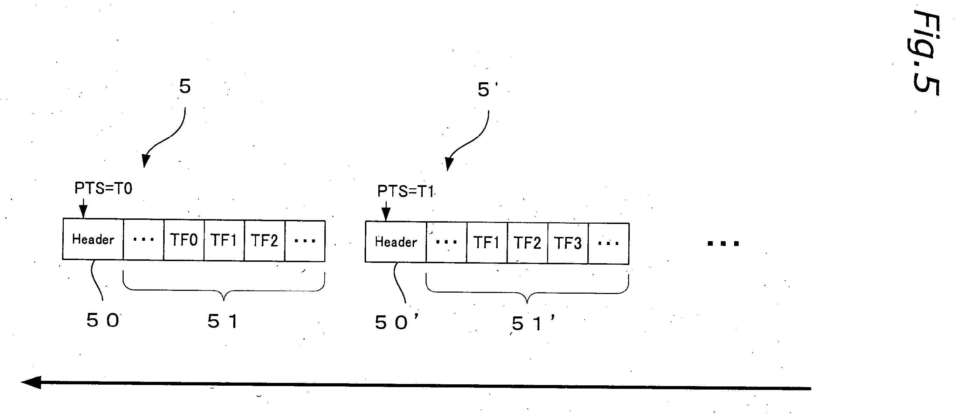

(1)
   A data transmission method in the data transmission apparatus 3 used for transmitting MPEG-2 TS is described with reference to FIG. 4.
   Of the independent ESs for each track such as video or audio in an MP4 file format or Timed Text, that of Timed Text is separated into the track header 3030, the sample description 3040, the sample table 3050 and the text sample 3060 (see FIG. 55) and buffered (step S401). Based on the respective buffered information, the payload portion 11 of the PES packet 1 shown in FIGS. 1 and 2 is synthesized (step S402). Additionally, the PES header portion 10 is added in which time information for reproducing the text frame 114, which is stored first in the payload portion 11, is stored as a PTS, and the PES packet 1 is transmitted (step S403). Furthermore, the obtained PES packet 1 is transmitted as a TS (step S404).
(2)
   When transmitting PES packets, it is possible to transmit the same text frame in different PES packets for plurality of times: This is described with reference to FIG. 5.
   PES packets 5 and 5' shown in FIG. 5 have the same data structure as the PES packet 1 shown in FIG. 1. The PES packet 5' is transmitted next to the PES packet 5. The payload portion 51 of the PES packet 5 has text frames (TF0, TF1, TF2, ...) having the same data structure as the text frame 114 shown in FIG. 2(a). In addition, the PES packet 5 stores, as a PTS value, the reproduction time T0 of TF0, which is the first text frame placed in the payload portion 51, in a PES header portion 50. The payload portion 51' of the PES packet 5' has text frames (TF1, TF2, TF3, ...) having the same data structure as the text frame 114 shown in FIG. 2(a). In addition, the PES packet 5' stores, as a PTS value, the reproduction time T1 of TF1, which is the first text frame placed in the payload portion 51', in a PES header portion 50'.
   In this way, by transmitting a plurality of text frames in a single PES packet, and redundantly transmitting the same text frames with different PES packets, it is possible to improve error tolerance at the time of transmission.
(3).
   Furthermore, at the time of transmitting PES packets, when a fixed transmission channel bandwidth is secured in advance for a text track, the data lengths of PES packets or the number of PES packets to be transmitted is determined such that the fixed transmission channel bandwidth is fully utilized. For example, when a transmission channel bandwidth of 16 kbps is assigned for a text track, 2000 bytes of PES packets can be generated in one second. Thus, text frames that can be contained in 2000 bytes of PES packets are packed and transmitted.
   In this way, it is possible to transmit redundant text frames by fully utilizing the transmission channel bandwidth, making it possible to realize transmission with improved error tolerance.

### <Data receiving apparatus>

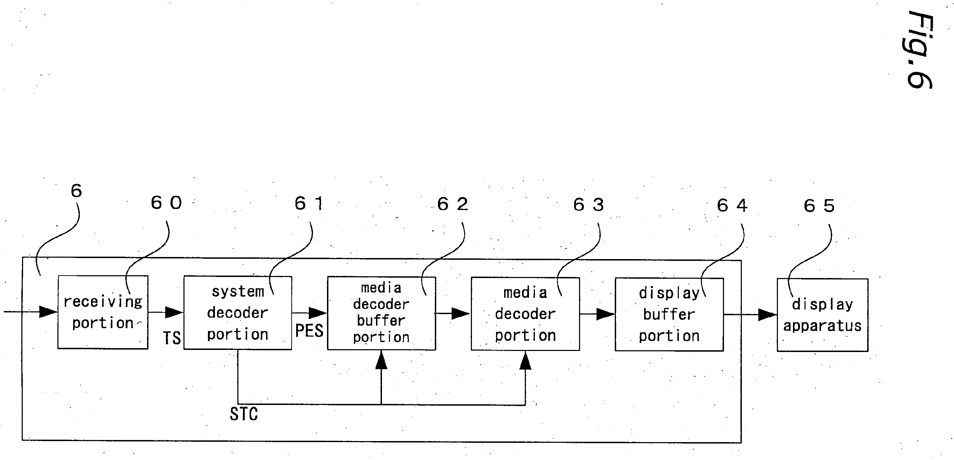

FIG. 6 shows a data receiving apparatus 6 used for transmitting MPEG-2 TS. The data receiving apparatus 6 includes a receiving portion 60, a system decoder portion 61, a media decoder buffer portion 62, a media decoder portion 63 and a display buffer portion 64, and reproduces a text track from a TS received from broadcast waves or the like. The data receiving apparatus 6 is an apparatus that is contained in or externally connected to, for example, a television, a computer, a car navigation system or the like.

The receiving portion 60 receives broadcast waves or the like and demodulates the TS. The system decoder portion 61 separates PES packets for each track such as video, audio or text from the demodulated TS. Furthermore, it reproduces an STC (System Time Clock), which is the standard time for synchronous reproduction between tracks, from the TS packets. Of the separated PES packets, the media decoder buffer portion 62 fetches the PTS relating to reproduction of the text track from the PES header portion 10 of the PES packet 1. Furthermore, it references the STC reproduced by the system decoder portion 61, and transmits the payload portion 11 of the PES packet 1 having a PTS corresponding to the STC. The media decoder portion 63 analyzes the obtained payload portion 11, and decodes the text track based on the information stored in the track header 111, the sample description 112 and the config information 113, and the STC, the duration 1141b and the modifier 1141c. The display buffer portion 64 stores the decoded text track, and lets the decoded text track be reproduced synchronously with other media such video and audio in accordance with the display rate of a display apparatus 65.

Additionally; since the feature of the present invention lies in the media decoder portion 63, the format of the data receiving apparatus is not limited to the data receiving apparatus 6. For example, it may integrally include the display apparatus 65.

### <Data receiving method>

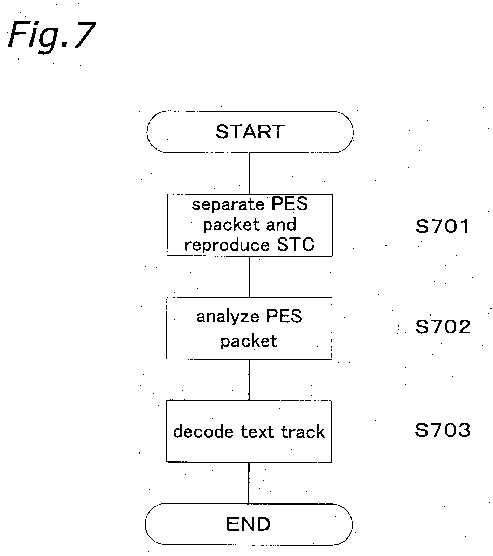

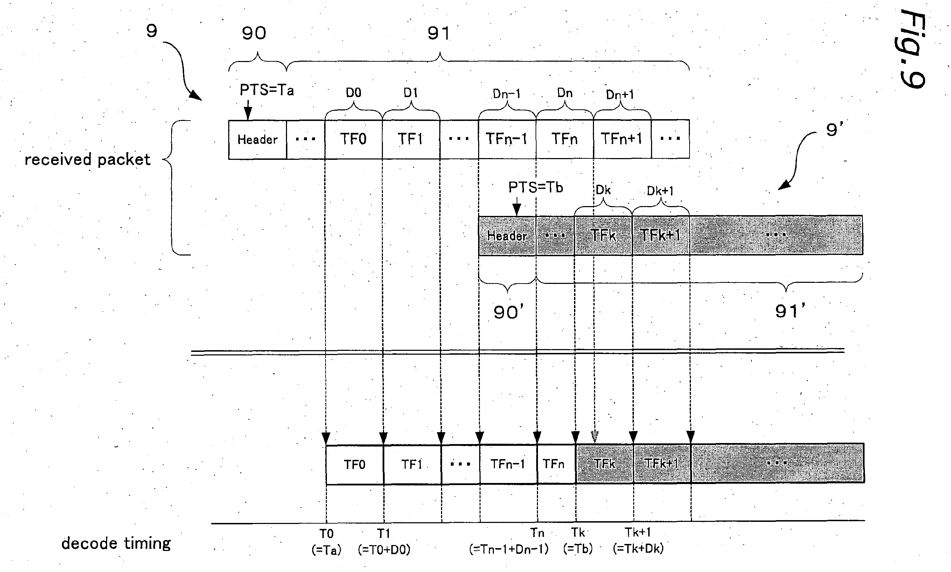

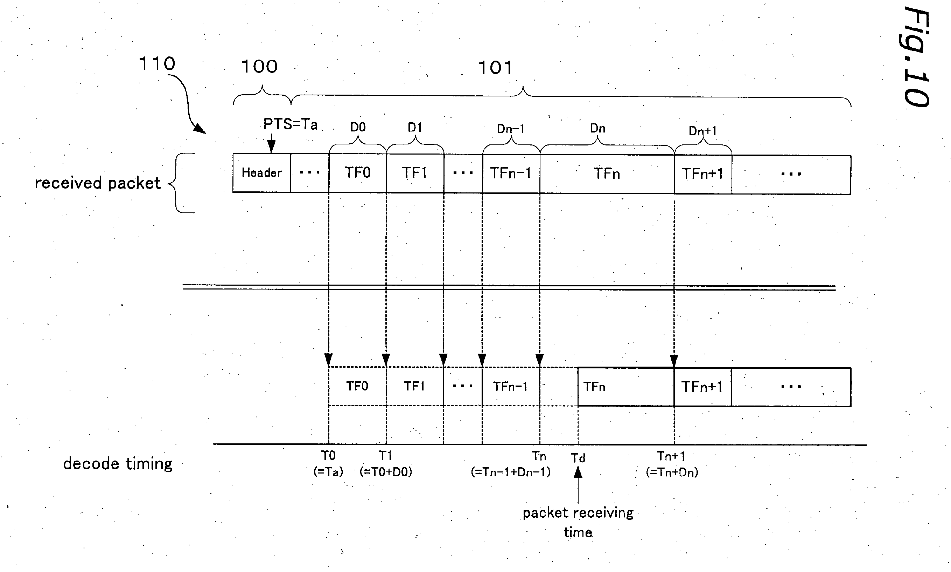

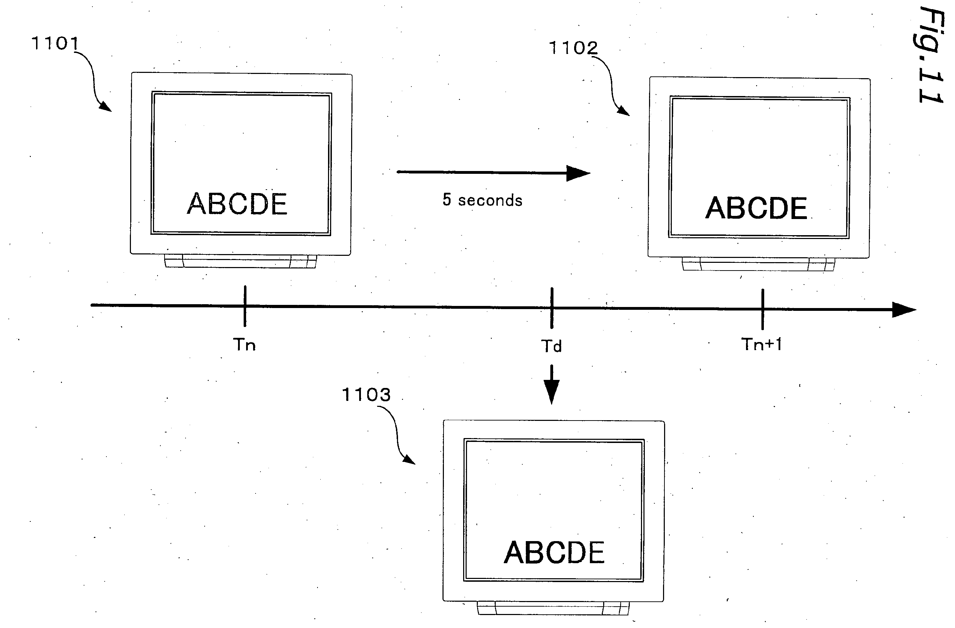

(1)
   A data receiving method in the data receiving apparatus 6 used for transmitting MPEG-2 TS is described with reference to FIG. 7.
   From a received TS, PES packets are separated for each track such as video, audio or text. Furthermore, an STC (System Time Clock), which is the standard time for synchronous reproduction between tracks, is reproduced from the TS (step S701). Of the separated PES packets, the PTS relating to reproduction of the text track is obtained from the PES header portion 10 of the PES packet 1. Furthermore, from the reproduced STC, the payload portion 11 of the PES packet 1 having a PTS corresponding to the STC is analyzed (step S702). The text track is decoded based on the information stored in the track header 111, the sample description 112 and the config information 113 that have been identified by the analysis of the payload portion 11, and the STC, the duration 1141b and the modifier 1141c (step S703).
(2)

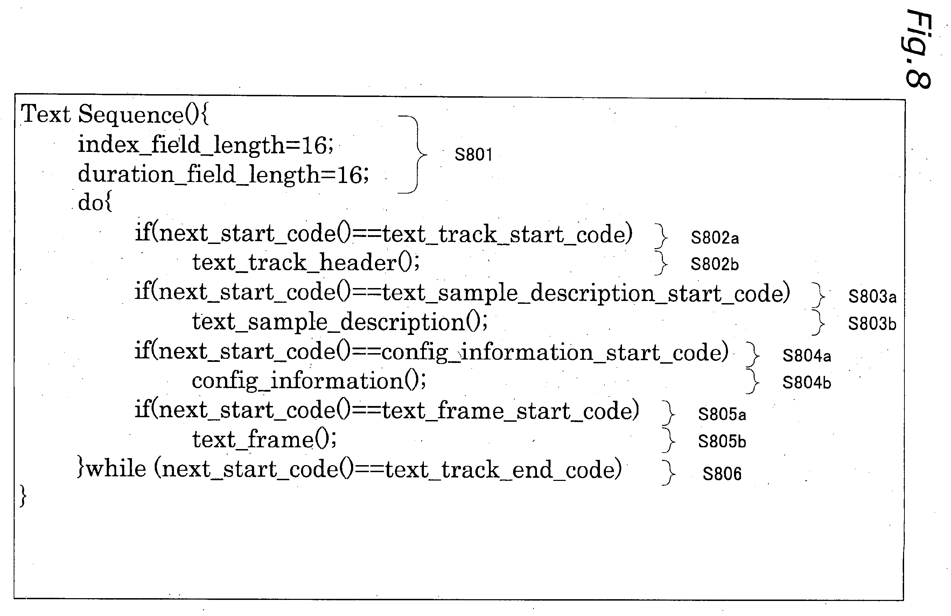

   FIG. 8 shows a syntax defined as a text track sequence for analyzing the payload portion 11 in the data receiving apparatus 6.
   When analyzing the payload portion 11 of the PES packet 1, the start code 115 is searched for. If the start code 115 is found, the ID added to that start code is analyzed (step S802a, step S803a, step S804a and step S805a). By the analysis of the ID, the track header 111, the sample description 112, the config information 113 and the text frame 114 are identified, and each of the information is processed (step S802b, step S803b, step S804b and step S805b).
   Furthermore, if the received PES packet 1 does not contain the config information 113, default values are used for the data lengths of the index 1141a and the duration 1141b (step S801).
   This sequence is continued until the completion of the text track. For example, the completion of the text track is identified with an identifier or the like that is made up of the start code 115 added at the end of the text track and an ID (e.g., [0x 04]) indicating the completion of the text track (step S806).
(3)
   In the data receiving apparatus 6, the payload portion 11 of the PES packet 1 is analyzed with the above-described text track sequence. Further, the rules for determining the text frame to be decoded out of the plurality of text frames 114, 114', ... included in the payload portion 11 are described with reference to FIGS. 9 and 10.
(3-1)
   First, a case is described where the reproduction times of text frames included in a plurality of PES packets are overlapping.
   PES packets 9 and 9' shown in FIG. 9 have the same data structure as the PES packet 1 shown in FIG. 1.
   The PES packet 9' is transmitted next to the PES packet 9. The payload portion 91 of the PES packet 9 has text frames (TF0, TF1, ..., TFn-1, TFn, TFn+1, ...) having the same data structure as the text frame 114 shown in FIG. 2(a). In addition, the respective durations are set to D0, D1, ..., Dn-1, Dn, Dn+1, .... Furthermore, the PES packet 9 has a PES header portion 90 having, as a PTS value, the reproduction time Ta of TF0, which is the first text frame placed in the payload portion 91.
   The payload portion 91' of the PES packet 9' has text frames (TFk, TFk+1, ...) having the same data structure as the text frame 114 shown in FIG. 2(a). In addition, the respective durations are set to Dk, Dk+1, .... Furthermore, the PES packet 9' has a PES header portion 90' having, as a PTS value, the reproduction time Tb of TFk, which is the first text frame placed in the payload portion 91'.
   Further, it is taken that the reproduction time Tb of TFk satisfies Tn < Tb < Tn+1. Here, Tn and Tn+1 are the reproduction times of the text frames TFn and TFn+1, and Tn = Tn-1 + Dn-1, Tn+1 = Tn + Dn.
   At this time, in this relationship between the PES packet 9 and the PES packet 9', the text frames that should be decoded are the text frames that should be reproduced before the time Tb in the PES packet 9 and the text frames included in the PES packet 9'.
   That is, the text frames (TFk, TFk+1, ...) included in the PES packet 9' start to be reproduced at the time Tb, regardless of the state of the text frame TFn being reproduced in the PES packet 9.
   This will be described more specifically. For example, it is assumed that the PES packet 9 includes three text frames, and the duration values are specified such that the text frames start to be reproduced 0, 20 and 30 seconds later, respectively, with respect to the PTS value of the PES packet 9. On the other hand, it is taken that the PES packet 9' includes three text frames, and the PTS value and the duration values are specified such that the text frames start to be reproduced 26, 38, 52 seconds later, respectively, with respect to the PTS value of the PES packet 9. When receiving the PES packet 9 and the PES packet 9', the reproducing end reproduces the text frames 0, 20, 26, 38 and 52 seconds later, respectively, with respect to the PTS value of the PES packet 9.
   Thus, it is possible to reproduce a plurality of text frames that have been sent in advance, after updating them to the latest information, making it possible to reproduce text, for example, in emergency situations.
(3-2)
   Next, a case is described where the time at which a PES packet is received has passed the time indicated by the PTS of the PES packet.
   The PES packet 110 shown in FIG. 10 has the same data structure as the PES packet 1 shown in FIG. 1.
   The payload portion 101 of the PES packet 110 has text frames (TF0, TF1, ..., TFn-1, TFn, TFn+1, ...) having the same data structure as the text frame 114 shown in FIG. 2(a). In addition, the respective durations are set to D0, D1, ..., Dn-1, Dn, Dn+1, .... Furthermore, the PES packet 110 has a PES header portion 100 having, as a PTS value, the reproduction time Ta of TF0, which is the first text frame placed in the payload portion 101.
   Here, the receiving time of the PES packet 110 is taken as Td. It is taken that the time Td satisfies Ta < Tn < Td < Tn+1, and the receiving time has already passed the reproduction time Ta of TF0. Here, Tn and Tn+1 are the reproduction times of the text frames TFn and TFn+1, and Tn = Tn-1 + Dn-1, Tn+1 = Tn + Dn.
   At this time, of the text frames (TF0, TF1, ..., TFn-1, TFn, TFn+1, ...) in the PES packet 110, the text frames to be decoded are text frames that should be reproduced after the time Td in the PES packet 110.
   That is, the reproduction is started from the text frame TFn at the time Td, and the text frame TFn is reproduced only for [Tn+1 - Td], until the time Tn+1.
   Furthermore, when the text frame TFn includes processing that involves a temporal variation, for example, when it is reproduced in a format such as scrolling or karaoke, the reproduction is started from a state that should be reproduced at the time Td.
   This will be described specifically with reference to FIG. 11. Let us assume that the optional format of the text frame TFn is set to karaoke by a modifier, and the five characters "ABCDE" are changed in color in five seconds from the time Tn at one character per second. It is taken that a reproducing state 1101 is a state that should be reproduced at the time Tn, and a reproducing state 1102 is a state that should be reproduced five seconds after the time Tn.
   Let us assume that, at this time, the PES packet 110 including the text frame TFn is received at the time Td, when three seconds have passed after the Tn. At this time, the reproduction is started at the time Td from a reproducing state 1103 in which three characters have changed in color.

### <Effect of first embodiment>

### (Data structure of PES packet)

With the data structure of the PES packet 1 shown in this embodiment, it is not necessary to transmit in advance information relating to reproduction of the entire Timed Text, such as the header portion 3010 of Timed Text (see FIG. 55). Accordingly, the waiting period from the beginning of receipt to the beginning of reproduction of a text track is reduced.

Furthermore, information such as the track header 111, the sample description 112 and the config information 113, which are the information necessary for reproduction of a text track, are repeatedly transmitted, making it possible to randomly access and to reproduce a text track.

From the foregoing, it can be said that the data structure of the PES packet 1 is suitable for streaming transmission.

### (Data transmission apparatus and data transmission method)

In the data transmission apparatus 3 and the data transmission method shown in this embodiment, a plurality of text frames are transmitted in a single PES packet, and the same text frames are redundantly transmitted with different PES packets. Accordingly, it is possible to improve error tolerance at the time of transmission, making it possible to realize a suitable transmission in streaming transmission, in which a request to retransmit data cannot be made.

### (Data receiving apparatus and data receiving method)

In the data receiving apparatus 6 and the data receiving method shown in this embodiment, it is possible to reproduce a plurality of text frames that have been sent in advance, after updating them to the latest information. Thus, it is possible to reproduce text, for example, in emergency situations.

Furthermore, when the receiving time of a PES packet has passed the PTS of the PES packet, the PES packet is discarded if it is video or audio, and the reproduction is resumed after waiting for the receipt of the next PES packet. In the case of reproduction of a text track, however, it is possible to minimize the loss of information by allowing the reproduction to be performed even from a text frame in the middle of the PES packet. Furthermore, even when reproduction of a text track is performed in a format involving a temporal variation, such as karaoke or scrolling, it is possible to reduce the sense of incongruity resulting from a discrepancy between a text track and video or audio.

### <Modified examples of first embodiment>

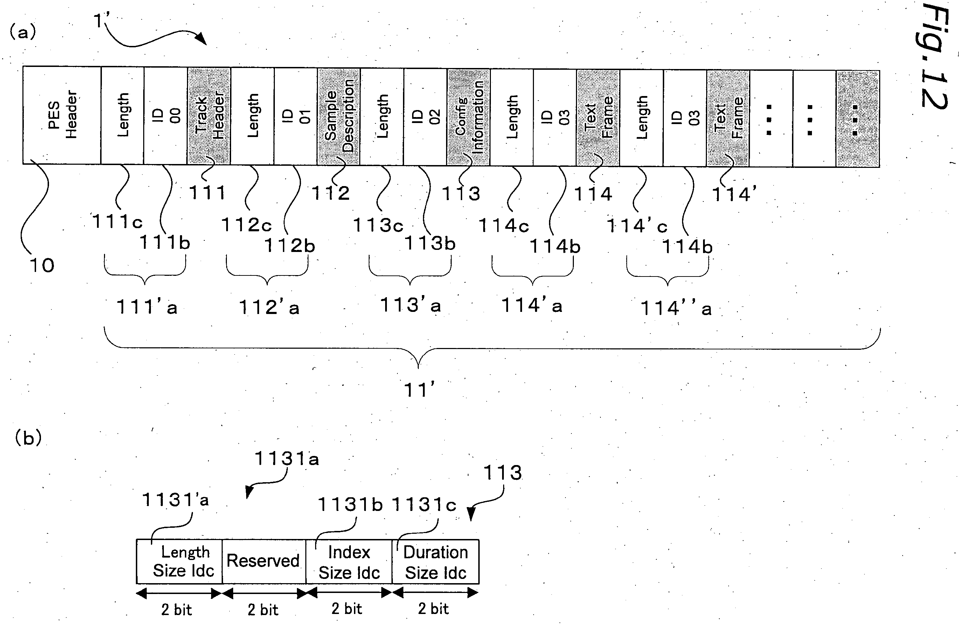

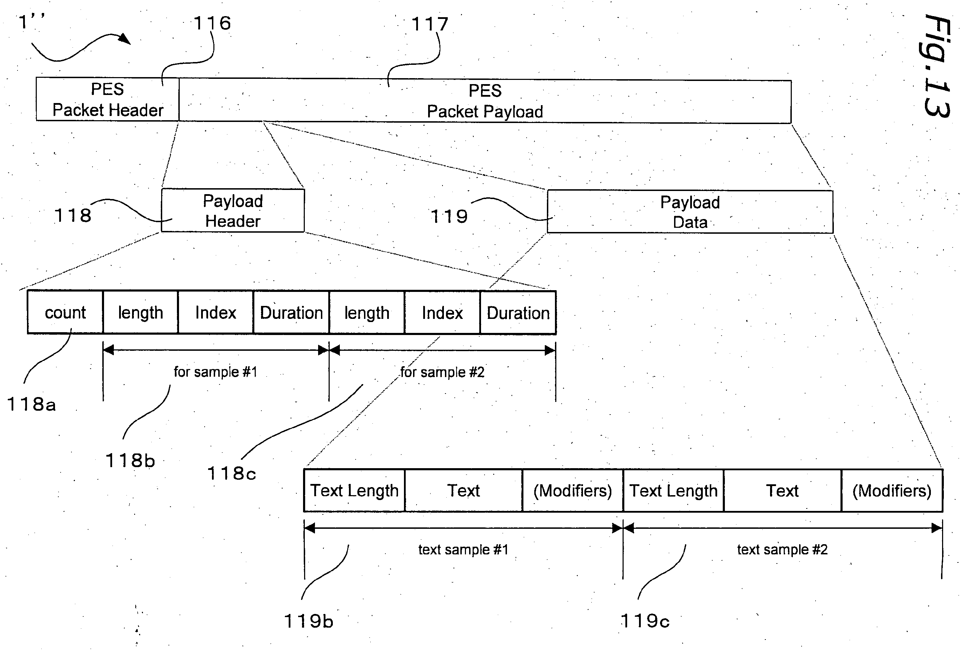

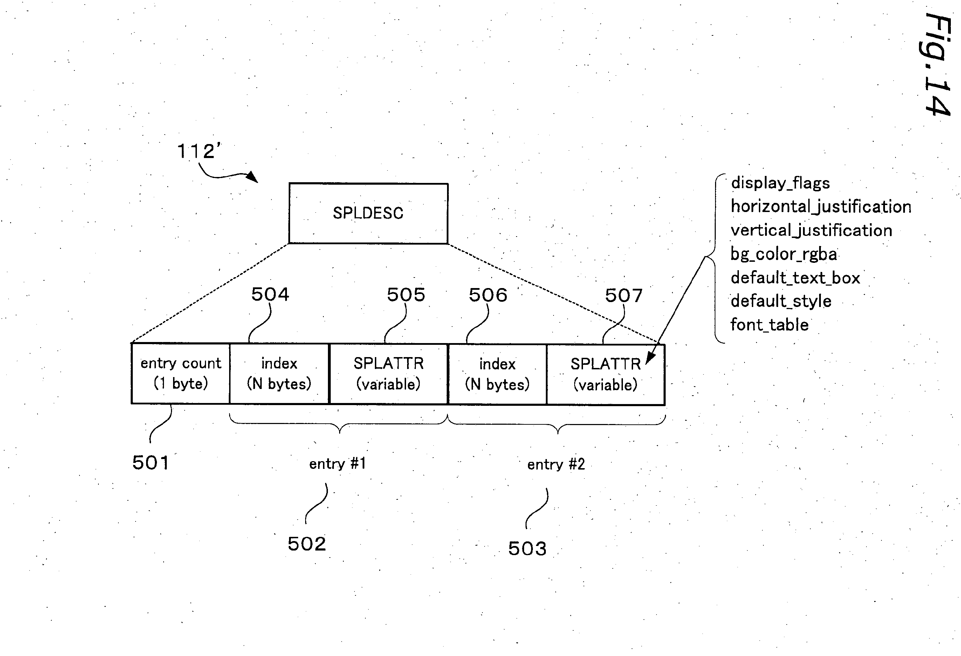

(1)
   In the first embodiment, it was explained that the track header identifier 111a, the sample description identifier 112a, the config information identifier 113a and the text frame identifier 114a are made up of the start code 115 common to each of them and their respective unique IDs 111b, 112b, 113b and 114b.
   Here, as shown in FIG. 12(a), their respective identifiers may be made up of length portions (111c, 112c, 113c, 114c, 114'c, ...) storing the respective data lengths of the track header 111, the sample description 112, the config information 113 and the text frames 114, 114', ..., and the unique IDs (111b, 112b, 113b and 114b).
   When each of the length portions is, for example, 2 bytes, the data lengths of the track header 111, the sample description 112, the config information 113 and the text frame 114, 114', ... are limited to the maximum of 65535 bytes. However, it can be said that this is generally a sufficient data length for transmission of text data. In addition, when the length portion is 2 bytes, it can be said that the bit efficiency is superior compared with when using the 3 byte start code 115. Furthermore, in the case of using the start code 115 for identification, it is necessary to put limitations such that no pseudo-start code appears in the bit string, since any pseudo-start code (a bit string that is not the start code, but is identical to the start code) must not be generated in the bit string. However, such an inconvenience can be prevented in the case of using the length portion for the identifier.
   At this time, it is possible to specify the data lengths of the length portions by the config information 113. Specifically, it is possible to use 2 bits of the reserved area 1131a of the config information 113 as a length size indicator 1131'a, and to specify the data lengths of the length portions as one to 4 bytes (see FIG. 12(b)).
(2)
   In the first embodiment, it was explained that the PES packet 1 has the text frame 114 having the structure shown in FIG. 2. Here, the PES packet may also be a PES packet 1" shown in FIG. 13.
   The PES packet 1" shown in FIG. 13 includes a PES header portion 116 and a payload portion 117 that are defined in the MPEG-2 system. The payload portion 117 is made up of a payload header portion 118 and a payload data portion 119. The payload header portion 118 has a count portion 118a and sample header portions 118b and 118c. The payload data portion 119 has text samples 119b and 119c.
   The count portion 118a indicates the number of the text samples included in the PES packet 1". FIG. 13 shows a case where the value of the count portion 118a is [2], and the PES packet 1" contains two text samples 119b and 119c.
   The sample header portion 118b has a length portion, an index and a duration. The length portion stores the data length of the sample header portion 118b. The index and the duration are the same as the index 1141a and the duration 1141b shown in FIG. 2. The sample header portion 118c has the same structure as the sample header portion 118b.
   The text samples 119b and 119c have the same structure as the text sample 1142 shown in FIG. 2, and therefore the description has been omitted.
   Here, the sample header portions 118b and 118c are associated, in the order of their placement, with the text samples 119b and 119c. That is, the sample header portion 118b, which is placed first in the payload header portion 118, indicates the index and the duration of the text sample 119b, which is placed first in the payload data portion 119. Additionally, the text samples 119b and 119c are placed in the payload data portion 119 in the order in which they are reproduced, and stores the reproduction time of the first text sample 119b in the PTS of the PES header portion 116, similarly to the PES packet 1.
   The PES packet 1" has a structure in which the plurality of text samples 119b and 119c are connected, and therefore has a packet structure suitable for streaming transmission, while having a structure closer to a structure at the time of recording an MP4 file, compared with the PES packet 1:
   In addition, the PES packet 1" may further include the track header 111, the sample description 112 and the config information 113 (see FIG. 1). In this case, it is required to add identifiers respectively identifying these.
   The PES packet may have a structure in which a sample header portion is placed for each text sample. Describing specifically with reference to FIG. 13, this is a structure in which data is stored in the order: the sample header portion 118b, the text sample 119b, the sample header portion 118c and the text sample 119c. In this case, the text sample 118b (118c) is associated with the sample header portion 119b (119c), which is placed immediately preceding the text sample 118b (118c). Additionally, in this case, the length portion stores the data length of a text sample placed immediately preceding the length portion. Furthermore, the count portion 118a may not be provided in this case.
(3)
   In the case of using the start code 115 for a portion of the identifier, appearance of a pseudo-start code in the bit string can be prevented as follows. For example, as shown in FIG. 1, it is taken that the start code 115 is determined as [0x 00 00 01], the ID 111b of the track header identifier 111a as [0x 00], the ID112b of the sample description identifier 112a as [0x 01], the ID 113b of the config information identifier 113a as [0x 02] and the ID 114b of the text frame identifier 114a as [0x 03]. At this time, when two bytes of zeros appear in the bit string of the track header 111, the sample description 112, the config information 113 or the text frame 114, a predetermined one byte code (e.g., [0x 05]) may be inserted after the two bytes of zeros before transmission. In this case, the reproducing end can restore the original data by unconditionally deleting one byte after two successive bytes of zeros in the bit string of the track header 111 or the like.
   Specifically, when a bit string [00 00 EA 65 ...] appears in the bit string of the track header 111 or the like, the transmitting end inserts a predetermined one byte code [0x 05], and transmits the bit string [00 00 05 EA 65 ...]. In the case of receiving a bit string [00 00 05 EA 65 ...], the receiving end restores the bit string [00 00 EA 65 ...] by unconditionally deleting the one byte after the two successive bytes of zeros.
(4)
   The duration value included in a text frame is allowed to represent [infinity].
   That is, in the case of receiving a text frame having a duration value representing [infinity], the reproducing end continuously reproduces the text frame having a duration value representing [infinity] until it receives a text frame having a reproduction start time exceeding than the reproduction start time of the above-described text frame.
   Furthermore, the text frame having a duration value representing [infinity] is placed last in a PES packet.
   Specifically, [0] is stored as a duration value for representing a duration value [infinity].
(5)
   The sample description 112 described with reference to FIG. 2(b) may have the data structure shown in FIG. 14. The sample description 112' shown in FIG. 14 is characterized by having an index for each sample entry. Specifically, in a data receiving apparatus or the like, the sample entry applied to a text frame is determined by associating the index (e.g., the index 1141a of FIG. 2) included in the text frame with an index included in the sample description 112'. In the following, FIG. 14 is described in further detail.
   The sample description 112' shown in FIG. 14 has an entry count 501 and a plurality of sample entries. In the case shown in FIG. 14, it has two sample entries, namely, a sample entry 502 and a sample entry 503.
   The entry count 501 indicates the number of the sample entries included in the sample description 112', for example, with a one-byte data length. Since it has two sample entries in FIG. 14, a value of [2] is stored. The sample entry 502 has an index 504 and a sample attribute 505. The sample entry 503 also has the same structure, and has an index 506 and a sample attribute 507. In the following, additional description is given using the sample entry 502.
   The index 504 indicates the index value of the sample entry 502 with a pre-set data length (N byte). The sample attribute 505 stores the same format information as the sample entry 1121 and the like described in FIG. 2(b). The data length of the sample attribute 505 is variable.
   With the sample description 112', it is possible to determine the format that should be applied to a text frame by associating an index included in the sample description 112' with the index included in the text frame.

### Second embodiment

### <Data structure>

In the first embodiment, all the information relating to reproduction of a text track is transmitted in the PES packet 1 (in-band transmission). On the other hand, it is also possible to transmit information such as the track header and the sample description as table information called PSI (Program Specific Information) defined in MPEG-2 TS (out-of-band transmission).

Since a plurality of programs such as video and audio can be multiplexed and transmitted with a TS, it is necessary to send information such as with which other program in the stream should be reproduced together with some program included in the stream. In MPEG-2 TS, these information is transmitted with a data structure called a section, instead of with PES, which transmits video, audio and the like. In PSI, tables such as PAT (Program Association Table) and PMT (Program Map Table) are defined. Furthermore, in a PSI section, it is possible to transmit a variety of descriptive information using a structure called a descriptor.

In this PMT or in a PSI private section defined in the application system, information such as the track header or the sample description can be transmitted as a descriptor using a carousel method.

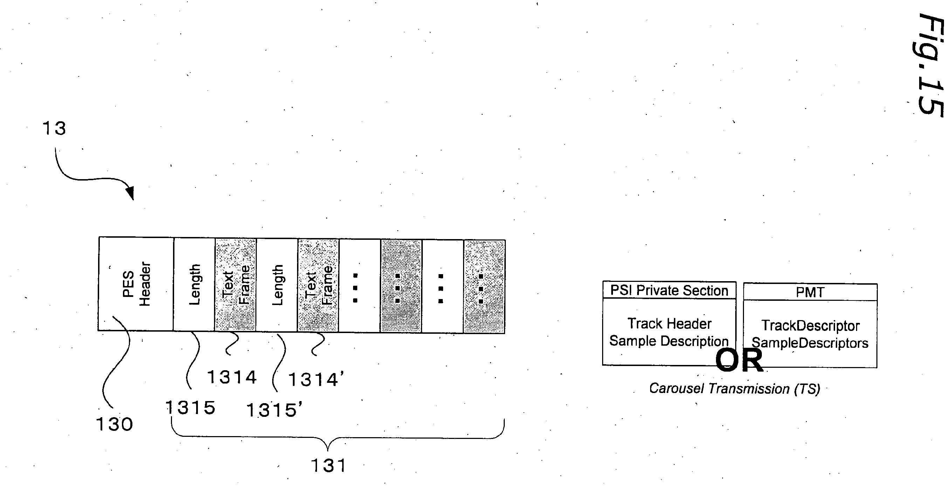

In this case, of the information relating to reproduction of a text track, only the text frame may be transmitted in a PES packet. FIG. 15 shows a PES packet 13 that is transmitted in the second embodiment.

The data structure of the PES packet 13 shown in FIG. 15 is made up of a PES header portion 130 and a payload portion 131 that are defined in MPEG-2 TS. The PES header portion 130 has a PTS (Presentation Time Stamp), which is information for synchronous reproduction between tracks such as video, audio or text. The payload portion 131 is constituted by text frames 1314, 1314', ... having the same structure as the text frame 114 defined in FIG. 2(a), and the respective data lengths 1315, 1315', ... of the text frames 1314, 1314', .....

It should be noted that a start code may be used in place of the data lengths 1315, 1315', ... to mark the boundaries between the text frames 1314, 1314', ....

The track header and the sample description that are transmitted in the PMT or the PSI private section have the same structures respectively as the track header 111 and the sample description 112 or 112', described in the first embodiment. In addition, the config information 113 may be transmitted as necessary.

Furthermore, the PES packet 13 shown in FIG. 15 may have the same structure as the PES packet 1" shown in FIG. 13 described as a inodified example of the first embodiment.

### <Data transmission apparatus>

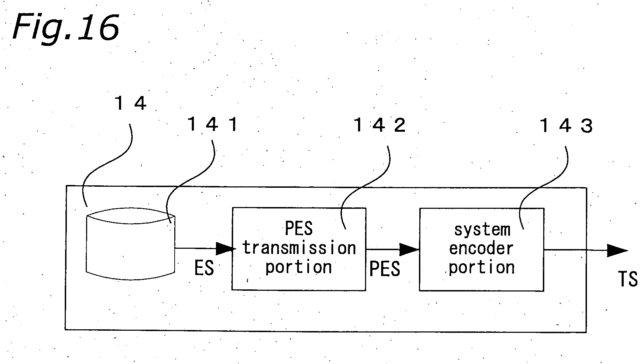

FIG. 16 shows a data transmission apparatus 14 used for transmitting MPEG-2 TS. The data transmission apparatus 14 includes a storage portion 141, a PES transmission portion 142 and a system encoder portion 143, and transmits stored media data as TS packets.

The storage portion 141 stores media data, for example, in an MP4 file format. The PES transmission portion 142 receives, from an MP4 file, an independent ES for each track such as video, audio or Timed Text. The PES transmission portion 142 separates the received Timed Text into the track header 3030, the sample description 3040, the sample table 3050 and the text sample 3060 (see FIG. 55) and buffers them. It generates the PES packet 13 shown in FIG. 15 from the respective buffered information. Furthermore, the PTS of the PES packet 13 stores time information for synchronously reproducing the text frame 1314, which is placed first in the PES packet 13, with other track such as video or audio. The system encoder portion 143 stores the track header 3030 and the sample description 3040 in the PMT or the PSI private section, multiplexes them as TS packets with the PES packet 13, and transmits them.

Further, at the time of data transmission, it is possible to use the data transmission methods described under (2) and (3) in <Data transmission method> in the first embodiment.

### <Data receiving apparatus>

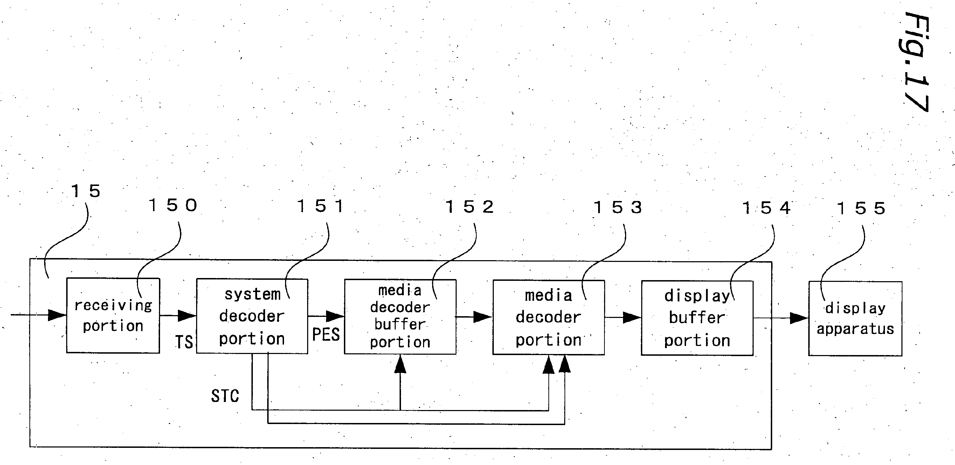

FIG. 17 shows a data receiving apparatus 15 used for transmitting MPEG-2 TS. The data receiving apparatus 15 includes a receiving portion 150, a system decoder portion 151, a media decoder buffer portion 152, a media decoder portion 153 and a display buffer portion 154, and reproduces a text track from a received TS. The data receiving apparatus 15 is contained in or externally connected to, for example, a television, a computer, a car navigation system or the like.

The receiving portion 150 receives broadcast waves or the like and demodulates the TS. From the demodulated TS, the system decoder portion 151 separates PES packets for each track such as video, audio or text. Furthermore, it reproduces from the TS packets an STC, which is the standard time for synchronous reproduction between media. Furthermore, it sets, in the media decoder portion 153, the track header 3030 and the sample description 3040 that are stored in the PMT or the PSI private section.

The media decoder buffer portion 152 fetches a PTS from the PES packet 13 relating to reproduction of the text track out of the separated PES packets. Furthermore, it references the STC reproduced by the system decoder portion 151, and transmits the payload portion 131 of the PES packet 13 having a PTS corresponding to the STC.

The media decoder portion 153 decodes the text track based on the obtained payload portion 131, the STC, and the track header 3030 and the sample description 3040 that have been set.

The display buffer portion 154 stores the decoded text track, and lets the decoded text track be reproduced synchronously with other media such as video and audio in accordance with a display rate of a display apparatus 155.

Further, at the time of data reception, it is also possible to use the data receiving methods described under (2) and (3) in <Data receiving method> in the first embodiment.

### <Effect of second embodiment>

The same effect as that of the first embodiment can be achieved.

In addition, information sets such as the track header and the sample description that are necessary for reproducing a text track are repeatedly transmitted using a carousel method, making it possible to successively reproduce the PES packet 13, while receiving it.

Furthermore, in the case of performing an in-band transmission as the above-described first embodiment, the track header, the sample description and the like are contained in the PES packet, and repeatedly appear, even when their contents have not changed. Therefore, at the time of reproduction, it is necessary to analyze them each time to check whether their contents have changed. On the other hand, in the case of performing an out-of-band transmission as the above-described second embodiment, it is necessary to repeatedly transmit a track header and the like in a PMT, but it is not necessary to analyze them each time to check whether their contents have changed, since the presence or absence of the change in the contents can be determined by the change in the version number present in the header portion of the PMT; therefore, it is possible to perform an efficient processing.

### <Modified examples of second embodiment>

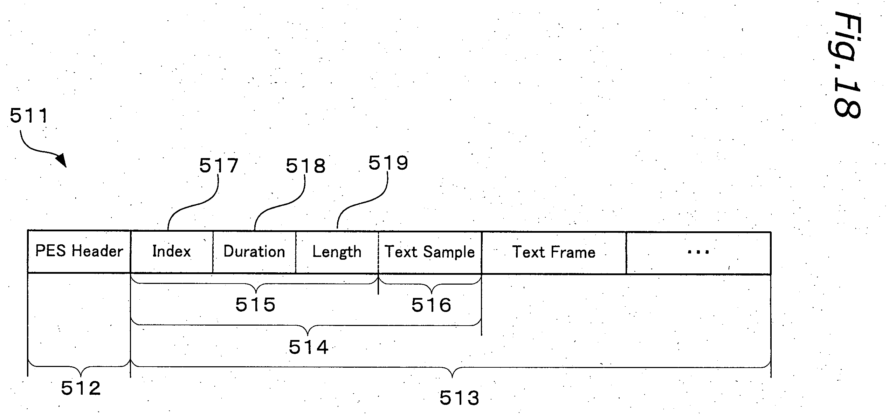

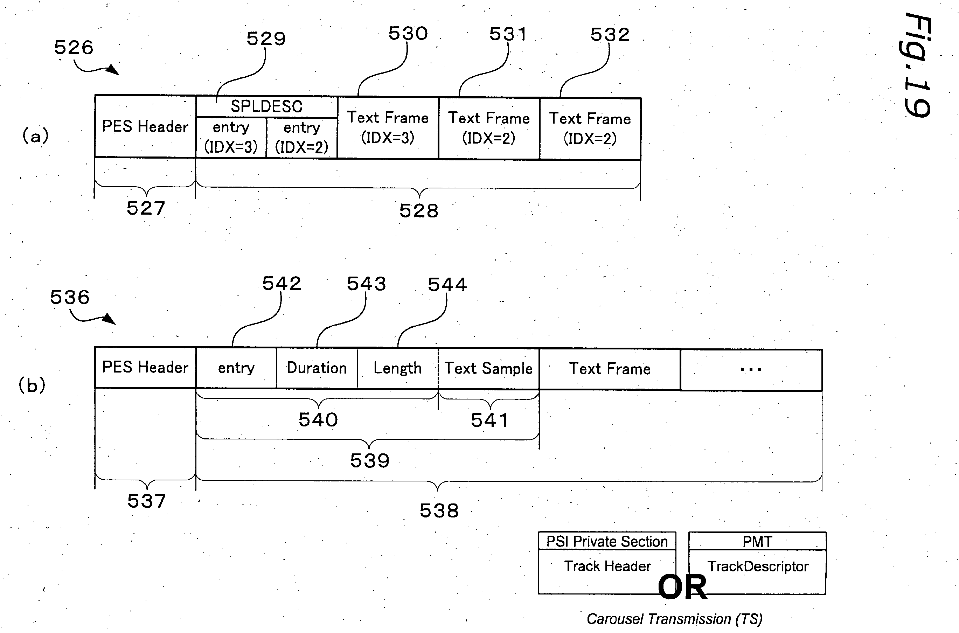

(1)
   In the PES packet 13 described with reference to FIG. 15, the data lengths 1315 and 1315' may be included as a portion of a segment text header (see FIG. 2(a)). FIG. 18 shows the structure of the PES packet in this case.
   The PES packet 511 shown in FIG. 18 is made up of a PES header portion 512 and a payload portion 513 that are defined in MPEG-2 TS. The PES header portion 512 has the same structure as the PES header portion 130 described with reference to FIG. 15. The payload portion 513 has a plurality of text frames. In the following, the structure of the text frame is described using a text frame 514, which is one of the text frames included in the payload portion 513.
   The text frame 514 is constituted by a segment text header 515 and a text sample 516. The segment text header 515 has an index 517, a duration 518 and a length 519. The index 517 is information for associating the text sample 516 with the sample entry (see FIG. 2(b) and FIG. 14) applied to the text sample 516. The duration 518 is reproduction time period information of the text sample 516. The length 519 stores the data length of the text sample 516. It should be noted that the index 517, the duration 518 and the length 519 in the segment text header 515 may be in any order. The text sample 516 has the same structure as the text sample 1142 shown in FIG. 2(a).
   The PES packet 511 stores a plurality of text frames having the above-described structure.
(2)
   In the above-described embodiment, a case was described with reference to FIG. 15 where the track header and the sample description are transmitted out-of-band. Here, the sample description may be transmitted in-band. The structure of the PES packet in this case is described with reference to FIG. 19.
<<2-1>>
   FIG. 19(a) shows the structure of a PES packet in which sample descriptions are placed together at the beginning of the payload portion.
   A PES packet 526 is made up of a PES header portion 527 and a payload portion 528 that are defined in MPEG-2 TS. The PES header portion 527 has the same structure as the PES header portion 130 described with reference to FIG. 15. The payload portion 528 has a sample description 529 and a plurality of text frames. In FIG. 19(a), three text frames 530 to 532 are stored.
   The sample description 529 has the same structure as the sample description 112' described with reference to FIG. 14, and includes sample entries referenced by the text frames 530 to 532 included in the payload portion 528. More specifically, it includes sample entries having index values corresponding to the index values included in the text frames 530 to 532. That is, when the index values included in the text frames 530 to 532 are values of [3], [2] and [2], respectively, the sample description 529 includes a sample entry having an index value of [3] and two sample entries having a value of [2].
   The structure of the text frames 530 to 532 is the same as that of the text frame 514 described with reference to FIG. 18.
   It should be noted that the sample description 529 may have the same structure as the sample description 112 shown in FIG. 2(b), that is, a structure that does no include any index. In this case, a sample entry stored in the [N]th place in the sample description 112 is applied to a text frame having an index value of [N].
   Furthermore, the text frames 530 to 532 may have the same structure as the text frame 114 shown in FIG. 2(a), that is, a structure that does not include any length. In this case, an identifier may be used to clarify the boundaries between the text frames 530 to 532.
<<2-2>>
   FIG. 19(b) shows the structure of a PES packet in which a sample entry is placed for each text frame.
   A PES packet 536 is made up of a PES header portion 537 and a payload portion 538 that are defined in MPEG-2 TS. The PES header portion 537 has the same structure as the PES header portion 130 described with reference to FIG. 15. The payload portion 538 has a plurality of text frames. In the following, the structure of the text frame is described using a text frame 539, which is one of the text frames included in the payload portion 538.
   The text frame 539 is constituted by a segment text header 540 and a text sample 541. The segment text header 540 has a sample entry 542, a duration 543 and a length 544. The sample entry 542 is format information applied to the text sample 541, and has the same structure as the sample entry 1121 shown in FIG. 2(b) or the sample attribute 505 shown in FIG. 14. The duration 543 is reproduction time period information of the text sample 541. The length 544 stores the data length of the text sample 541. It should be noted that the sample entry 542, the duration 543 and the length 544 in the segment text header 540 may be in any order. The text sample 541 has the same structure as the text sample 1142 shown in FIG. 2(a).
   The PES packet 536 stores a plurality of text frames having the above-described structure.
<<2-3>>
   The effect of transmitting a sample description in-band is described.
   In the case of transmitting a sample description in-band using a section format, a packet in a section format and a PES packet differ in the level of frequency of transmission, and therefore there is the possibility that the sample description may not be transmitted with the timing necessary for reproducing a text sample transmitted in the PES packet. That is, the sample description necessary for reproduction of a text sample is not transmitted even though the text sample is received, and therefore the start of reproduction of the text sample may be delayed until the transmission of the sample description has been completed. Particularly, for example, when the sample description has a large amount of information, it needs to be separated into a plurality of packets before being transmitted; accordingly, it takes more time before the transmission is started.
   On the other hand, in the case of transmitting a sample description in-band using the PES packets shown in FIG. 19, it is possible to reproduce a text sample by transmitting the sample description that includes the sample entries required by the text samples stored in the PES packet. That is, it is not necessary to transmit in advance all of the sample entries for which there is the possibility of being referenced by all of the text samples included in an MP4 file (see FIG. 55), making it possible to shorten the time before reproduction of a text sample is started.
   Furthermore, even when the content of the sample description has been changed, the changed content can be readily added and transmitted, and therefore it can be said that the structure is suitable for streaming transmission, in which data is transmitted in real time while being generated.
(3)
   In the above-described embodiment, it was explained that the config information 113 may be transmitted out-of-band as necessary.
   Here, the config information may not be transmitted either out-of-band or in-band. In this case, the data length of the segment text header may be set to a given default value.

### Third embodiment

In a third embodiment, the streaming transmission of a text track using RTP (Real time Transport Protocol), RTSP (Real Time Streaming Protocol) and SDP (Session Description Protocol) is described. RTP is a packet format for multimedia streams that is defined in IETF (Internet Engineering Task Force) RFC1889. RTSP and SDP are control protocols for multimedia streaming that are defined in RFC2326 and RFC2327, respectively.

### <<RTP/RTSP sequence>>

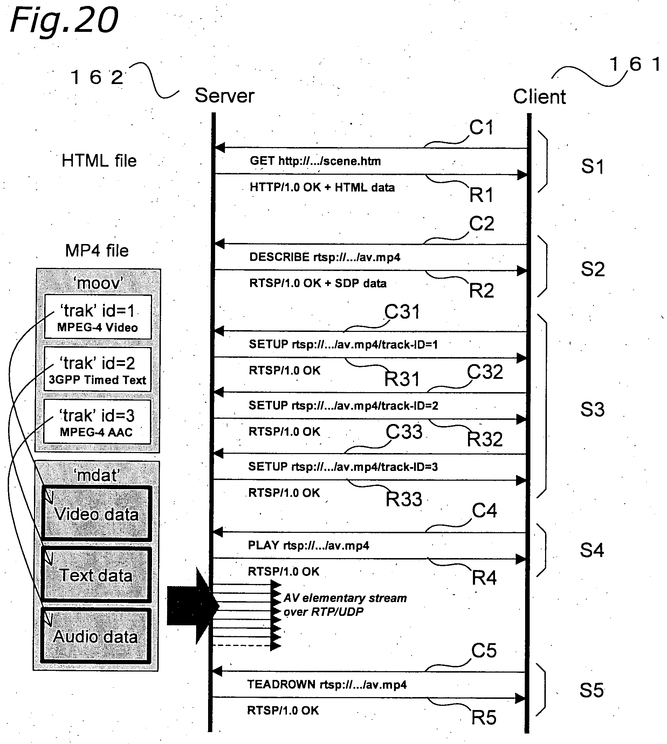

First, a general processing flow when a client 161 obtains media data in an MP4 file format from a server 162 over the Internet is shown in FIG. 20.

First, when the user requests an HTML (Hyper Text Markup Language) file containing a link to an MP4 file through a web browser provided in the client 161 such as a personal computer, the client 161 issues a command C1 requesting the HTML file. The server 162 issues to the client 161 a response R1 (HTTP/1.0 OK) indicating that the command C1 has been accepted, and transmits HTML data (session S1).

Next, when the user clicks the link to the MP4 file, the client 161 issues a command C2 requesting the detailed information relating to the MP4 file. The server 162 issues to the client 161 a response R2 (RTSP/1.0 OK) indicating that the command C2 has been accepted, and SDP data containing this detailed information is supplied to the client 161 (session S2).

Next, based on the descriptions in the received SDP, the client 161 issues commands C31 to C33 requesting preparation for providing the respective tracks in the MP4 file. Upon completion of the preparation for providing the respective media data, the server 162 issues responses R31 to R33 (RTSP/1.0 OK) indicating that the above-described commands C31 to C33 have been accepted (session S3).

Next, the client 161 issues a command C4 requesting provision of all the media data. The server 162 issues a response R4 (RTSP/1.0 OK) indicating that the command C4 has been accepted (session S4). Then, the media data in an MP4 file format is transmitted as an RTP packet.

To terminate the session, the client 161 issues a command C5 requesting termination of the session. The server 162 issues a response R5 (RTSP/1.0 OK) indicating that the command C5 has been accepted, and the session is terminated (session S5).

Here, the above-described sessions S2 to S5 are performed with RTSP.

### <Data structure of RTP packet>

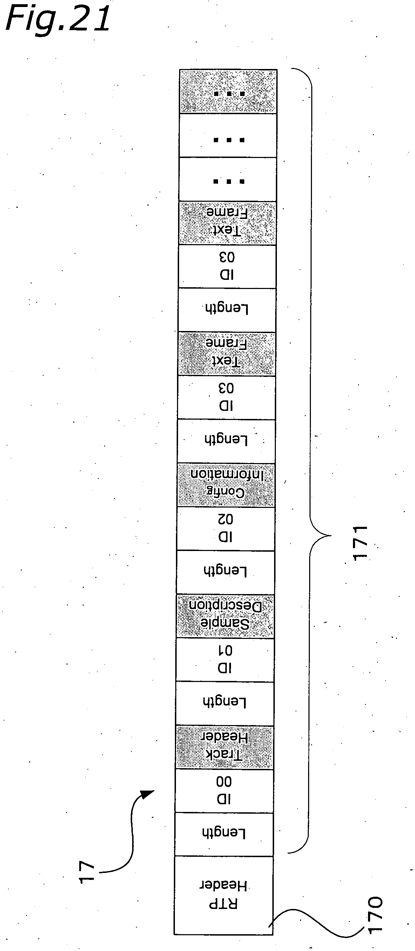

(1)
   The media data in an MP4 file format included in the server 162 is transmitted as an RTP packet.
   Here, in order to use Timed Text included in an MP4 file using streaming transmission, an RTP packet has the data structure shown in FIG. 21. The data structure of the RTP packet 17 shown in FIG. 21 is the same as that of the PES packet 1' shown in FIG. 12, and therefore the detailed description has been omitted.
   The RTP packet 17 includes time information called a time stamp in an RTP header portion 170. Similarly to the PTS of the PES packet 1' shown in FIG. 12, this time stamp includes the reproduction time of the text frame that is placed first in the payload portion 171.
(2)
   In contrast to transmitting all the information relating to reproduction of the text track, such as the track header, the sample description, the config information and the text frame, with the RTP packet 17 (in-band transmission), it is possible to transmit a portion of the information as the SDP supplied in the session S2 of FIG. 20 (out-of-band transmission).
   At the time of obtaining the media data from the server 162 using RTP, the session S2 is executed between the server and the client. Therefore, it is possible to use the information such as the track header and the sample description by transmitting them as the SDP in advance.

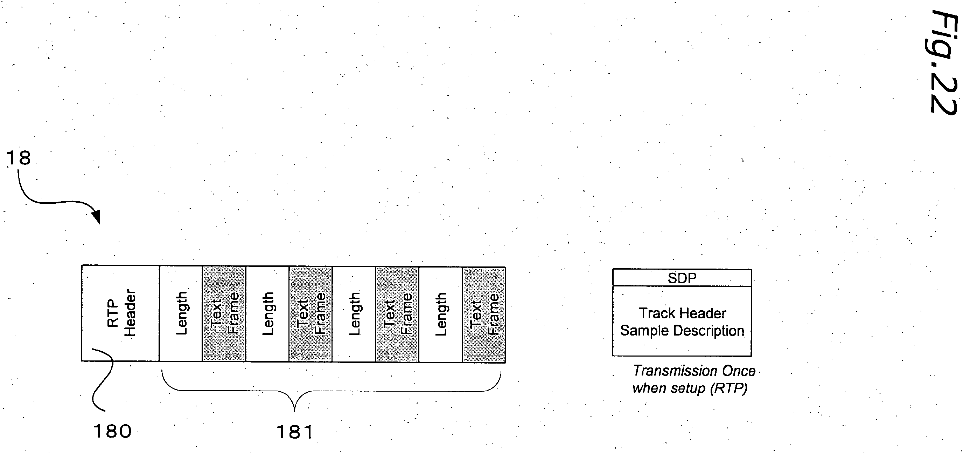

   FIG. 22 shows the data structure of an RTP packet 18 that is transmitted out-of-band using RTP. The data structure of the RTP packet 18 shown in FIG. 22 is substantially the same as that of the PES packet 13 shown in FIG. 15, and therefore the detailed description has been omitted.
   The RTP packet 18 has time information called a time stamp in an RTP header portion 180. Similarly to the PTS of the PES packet 13 shown in FIG. 15, this time stamp includes the reproduction time of a text frame that is placed first in a payload portion 181.
   The track header and the sample description that are transmitted in the SDP have the same structures as the track header 111 and the sample description 112, respectively, that have been described in the first embodiment. In addition, the config information 113 may be transmitted as necessary.
(3)
   Furthermore, the RTP packets 17 and 18 shown in FIGS. 21 and 22 may have a structure in which the RTP header portions 170 and 180 are added to a payload portion having the same structure as the payload portion 117 of the PES packet 1" shown in FIG. 13 described as a modified example of the first embodiment.

### <Data transmission apparatus>

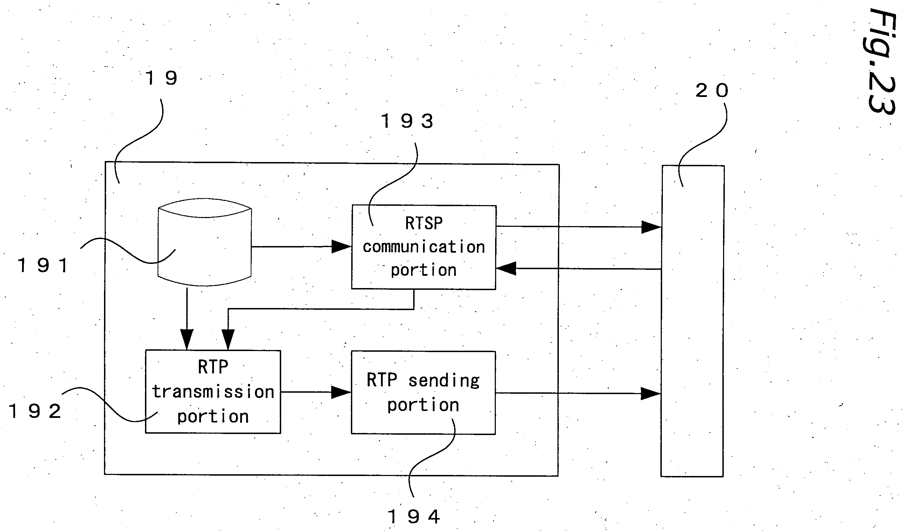

FIG. 23 shows a data transmission apparatus 19 used for transmitting a text track using RTP. The data transmission apparatus 19 includes a storage portion 191, an RTP transmission portion 192, an RTSP communication portion 193 and an RTP sending portion 194. The data transmission apparatus 19 is an apparatus that is mounted in, for example, the server 162 that transmits stored media data as the RTP packet 17 or 18 in response to a request from the client 161. The following description is focused on the portion relating to transmission of a text track.
(1)
   First, a case is described where information relating to reproduction of a text track is transmitted in-band with an RTP packet.
   The storage portion 191 stores media data, for example, in an MP4 file format. Further, the storage portion 191 includes the detailed information relating to the stored file.
   The RTP transmission portion 192 receives from an MP4 file an independent ES for each truck such as video, audio or Timed Text. The RTP transmission portion 192 separates the received Timed Text into the track header 3030, the sample description 3040, the sample table 3050 and the text sample 3060 (see FIG. 55) and buffers them. In addition, it generates the RTP packet 17 shown in FIG. 21 from the respective buffered information. Furthermore, the time stamp of the RTP packet 17 stores time information for reproducing a text frame that is placed first in the RTP packet 17.
   The RTSP communication portion 193 performs the sessions S2 to S5 (see FIG. 20) with the client 161 requesting provision of the media data, obtains the information relating to a file stored in the storage portion 191 and transmits it. Furthermore, it receives a request for reproduction of the media data from the client 161,and lets the RTP transmission portion 192 generate the RTP packet 17.
   The RTP sending portion 194 sends the RTP packet 17 to the client 161.
(2)
   A case is described where information relating to reproduction of a text track is transmitted out-of-band with SDP, using a data transmission apparatus having the same structure as the data transmission apparatus 19. In the following, the operations of the RTP transmission portion and the RTSP communication portion that differ in their operations are described.
   In the data transmission apparatus used for out-of-band transmission, the RTP transmission portion separates Timed Text received from the storage portion into the track header 3030, the sample description 3040, the sample table 3050 and the text sample 3060 (see FIG. 55) and buffers them. In addition, it generates the RTP packet 18 shown in FIG. 22 from the respective buffered information. Furthermore, the time stamp of the RTP packet 18 stores time information for reproducing a text frame that is placed first in the RTP packet 18.
   The RTSP communication portion performs the sessions S2 to S5 (see FIG. 20) with the client 161 requesting provision of the media data. In the session S2, it sends the information relating to a file stored in the storage portion, the track header 3030 and the sample description 3060 with SDP. Further, it lets the RTP transmission portion generate the RTP packet 18 in response to a request for reproduction of the media data from the client 161.
   The RTP sending portion transmits the RTP packet 18 to the client 161.
(3)
   At the time of data transmission, it is also possible to generate the RTP packet, using the data transmission methods described under (2) and (3) in <Data transmission method> in the first embodiment.

### <Data receiving apparatus>

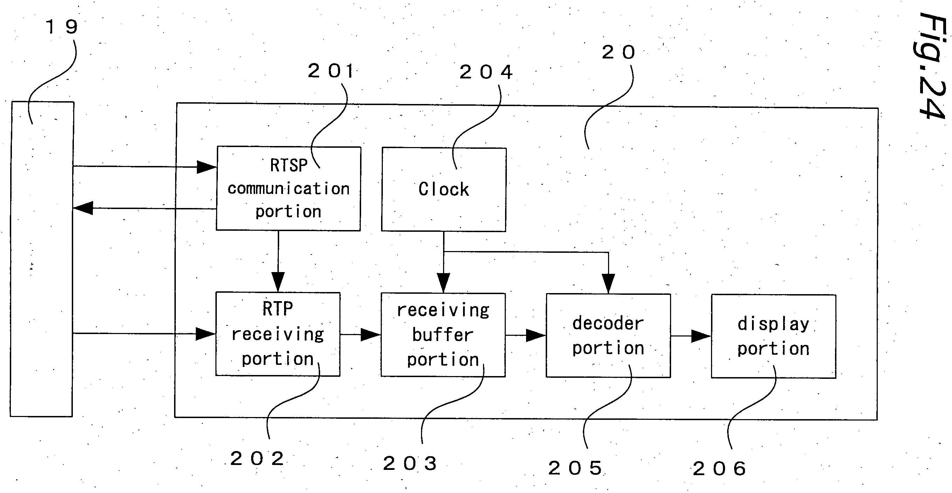

FIG. 24 shows a data receiving apparatus 20 used for receiving a text track transmitted with RTP. The data receiving apparatus 20 includes an RTSP communication portion 201, an RTP receiving portion 202, a receiving buffer portion 203, a clock 204, a decoder portion 205 and a display portion 206, and is an apparatus such as a computer, a mobile phone or a PDA (personal digital assistant) that reproduces a text track based on the RTP packet 17 or 18 received from the data transmission apparatus 19. The following description is focused on the portion relating to reproduction of a text track.
(1)
   First, a case is described where all the information relating to reproduction of a text track is transmitted in-band with an RTP packet. Here, whether the information relating to reproduction of the text track is transmitted in-band with an RTP packet or transmitted out-of-band with SDP is indicated in the SDP transmitted in the session S2 (see FIG. 20).
   The RTSP communication portion 201 performs the sessions S2 to S5 (see FIG. 20) with the server 162 that provides media data. Furthermore, it performs receiving control for letting the RTP receiving portion 202 receive the RTP packet 17, based on these sessions S2 to S5.
   The RTP receiving portion 202 receives the RTP packet 17 sent from the server 162 based on the above-described receiving control, and temporarily stores it in the receiving buffer portion 203.
   The receiving buffer portion 203 obtains a time stamp from the stored RTP packet 17, and transmits the RTP packet 17 to the decoder portion 205 based on the count of the clock 204 and the time stamp.
   The decoder portion 205 decodes the text track based on the obtained RTP packet 17 and the count of the clock 204.
   The decoded text track is displayed with the display portion 206.
(2)
   A case is described where information relating to reproduction of a text track transmitted out-of-band with SDP is received using a data receiving apparatus having the same structure as the data receiving apparatus 20.
   The RTSP communication portion obtains the track header 3030 and the sample description 3040 (see FIG. 55) of Timed Text with SDP in the session S2 with the server 162. The obtained track header 3030 and sample description 3040 are set in the decoder portion 205.
   The RTP receiving portion receives the RTP packet 18 sent from the server 162, and temporarily stores it in the receiving buffer portion.
   The receiving buffer portion obtains a time stamp from the stored RTP packet 18, and transmits the RTP packet 18 to the decoder portion based on the count of the clock and the time stamp.
   The decoder portion decodes the text track based on the obtained RTP packet 18, the count of the clock and the information set by the RTSP communication portion.
(3)
   It should be noted that at the time of data reception, it is also possible to reproduce the text track from the RTP packet, using the data receiving methods described under (2) and (3) in <Data receiving method> in the first embodiment.
   Additionally, since the feature of the present invention lies in the decoder portion 205, the format of the data receiving apparatus is not limited to the data receiving apparatus 20. For example, it may include the display portion 206 as a separate entity outside.

### Effect of third embodiment

The same effects as those of the first embodiment and the second embodiment can be achieved.

Furthermore, in a transmission using SDP, a portion of the information relating to reproduction of a text track is sent utilizing that the sessions S2 to S5 with RTSP are executed before the transmission of the text track. This makes it possible to reliably transmit the important information relating to reproduction of the text track. Furthermore, in this case, it is sufficient to send the track header or the sample description only once in the session S2, so that the text frame can be transmitted fully utilizing the transmission channel bandwidth.

### <Modified examples of third embodiment>

(1)
   The payload portion 181 of the RTP packet 18 shown in FIG. 22 may have the same structure as the payload portion 513 shown in FIG. 18. It also may have the same structure as the payload portion 528 or 538 shown in FIG. 19.
(2)
   In the above-described embodiment, it was explained that the config information 113 may be transmitted out-of-band as necessary.
   Here, the config information may not be transmitted either out-of-band or in-band. In this case, the data length of the segment text header may be set to a given default value.

### Appendices relating to first to third embodiments

Content of appendices

### Appendix 1

A transmission data structure of data for text transmission for transferring and successively reproducing data for text reproduction relating to reproduction of text data,
wherein the data for text reproduction contains a plurality of instances of fragment text data obtained by fragmenting the text data, and text header data containing information for reproducing the fragment text data, and
wherein the data for text transmission contains a fragment text data identifier added to the fragment text data, and a text header data identifier added to the text header data.

### Appendix 2

The transmission data structure of data for text transmission according to appendix 1,
wherein the text header data contains full text header data relating to reproduction of the text data as a whole, and fragment text header data relating to individual reproduction of the fragment text data,
wherein, in the data for text transmission, the fragment text header data is placed for each instance of the fragment text data, and
wherein the text header data identifier contains a full text header data identifier added to the full text header data.

### Appendix 3

The transmission data structure of data for text transmission according to appendix 2,
wherein the full text header data includes a plurality of format information of the fragment text data, and
wherein the fragment text header data contains an index indicating a relation between the fragment text data and the format information.

### Appendix 4

The transmission data structure of data for text transmission according to appendix 2 or 3,
wherein the fragment text header data contains reproduction time period information of the fragment text data.

### Appendix 5

A transmission data structure of data for text transmission for transferring and successively reproducing data for text reproduction relating to reproduction of text data,
wherein the data for text reproduction contains a plurality of instances of fragment text data obtained by fragmenting the text data, and text header data containing information for reproducing the fragment text data,
wherein the text header data contains full text header data relating to reproduction of the text data as a whole; and fragment text header data relating to individual reproduction of the fragment text data, and
wherein the full text header data contains data length configuration information for configuring a data length of the fragment text header data.

### Appendix 6

The transmission data structure of data for text transmission according to appendix 5,
wherein the full text header data further contains a plurality of format information of the fragment text data, and
wherein the fragment text header data contains an index indicating a relation between the fragment text data and the format information.

### Appendix 7

The transmission data structure of data for text transmission according to appendix 5 or 6,
wherein the fragment text header data contains reproduction time period information of the fragment text data.

### Appendix 8

A transmission data structure of data for text transmission for transferring and successively reproducing data for text reproduction relating to reproduction of text data,
wherein the data for text reproduction contains a plurality of instances of fragment text data obtained by fragmenting the text data, and text header data containing reproduction start information for staring to reproduce the fragment text data,
wherein the data for text transmission comprises a plurality of packets, and
wherein each of the packets contains the reproduction start information of the text header data.

### Appendix 9

The transmission data structure of data for text transmission according to appendix 8,
wherein the text header data contains full text header data relating to reproduction of the text data as a whole, and fragment text header data relating to individual reproduction of the fragment text data, and
wherein each instance of the full text header data contains the reproduction start information.

### Appendix 10

The transmission data structure of data for text transmission according to appendix 9,
wherein the full text header data further contains a plurality of format information of the fragment text data, and
wherein the fragment text header data contains an index indicating a relation between the fragment text data and the format information.

### Appendix 11

The transmission data structure of data for text transmission according to appendix 9 or 10,
wherein the full text header data further contains data length configuration information for configuring a data length of the fragment text header data.

### Appendix 12

A data transmission method for data for text transmission for transferring and successively reproducing data for text reproduction relating to reproduction of text data,
wherein the data for text reproduction contains a plurality of instances of fragment text data obtained by fragmenting the text data, and text header data containing reproduction start information for staring to reproduce the fragment text data, the method comprising:
a generating step of generating payload portions of the data for text transmission based on the data for text reproduction; and
an adding step of adding a header portion to each of the generated payload portions to produce a packet,
wherein each of the payload portions contains the reproduction start information of the text header data.

### Appendix 13

A data transmission apparatus for data for text transmission for transferring and successively reproducing data for text reproduction relating to reproduction of text data,
wherein the data for text reproduction contains a plurality of instances of fragment text data obtained by fragmenting the text data, and text header data containing reproduction start information for staring to reproduce the fragment text data, the apparatus comprising:
a generating means for generating payload portions of the data for text transmission based on the data for text reproduction; and
an adding means for adding a header portion to each of the generated payload portions to produce a packet;
wherein each of the payload portions contains the reproduction start information of the text header data.

### Appendix 14

A data transmission program for performing, with a computer, a data transmission method for data for text transmission for transferring and successively reproducing data for text reproduction relating to reproduction of text data,
wherein the data for text reproduction contains a plurality of instances of fragment text data obtained by fragmenting the text data, and text header data containing reproduction start information for staring to reproduce the fragment text data,
the data transmission program lets the computer perform the data transmission method for the data for text transmission comprising:
   a generating step of generating payload portions of the data for text transmission based on the data for text reproduction; and
   an adding step of adding a header portion to each of the generated payload portions to produce a packet,
   wherein each of the payload portions contains the reproduction start information of the text header data.

### Appendix 15

A data transmission method for data for text transmission for transferring and successively reproducing data for text reproduction relating to reproduction of text data,
wherein the data for text reproduction contains a plurality of instances of fragment text data obtained by fragmenting the text data, and text header data containing information for reproducing the fragment text data, the method comprising:
a generating step of generating payload portions based on the data for text reproduction; and
an adding step of adding a header portion to each of the generated payload portions to produce a packet,
wherein the data for text transmission comprises a plurality of the packets,
wherein the fragment text data are placed in each of the packets in an order in which they are displayed,
wherein the packet contains reproduction time information of each instance of the fragment text data, and
wherein a second packet contains fragment text data whose reproduction time information overlaps that of fragment text data of a first packet preceding the second packet.

### Appendix 16

A data transmission apparatus for data for text transmission for transferring and successively reproducing data for text reproduction relating to reproduction of text data,
wherein the data for text reproduction contains a plurality of instances of fragment text data obtained by fragmenting the text data, and text header data containing information for reproducing the fragment text data, the apparatus comprising:
a generating means for generating payload portions based on the data for text reproduction; and
an adding means for adding a header portion to each of the generated payload portions to produce a packet,
wherein the data for text transmission comprises a plurality of the packets,
wherein the fragment text data is placed in each of the packets in an order in which they are displayed,
wherein the packet contains reproduction time information of each instance of the fragment text data, and
wherein a second packet contains fragment text data whose reproduction time information overlaps that of fragment text data of a first packet preceding the second packet.

### Appendix 17

A data transmission program for performing, with a computer, a data transmission method for data for text transmission for transferring and successively reproducing data for text reproduction relating to reproduction of text data,
wherein the data for text reproduction contains a plurality of instances of fragment text data obtained by fragmenting the text data, and text header data containing information for reproducing the fragment text data,
wherein the data transmission method for the data for text transmission comprising:
a generating step of generating payload portions based on the data for text reproduction; and
an adding step of adding a header portion to each of the generated payload portions to produce a packet,
wherein the data for text transmission comprises a plurality of the packets,
wherein the fragment text data is placed in each of the packets in an order in which they are displayed,
wherein the packet contains reproduction time information of each instance of the fragment text data, and
wherein a second packet contains fragment text data whose reproduction time information overlaps that of fragment text data of a first packet preceding the second packet.

### Description of appendices

The transmission data structure according to appendix 1 is a transmission data structure of data for text transmission for transferring and successively reproducing data for text reproduction relating to reproduction of text data, wherein the data for text reproduction contains a plurality of instances of fragment text data obtained by fragmenting the text data, and text header data containing information for reproducing the fragment text data. Furthermore, the data for text transmission contains a fragment text data identifier added to the fragment text data, and a text header data identifier added to the text header data.

Here, the fragment text data identifier and the text header data identifier is, for example, an identifier made up of a start code and unique IDs for identifying the fragment text data and the text header data, or an identifier made up of the respective data lengths and the respective unique IDs of the fragment text data and the text header data.

In the data for text transmission, the fragment text data and the text header data can be identified by the fragment text data portion identifier and the text header data identifier. That is, the text header data containing information for reproducing the fragment text data can be identified at the reproducing end, either by transmitting it for each instance of the fragment text data or transmitting it periodically. This enables the reproducing end to successively reproduce the data for text reproduction relating to reproduction of the text data based on the fragment text data and the text header data, regardless of the amount of information of the data for text reproduction.

The transmission data structure of data for text transmission described in appendix 2 is the transmission data structure of data for text transmission according to appendix 1, wherein the text header data contains full text header data relating to reproduction of the text data as a whole, and fragment text header data relating to individual reproduction of the fragment text data. Additionally, in the data for text transmission, the fragment text header data is placed for each instance of the fragment text data. Furthermore, the text header data identifier contains a full text header data identifier added to the full text header data.

Here, the fragment text data portion identifier and the full text header data identifier is, for example, an identifier made up of a start code and unique IDs for identifying the fragment text data and the full text header data, or an identifier made up of the respective data lengths and the respective unique IDs of the fragment text data and the full text header data.

In the data for text transmission, the fragment text data and the full text header data can be identified by the fragment text data portion identifier and the full text header data identifier. That is, the full text header data can be transmitted with the necessary timing in the data for text transmission.

The transmission data structure of data for text transmission described in appendix 3 is the transmission data structure of data for text transmission according to appendix 2, wherein the full text header data includes a plurality of format information of the fragment text data. Additionally, the fragment text header data contains an index indicating a relation between the fragment text data and the format information.

Here, the format information is, for example, default format information of the fragment text data that is constituted by the presence or absence and the direction of scrolling, the reproduction position, the background cooler, the font formats (e.g., a font name, a size, a color, Bold, Underline and Italic) and the like of the fragment text data.

This eliminates the need to transmit the format information for each instance of the fragment text data. Accordingly, it is possible to reduce the amount of information of the data for text transmission.

The transmission data structure of data for text transmission described in appendix 4 is the transmission data structure of data for text transmission described according to appendix 2 or 3, wherein the fragment text header data contains reproduction time period information of the fragment text data.

The reproduction time period information is placed for each instance of the fragment text data. The reproducing end reproduces the fragment text data in accordance with this reproduction time period information.

The transmission data structure of data for text transmission described in appendix 5 is a transmission data structure of data for text transmission for transferring and successively reproducing data for text reproduction relating to reproduction of text data, wherein the data for text reproduction contains a plurality of instances of fragment text data obtained by fragmenting the text data, and text header data containing information for reproducing the fragment text data. Additionally, the text header data contains full text header data relating to reproduction of the text data as a whole, and fragment text header data relating to individual reproduction of the fragment text data. Furthermore, the full text header data contains data length configuration information for configuring a data length of the fragment text header data.

With the data length configuration information, it is possible to configure the data length of the fragment text header data relating to individual reproduction of the fragment text data, as necessary. That is, it is possible to configure the amount of information occupied by the fragment text header data in the data for text transmission to an amount that is necessary and sufficient. As a result, it is possible to reduce the amount of information required for individual reproduction of the fragment text data, thus reducing the load relating to the successive reproduction on the reproducing end.

The transmission data structure of data for text transmission described in appendix 6 is the transmission data structure of data for text transmission according to appendix 5, wherein the full text header data further contains a plurality of format information of the fragment text data. Additionally, the fragment text header data contains an index indicating a relation between the fragment text data and the format information.

Here, the format information is, for example, default format information of the fragment text data that is constituted by the presence or absence and the direction of scrolling, the reproduction position, the background cooler, the font formats (e.g., a font name, a size, a color, Bold, Underline and Italic) and the like of the fragment text data.

Additionally, the data length configuration information sets the data length of the index to a data length of, for example, 8, 16 , 24 or 32 bits.

This eliminates the need to transmit the format information for each instance of the fragment text data. As a result, it is possible to reduce the amount of information required for individual reproduction of the fragment text data, thus further reducing the load relating to the successive reproduction on the reproducing end.

The transmission data structure of data for text transmission described in appendix 7 is the transmission data structure of data for text transmission according to appendix 5 or 6, wherein the fragment text header data contains reproduction time period information of the fragment text data.

Additionally, the data length configuration information sets the data length of the reproduction time period information to a data length of, for example, 8, 16 , 24 or 32 bits.

The reproduction time period information is placed for each instance of the fragment text data. The reproducing end reproduces the fragment text data in accordance with this reproduction time period information.

The transmission data structure of data for text transmission described in appendix 8 is a transmission data structure of data for text transmission for transferring and successively reproducing data for text reproduction relating to reproduction of text data, the data for text reproduction contains a plurality of instances of fragment text data obtained by fragmenting the text data, and text header data containing reproduction start information for staring to reproduce the fragment text data. Additionally, the data for text-transmission is made up of a plurality of packets. Furthermore, each of the packets contains the reproduction start information of the text header data.

Here, the reproduction start information is information necessary to start reproducing the fragment text data that contains, for example, information such as the layout of the text data (the display area, the relative position with respect to other media such as video), a layer (the hierarchical relationship with other media) and the reproduction time period.

This enables the reproducing end to start successively reproducing the data for text reproduction relating to reproduction of the text data in units of packets, regardless of the amount of information of the data for text reproduction, thus making it possible to reduce the waiting time before the reproduction is started.

The transmission data structure of data for text transmission described in appendix 9 is the transmission data structure of data for text transmission according to appendix 8, wherein the text header data contains full text header data relating to reproduction of the text data as a whole, and fragment text header data relating to individual reproduction of the fragment text data. Additionally, each instance of the full text header data contains the reproduction start information.

The full text header data is contained in each of the packets, and contains reproduction start information for starting to reproduce the fragment text data. Additionally, each of the packets contains the fragment text header data relating to reproduction of the fragment text data contained in each of the packets.

The transmission data structure of data for text transmission described in appendix 10 is the transmission data structure of data for text transmission according to appendix 9, wherein the full text header data further contains a plurality of format information of the fragment text data. Additionally, the fragment text header data contains an index indicating a relation between the fragment text data and the format information.

Here, the format information is, for example, default format information of the fragment text data that is constituted by the presence or absence and the direction of scrolling, the reproduction position, the background cooler, the font formats (e.g., a font name, a size, a color, Bold, Underline and Italic) and the like of the fragment text data.

This eliminates the need to transmit the format information for each instance of the fragment text data. As a result, it is possible to reduce the amount of information required for individual reproduction of the fragment text data, thus reducing the load relating to the successive reproduction on the reproducing end.

The transmission data structure of data for text transmission described in appendix 11 is the transmission data structure of data for text transmission according to appendix 9 or 10, wherein the full text header data further contains data length configuration information for configuring a data length of the fragment text header data.

With the data length configuration information, it is possible to configure the data length of the fragment text header data relating to individual reproduction of the fragment text data, as necessary. That is, it is possible to configure the amount of information occupied by the fragment text header data in each of the packets to an amount that is necessary and sufficient. As a result, it is possible to reduce the amount of information required for individual reproduction of the fragment text data, thus further reducing the load relating to the successive reproduction on the reproducing end.

The data transmission method for data for text transmission described in appendix 12 is a data transmission method for data for text transmission for transferring and successively reproducing data for text reproduction relating to reproduction of text data, wherein the data for text reproduction contains a plurality of instances of fragment text data obtained by fragmenting the text data, and text header data containing reproduction start information for staring to reproduce the fragment text data. Additionally, the method includes: a generating step of generating payload portions of the data for text transmission based on the data for text reproduction; and an adding step of adding a header portion to each of the generated payload portions to produce a packet. Furthermore, each of the payload portions contains the reproduction start information of the text header data.

Here, the reproduction start information is information necessary to start reproducing the fragment text data that contains, for example, information such as the layout of the text data (the display area, the relative position with respect to other media such as video), a layer (the hierarchical relationship with other media) and the reproduction time period.

On the reproducing end that obtains each of the packets generated with this data transmission method, it is possible to start successively reproducing the data for text reproduction relating to reproduction of the text data in units of packets, regardless of the amount of information of the data for text reproduction, thus making it possible to reduce the waiting time before the reproduction is started.

The data transmission apparatus for data for text transmission described in appendix 13 is a data transmission apparatus for data for text transmission for transferring and successively reproducing data for text reproduction relating to reproduction of text data, wherein the data for text reproduction contains a plurality of instances of fragment text data obtained by fragmenting the text data, and text header data containing reproduction start information for staring to reproduce the fragment text data. Additionally, the apparatus includes: a generating means for generating payload portions of the data for text transmission based on the data for text reproduction; and an adding means for adding a header portion to each of the generated payload portions to produce a packet. Furthermore, each of the payload portions contains the reproduction start information of the text header data.

Here, the reproduction start information is information necessary to start reproducing the fragment text data that contains, for example, information such as the layout of the text data (the display area, the relative position with respect to other media such as video), a layer (the hierarchical relationship with other media) and the reproduction time period.

On the reproducing end that obtains each of the packets generated with this data transmission apparatus, it is possible to start successively reproducing the data for text reproduction relating to reproduction of the text data in units of packets, regardless of the amount of information of the data for text reproduction, thus making it possible to reduce the waiting time before the reproduction is started.

The data transmission program described in appendix 14 is a data transmission program for performing, with a computer, a data transmission method for data for text transmission for transferring and successively reproducing data for text reproduction relating to reproduction of text data, wherein the data for text reproduction contains a plurality of instances of fragment text data obtained by fragmenting the text data, and text header data containing reproduction start information for staring to reproduce the fragment text data. The data transmission method for the data for text transmission includes: a generating step of generating payload portions of the data for text transmission based on the data for text reproduction; and an adding step of adding a header portion to each of the generated payload portions to produce a packet. Additionally, each of the payload portions contains the reproduction start information of the text header data.

Here, the reproduction start information is information necessary to start reproducing the fragment text data that contains, for example, information such as the layout of the text data (the display area, the relative position with respect to other media such as video), a layer (the hierarchical relationship with other media) and the reproduction time period.

On the reproducing end that obtains each of the packets generated with this data transmission program, it is possible to start successively reproducing the data for text reproduction relating to reproduction of the text data in units of packets, regardless of the amount of information of the data for text reproduction, thus making it possible to reduce the waiting time before the reproduction is started.

The data transmission method for data for text transmission described in appendix 15 is a data transmission method for data for text transmission for transferring and successively reproducing data for text reproduction relating to reproduction of text data, wherein the data for text reproduction contains a plurality of instances of fragment text data obtained by fragmenting the text data, and text header data containing information for reproducing the fragment text data. Additionally, the method includes a generating step of generating payload portions based on the data for text reproduction; and an adding step of adding a header portion to each of the generated payload portions to produce a packet. The data for text transmission is made up of a plurality of the packets. Additionally, the fragment text data is placed in each of the packets in an order in which they are displayed. Furthermore, the packet contains reproduction time information of each instance of the fragment text data. Further still, a second packet contains fragment text data whose reproduction time information overlaps that of fragment text data of a first packet preceding the second packet.

Here, the reproduction time information is information constituted by the reproduction time of fragment text data that is placed first in the packet and the reproduction time period of each instance of the fragment text data, or information constituted by the reproduction time of each instance of the fragment text data.

In each of the packets generated with the data transmission method, the second packet and the first packet preceding the second packet have fragment text data whose reproduction time information overlap. That is, the fragment text data having overlapping reproduction time information are allowed to be transmitted in different packets for a plurality of times. This makes it possible to improve error tolerance of the data for text transmission.

The data transmission apparatus for data for text transmission described in appendix 16 is a data transmission apparatus for data for text transmission for transferring and successively reproducing data for text reproduction relating to reproduction of text data, wherein the data for text reproduction contains a plurality of instances of fragment text data obtained by fragmenting the text data, and text header data containing information for reproducing the fragment text data. Additionally, the apparatus includes: a generating means for generating payload portions based on the data for text reproduction; and an adding means for adding a header portion to each of the generated payload portions to produce a packet. The data for text transmission contains a plurality of the packets. Additionally, the fragment text data is placed in each of the packets in an order in which they are displayed. Furthermore, the packet contains reproduction time information of each instance of the fragment text data. Further still, a second packet contains fragment text data whose reproduction time information overlaps that of fragment text data of a first packet preceding the second packet.

Here, the reproduction time information is information constituted by the reproduction time of fragment text data that is placed first in the packet and the reproduction time period of each instance of the fragment text data, or information constituted by the reproduction time of each instance of the fragment text data.

In each of the packets generated with the data transmission apparatus, the second packet and the first packet preceding the second packet have fragment text data whose reproduction time information overlap. That is, the fragment text data having overlapping reproduction time information are allowed to be transmitted with different packets for a plurality of times. This makes it possible to improve error tolerance of the data for text transmission.

The data transmission program described in appendix 17 is a data transmission program for performing, with a computer, a data transmission method for data for text transmission for transferring and successively reproducing data for text reproduction relating to reproduction of text data, wherein the data for text reproduction contains a plurality of instances of fragment text data obtained by fragmenting the text data, and text header data containing information for reproducing the fragment text data. The data transmission method for the data for text transmission includes: a generating step of generating payload portions based on the data for text reproduction; and an adding step of adding a header portion to each of the generated payload portions to produce a packet. The data for text transmission is made up of a plurality of the packets. Additionally, the fragment text data is placed in each of the packets in an order in which they are displayed. Furthermore, the packet contains reproduction time information of each instance of the fragment text data. A second packet contains fragment text data whose reproduction time information overlaps that of a fragment text data portion of a first packet preceding the second packet.

Here, the reproduction time information is information constituted by the reproduction time of fragment text data that is placed first in the packet and the reproduction time period of each instance of the fragment text data, or information constituted by the reproduction time of each instance of the fragment text data.

In each of the packets generated with the data transmission program, the second packet and the first packet preceding the second packet have fragment text data whose reproduction time information overlap. That is, the fragment text data having overlapping reproduction time information are allowed to be transmitted with different packets for a plurality of times. This makes it possible to improve error tolerance of the data for text transmission.

### Fourth embodiment

### <Problems to be solved by fourth enibodiment and fifth embodiment>

When transmitting Timed Text in streaming transmission, it is conceivable to carry out packet transmission of data for transmission that has the transmission data structure described in the above-described embodiments as a packet.

On the other hand, in the case where MTU (Maximum Transmission Unit), which is the maximum data size of a single packet, is defined when carrying out packet transmission, a packet may be fragmented in the middle of transmission. For example, when a packet is sent in a size larger than the MTP of the IP layer, the sent packet is fragmented at the IP layer in the middle of transmission. However, in a transmission in which there may be potential packet loss (e.g., RTP/UDP/IP transmission), there is no error compensation for packet loss, and therefore the loss of several of the packets fragmented at the IP layer may affect reproduction of the packets as a whole.

Therefore, a problem to be solved by the fourth and fifth embodiments is to provide a packet data structure having packet loss tolerance when performing streaming transmission of reproduction data containing text data provided with modifying information.

Furthermore, another problem to be solved thereby is to provide a data reproduction apparatus for producing packet data having the packet data structure described in the fourth or fifth embodiment.

### <Content of fourth embodiment>

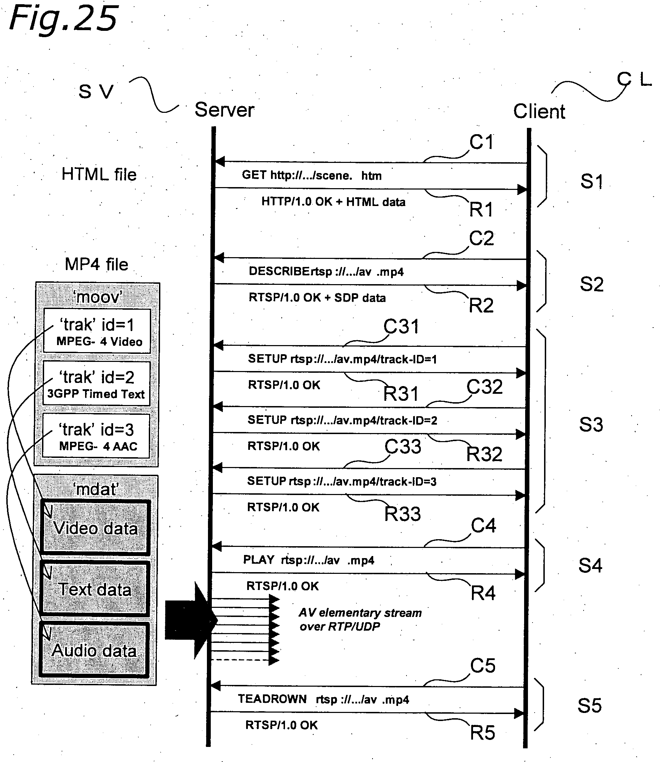

A packet data structure, a data reproduction apparatus and a data multiplexing apparatus according to the fourth embodiment of the present invention are described with reference to FIGS. 25 to 41. In addition, a data reproduction method and a data multiplexing method are described.

This embodiment is described in the following order: (1) a sequence (RTP/RTSP sequence) at the time when a packet having the packet data structure of the present invention is transmitted; (2) a packet data structure of the present invention that is transmitted with this sequence, (3) a data reproduction apparatus and a data reproduction method for a packet having this packet data structure; and (4) a data multiplexing apparatus and a data multiplexing method for a packet having this packet data structure.

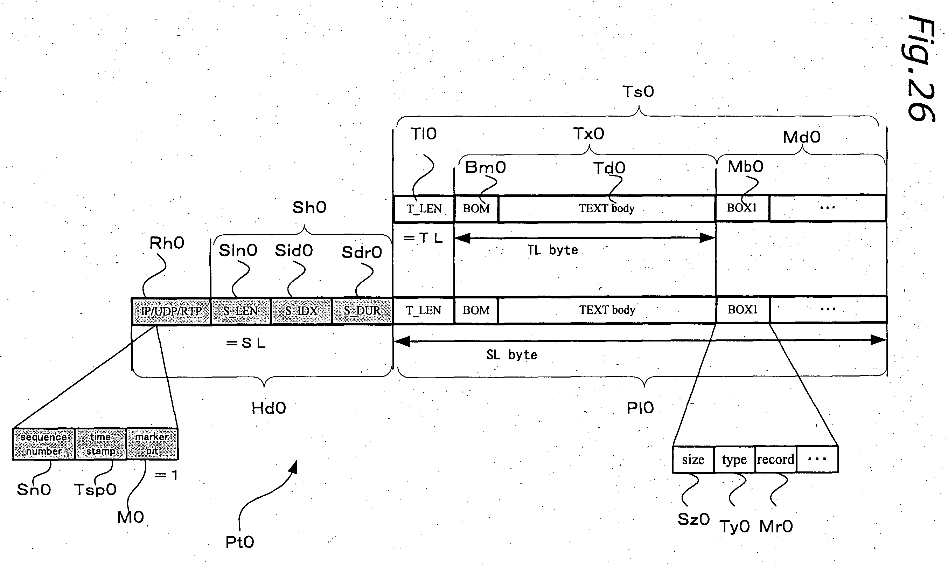

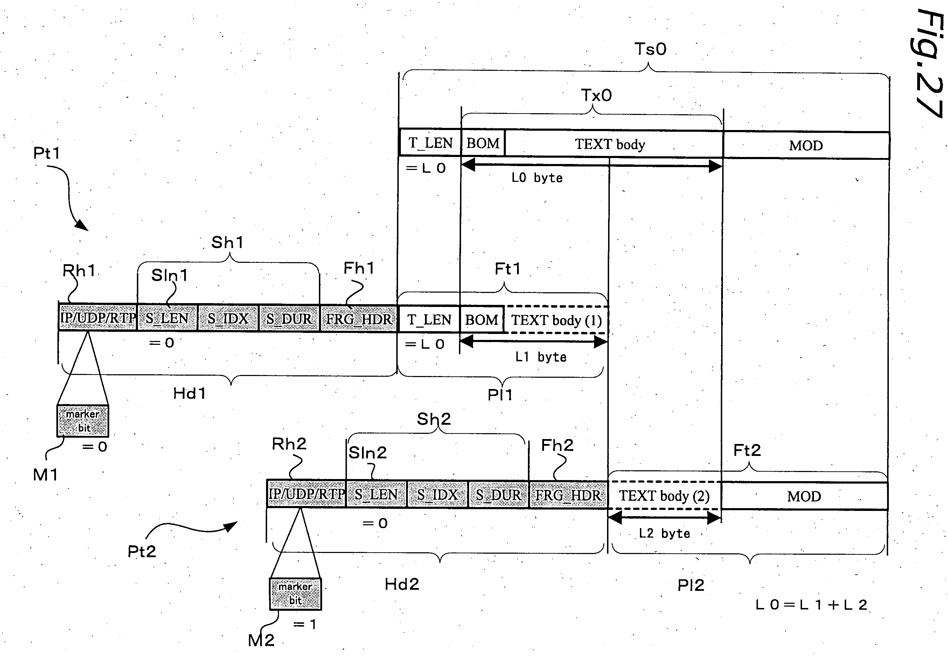

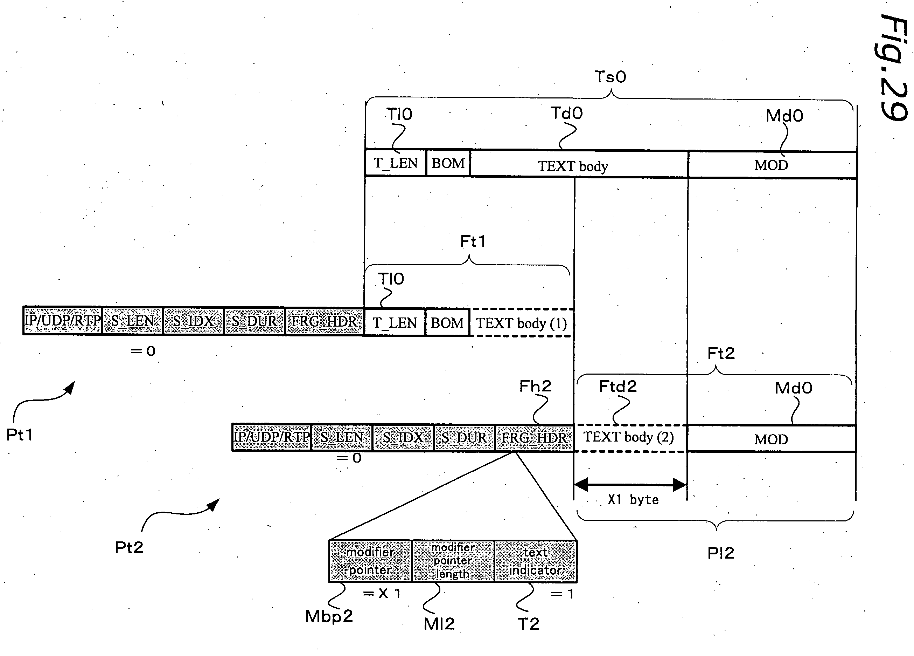

Additionally, alphanumeric characters provided at the end of the reference numerals in FIGS. 26 to 37 are given in accordance with the following rules. Numeral [0] is given to a basic packet that will be described later, and elements constituting the basic packet (e.g., a basic packet Pt0 in FIG. 26). Numeral [0] is also given to a pre-fragmented text sample, which is the basis for describing the packet data structure of the present invention, and elements constituting the text sample (e.g., a text sample Ts0 in FIG. 26). Other alphanumeric characters are given to indicate the ordinal positions of packets fragmented from the basic text sample (e.g., a fragment packet Pt1 in FIG. 27), and are also given to elements constituting those packets. It should be noted that in the drawings the same reference numerals are given to elements having the same data content, without following the above-described rules (e.g., a text length Tl0 in a text sample Ts0 and a text length Tl0 in a fragment packet Pt1 in FIG. 29).

### (1) <RTP/RTSP sequence>

Streaming transmission using RTP (Real time Transport Protocol), RTSP (Real Time Streaming Protocol) and SDP (Session Description Protocol) is described. RTP is a packet format for multimedia streams that is defined in IETF (Internet Engineering Task Force) RFC1889. RTSP and SDP are control protocols for multimedia streaming that are defined in RFC2326 and RFC2327, respectively.

A general processing flow when a client CL obtains media data in an MP4 file format from a server SV over the Internet is described with reference to FIG. 25.

First, when the user requests an HTML (Hyper Text Markup Language) file containing a link to an MP4 file through a web browser provided in the client CL such as a personal computer, the client CL issues a command C1 requesting the HTML file. The server SV issues to the client CL a response R1 (HTTP/1.0 OK) indicating that the command C1 has been accepted, and transmits HTML data (session S1).

Next, when the user clicks the link to the MP4 file, the client CL issues a command C2 requesting the detailed information relating to the MP4 file. The server SV issues to the client CL a response R2 (RTSP/1.0 OK) indicating that the command C2 has been accepted, and SDP data containing this detailed information is supplied to the client SV (session S2).

Next, based on the descriptions in the received SDP, the client CL issues commands C31 to C33 requesting preparation for providing the respective tracks of the MP4 file. Upon completion of the preparation for providing the respective media data, the server SV issues responses R31 to R33 (RTSP/1.0 OK) indicating that the above-described commands C31 to C33 have been accepted (session S3).

Next, the client CL issues a command C4 requesting provision of all the media data. The server SV issues a response R4 (RTSP/1.0 OK) indicating that the command C4 has been accepted (session S4). Then, the media data in the MP4 file format is transmitted as an RTP packet. This RTP packet contains a packet having a packet data structure that will be described later.

To terminate the session, the client CL issues a command C5 requesting termination of the session. The server SV issues a response R5 (RTSP/1.0 OK) indicating that the command C5 has been accepted, and the session is terminated (session S5).

### (2) <Data structure of RTP packet>

A packet having the packet data structure of the present invention that is transmitted as an RTP packet is described with reference to FIGS. 26 to 37.

### (i) Outline of basic packet

In the case of transmitting Timed Text as an RTP packet, a basic packet Pt0 shown in FIG. 26 is basically used.

The basic packet Pt0 includes a payload portion Pl0 and a header portion Hd0. The payload portion Pl0 includes a text sample Ts0. The text sample Ts0 has the same structure as the text samples 3060, 3061, ... shown in FIG. 55, and is made up of a text length Tl0, a text Tx0 and a modifier Md0. The text length Tl0 stores the data length (a value of [TL] in the drawing) of the text Tx0. The text Tx0 is made up of a text body Td0 and a byte order mark Bm0. The modifier Md0 is modifying information of the text body Td0, and includes one or more modifier boxes Mb0, .... The modifier boxes Mb0, ... are information for using a modifying effect for the text body Td0. The modifier box Mb0 further contains a box size Sz0 of the modifier box Mb0, a modification type Ty0 and a plurality of records Mr0, .... The structure of the modifier box Mb0 is dependent on the modification type described by the modification type Ty0. The structure of the modifier box Mb0 will be described in detail later.

The header portion Hd0 includes an RTP header Rh0 and a sample header Sh0. The RTP header Rh0 has a header format used in RTP, and contains, for example, a sequence number Sn0, a time stamp Tsp0, a marker bit M0 or the like. The sample header Sh0 describes a sample length Sln0, a sample index Sid0 and a sample duration Sdr0. The sample length Sln0 stores the data length (a value of [SL] in the drawing) of the text sample Ts0. The sample index Sid0 is information describing association between the text sample Ts0 and the sample description 3040 (see FIG. 55) transmitted as SDP data. The sample duration Sdr0 is information relating to the reproduction time period of the text sample Ts0.

In the case of using Timed Text by streaming transmission, it is possible to transmit all the data contents as an RTP packet (RTP in-band transmission). However, in this embodiment, the data portion corresponding to the header portion 3010 (see FIG. 55) of the MP4 file 3000 is notified as SDP data in the session S2 described with reference to FIG. 25 (RTP out-of-band transmission). Specifically, the data corresponding to the track header 3030 and the sample description 3040 of the header portion 3010 is transmitted as SDP data at the time of setup. At the same time, information relating to whether the RTP packet being transmitted contains a fragment packet that will be described later is notified.

### (ii) Outline of fragment packet

The basic packet Pt0 may have a data size larger than the MTU (Maximum Transmission Unit) of the transmission channel, and thus may be fragmented in the middle of transmission. When it is determined that the packet may be fragmented in the middle of transmission, the text sample Ts0 is fragmented, with information for reproducing the fragmented text sample Ts0 attached thereto, and transmitted as fragment packets having a size not larger than the MTU of the transmission channel from the beginning. In the following, the outline of the fragment packet is described, taking as an example a case where the text sample Ts0 having the same structure as described with reference to FIG. 26 is fragmented.

The basic structure of the fragment packet is described with reference to FIG. 27. In the case shown in FIG. 27, the text sample Ts0 is fragmented into two (more specifically, the Tx0 of L0 byte is fragmented into a L1 byte and a L2 byte), and they are stored in fragment packets Pt1 and Pt2, respectively. The number of fragmentation is arbitrary and may be determined by the MTU of the transmission channel. The fragment packets Pt1 and Pt 2 respectively include payload portions Pl1 and Pl2, and header portions Hd1 and Hd2.

The payload portions Pl1 and Pl2 respectively include fragment text samples Ft1 and Ft2 obtained by fragmenting the text sample Ts0. The header portions Hd1 and Hd2 further include fragment headers Fh1 and Fh2, in addition to the same structure of the header portion Hd0 of the basic packet Pt0 (see FIG. 26). That is, the header portions Hd1 and Hd2 include RTP headers Rh1 and Rh2, sample headers Sh1 and Sh2, and the fragment headers Fh1 and Fh2.

The marker bits M1 and M2 of the RTP headers Rh1 and Rh2 store values of [0] and [1], respectively. In the RTP header, the value of the marker bit can be defined by the user in various manners. In this embodiment, it is defined that when the basic packet Pt0 (see FIG. 26), and the fragment packet Pt1 and Pt2 contain the data at the tailing end of the text sample Ts0 in the payload portion, the marker bit of that packet stores a value of [1]. Therefore, the marker bits M0 and M2 store a value of [1] in the basic packet Pt0 and the fragment packet Pt2, respectively, and the marker bit M1 stores a value of [0] in the fragment packet Pt1.

The sample length Sln0 of the basic packet Pt0 stores the data length (a value of [SL] in FIG. 26) of the text sample Ts0. On the other hand, the fragment packets Pt1 and Pt2 each store a value of [0] in the sample lengths Sln1 and Sln2. With this value [0], it is determined that the fragment packets Pt1 and Pt2 contain the fragment text samples Ft1 and Ft2, respectively.

The fragment packets Pt1 and Pt2 include information necessary for reproduction of the payload portions Pl1 and Pl2 in the fragment headers Fh1 and Fh2, so that they can be reproduced independently of other packets. Therefore, the information sets included in the fragment headers Fh1 and Fh2 are dependent on the information sets included in the fragment text samples Ft1 and Ft2. That is, the information sets that should be included in the fragment headers Fh1 and Fh2 are determined by which portion of the text sample Ts0 is the boundary of fragmentation.

### (iii) Outline of fragment header

The following four information sets can be stored in each fragment header of the fragment packet of the present invention, in which a text sample is stored after being fragmented into a plurality of fragments. The four information sets are: (a) identification information of the character code of the text body; (b) start position information of the modifier or the modifier box; (c) information indicating the ordinal number, with respect to the entire text body, of the character at the beginning of the text body portion included in the fragment text sample; and (d) information stored for reproduction of the fragmented modifier box.

In the following, the information sets (a) to (d) stored in each of the fragment headers are described, together with the description of the structure of the fragment packet. It should be noted that the fragment packet described below has the same structure as the fragment packets Pt1 and Pt2 described with reference to FIG. 27, and therefore the description of the detailed structure has been omitted. In addition, the fragmenting method of the text sample Ts0 described below is shown as an example for describing the information sets (a) to (d), and the fragmentation is not limited to this method.

### (a) Identification information of character code of text body

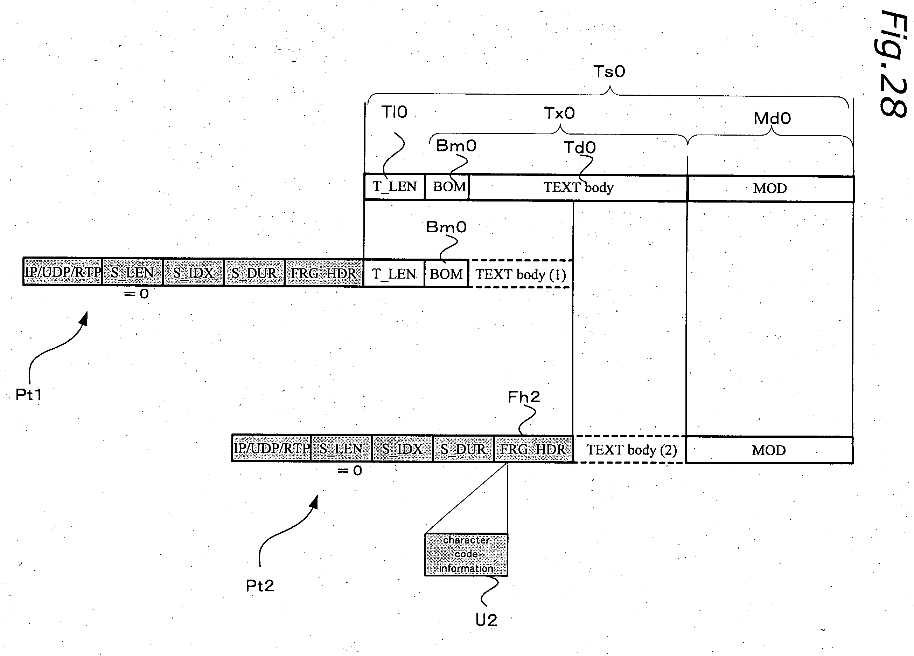

The identification information of the character code of the text body Td0 stored in the fragment header Fh2 is described with reference to FIG. 28.

In FIG. 28, a text sample Ts0 has the fragmentation boundary in a text body Td0. Fragment packets Pt1 and Pt2 contain the fragmented text body Td0.

The fragment packet Pt2 stores character code information U2 of the text body Td0 in a fragment header Fh2. The character code information U2 is a one-bit flag for identifying the character code of the text body Td0, and for example, a value of [1] indicates UTF-16BE, and a value of [0] indicates UTF-8.

Thus, for example, when the fragment packet Pt1 including the byte order mark Bm0 has been lost in the middle of transmission; it is possible to determine the character code of the fragmented text body Td0 included in the fragment packet Pt2 with the character code information U2 in a data reproduction apparatus that has obtained only the fragment packet Pt2. As a result, it is possible to reproduce the information of the fragment packet Pt2.

In addition, although the character code information U2 is included in the fragment packet Pt2 containing the fragmented text body Td0, it may not be necessarily included in the fragment packet Pt1 containing the start portion of the text Tx0.

### (b) Start position information of modifier or modifier box

The start position information of the modifier Md0 or the modifier boxes Mb0, ... is described with reference to FIGS. 29 to 31.

### <<Start position information of modifier>>

In FIG. 29, a text sample Ts0 has a fragmentation boundary in a text body Td0. Fragment packets Pt1 and Pt2 contain the fragmented text body Td0.

In FIG. 29, the fragment packet Pt2 stores, in a fragment header Fh2, a modifier pointer Mbp2, a modifier pointer length Ml2 and a text indicator T2, as information for indicating the start position of the modifier Md0.

The modifier pointer Mbp2 stores the start position of the modifier Md0 in the payload portion Pl2, that is, the data length (a value of [X1] in the drawing) of a fragment text body Ftd2 that is a portion of the fragmented text body Td0 in FIG. 29. The modifier pointer length M12 specifies the data length of the modifier pointer Mbp2, for example, with 2 bits. The text indicator T2 is a one-bit flag for identifying that the fragment packet Pt2 contains a portion of the text Tx0, and it stores, for example, a value of [1], since the fragment text body Ftd2 is contained in this case.

Thus, for example, when the fragment packet Pt1 including the text length Tl0 has been lost in the middle of transmission, it is possible to identify the start position of the modifier Md0 included in the fragment packet Pt2 and to reproduce the modifier Md0 in a data reproduction apparatus that has obtained only the fragment packet Pt2. Furthermore, it is possible to prevent the modifier Md0 from being mistakenly reproduced as a portion of the text body Td0 in the data reproduction apparatus.

It should be noted that the data length of the modifier pointer Mbp2 may be a fixed data length, without providing the modifier pointer length Ml2.

In addition, as has been described under (a) with reference to FIG. 28, the fragment packet Pt2 shown in FIG. 29 may include the character information of the text body Td0, but the description has been omitted here.

### <<Start position information of modifier box>>

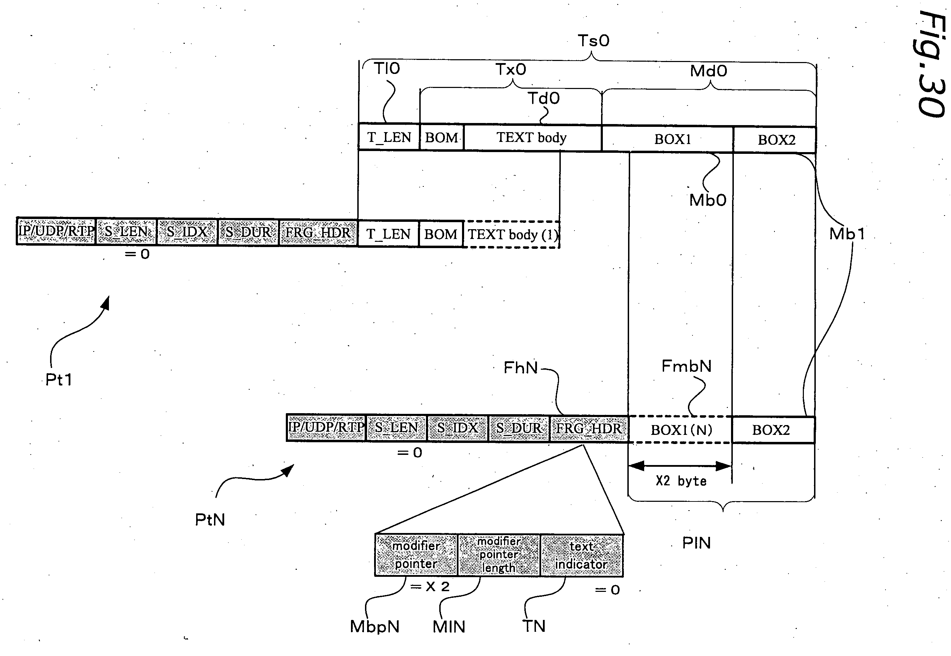

In FIG. 30, a text sample Ts0 has the fragmentation boundary in a modifier box Mb0. A fragment packet PtN contains a fragment modifier box FmbN and a modifier box Mb1, each consisting a portion of the fragmented modifier box Mb0.

The fragment packet PtN stores, in a fragmented FhN, a modifier pointer MbpN, a modifier pointer length MlN and a text indicator TN, as information for indicating the start position of the modifier box Mb1.

The modifier pointer MbpN stores the start position of the modifier box Mb1 in the payload portion PlN, that is, the data length (a value of [X2] in the drawing) of the fragment modifier box FmbN in FIG. 30. The modifier pointer length MlN specifies the data length of the modifier pointer MbpN with 2 bits. The text indicator TN is a one-bit flag for identifying that the fragment packets PtN contains a portion of the text Tx0, and in this case, it stores, for example, a value of [0], since the Tx0 is not contained.

Thus, for example, when fragment packets preceding and following the fragment packet PtN have been lost in the middle of transmission, it is possible to identify the start position of the modifier box Mb1 included in the fragment packet PtN and to reproduce the modifier box Mb1 in a data reproduction apparatus that has obtained the fragment packet PtN. Accordingly, if a fragment packet containing the text Tx0 (e.g., the fragment packet Pt1) is obtained normally in the data reproduction apparatus, it is possible to use the modifying effect of the modifier box Mb1 for that fragment packet. Furthermore, it is possible to prevent the fragmented modifier box Mb0 from being mistakenly reproduced as the text body Td0 in the data reproduction apparatus, based on the text indicator TN.

### <<Variations of fragmentation of text sample Ts0>>

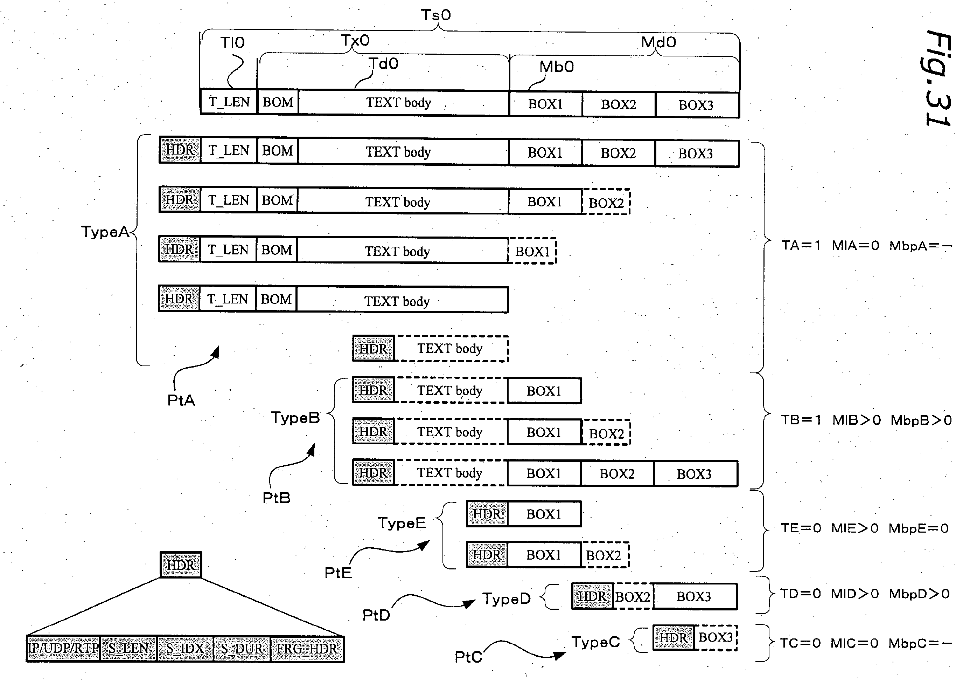

The relationship between the variations of fragmentation of the text sample Ts0 and the start position information of the modifier Md0 or the modifier boxes Mb0 ... is described with reference to FIG. 31. Fragment packets obtained by the variations of fragmentation of the text sample Ts0 can be classified into five types, namely, fragmentation types A to E, based on the information included in the payload portions of the fragment packets.

### (Fragmentation type A)

The fragment packet of the fragmentation type A is a fragment packet that contains a portion or the whole of the text Tx0 only, or contains the start of the text sample Ts0. For example, five fragment packets PtA indicated as [TypeA] in FIG. 31 correspond to this.

In this case, a fragment header FhA of each of the fragment packets PtA has a text indicator TA and a modifier pointer length M1A. The text indicator TA indicates that the fragment packets PtA contain a portion of the text Tx0 by storing, for example, a value of [1]. The modifier pointer length MlA specifies the data length of the modifier pointer MbpA as 0 bit with a 2-bit bit string. Thus, it is indicated that the fragment header FhA does not contain the modifier pointer MbpA. That is, the fragment packets PtA are packets in which the boundary between the text Tx0 and the inodifier Md0 can be determined from the text length Tl0 that is placed immediately preceding the text Tx0, or packets that do not contain the boundary between the text Tx0 and the modifier Md0.

### (Fragmentation type B)

The fragment packet of the fragmentation type B is a fragment packet that contains a portion of the text Tx0 and a portion or the whole of the modifier Md0. That is the fragment packet of the fragmentation type B is a fragment packet that does not contain the start of the text sample Ts0. For example, three fragment packets PtB indicated as [TypeB] in FIG. 31 correspond to this.

In this case, a fragment header FhB of each of the fragment packets PtB has a text indicator TB, a modifier pointer length MlB and a modifier pointer MbpB. The text indicator TB indicates that the fragment packets PtB include a portion of the text Tx0 by storing, for example, a value of [1]. The modifier pointer length M1B specifies the data length of the modifier pointer MbpB, for example, as any one of 8, 16 and 32 bits with a 2-bit bit string. The modifier pointer MbpB indicates the position of the modifier Md0 from the bit string with the data length specified by the modifier pointer length MlB.

It should be noted that the fragment header FhB of the fragment packets PtB may include the character code information of the text body Td0, as has been described under (a) with reference to FIG. 28.

### (Fragmentation type C)

The fragment packet of the fragmentation type C is a fragment packet that contains only a portion of one of the modifier boxes Mb0, ..., and does not contain the start of that modifier boxes Mb0, .... In other words, it is a fragment packet that does not contain the text Tx0 and the start of the modifier boxes Mb0, .... For example, a fragment packet PtC indicated as [TypeC] in FIG. 31 corresponds to this.

In this case, the fragment header FhC of the fragment packet PtC has a text indicator TC and a modifier pointer length MlC. The text indicator TC indicates that the fragment packet PtC does not contain a portion of the text Tx0 by storing, for example, a value of [0]. The modifier pointer length MlC specifies the data length of the modifier pointer MbpC as 0 bit with a 2-bit bit string. Thus, it is indicated that the packet header FhC does not contain the modifier pointer MbpC.

### (Fragmentation type D)

The fragment packet of the fragmentation type D is a fragment packet that contains only a portion of the modifier boxes Mb0, ..., and contains the start of that modifier boxes Mb0, .... For example, a fragment packet PtD indicated as [TypeD] in FIG. 31 corresponds to this.

In this case, a fragment header FhD of the fragment packet PtD has a text indicator TD, a modifier pointer length MlD and a modifier pointer MbpD. The text indicator TD indicates that the fragment packet PtD does not contain a portion of the text Tx0 by storing, for example, a value of [0]. The modifier pointer length MlD specifies the data length of the modifier pointer MbpD, for example, as any one of 8, 16, 32 bits with a 2-bit bit string. The modifier pointer MbpD indicates the position of the start of the modifier boxes Mb0, ..., from the bit string with the data length specified by the modifier pointer length MlD.

### (Fragmentation type E)

The fragment packet of the fragmentation type E is a particular fragment packet of the fragmentation type D that contains the start of the modifier boxes Mb0, ... at the start of the payload portion. For example, the fragment packets PtE indicated as [TypeE] in FIG. 31 correspond to this.

In this case, a fragment header FhE of each of the fragment packet PtE has a text indicator TE, a modifier pointer length MlE and a modifier pointer MbpE. The text indicator TE indicates that the fragment packets PtE do not contain a portion of the text Tx0 by storing, for example, a value of [0]. The modifier pointer length MlE specifies the data length of the modifier pointer MbpE, for example, as any one of 8, 16 and 32 bits with a 2-bit bit string. The modifier pointer MbpE indicates that the start of the modifier boxes Mb0, ... is contained at the start of the payload portion PlE by indicating a value of [0], from the bit string with the data length specified by the modifier pointer length MlE.

### (c) Information indicating the ordinal number, with respect to the entire text body, of the character at the beginning of the text body portion included in the fragment text sample

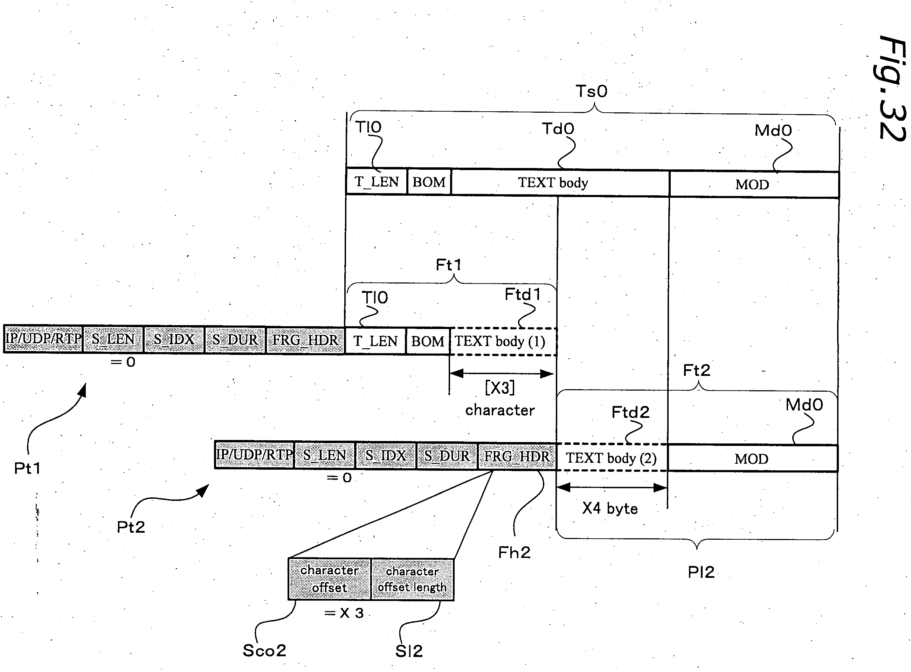

In FIG. 32, a text sample Ts0 has the fragmentation boundary in a text body Td0. Fragment packets Pt1 and Pt2 include fragment text bodies Ftd1 and Ftd2, which constitute the fragmented text body Td0.

The fragment packet Pt2 stores a character offset Sco2 and a character offset length S12 in a fragment header Fh2. The character offset Sco2 stores, in units of the number of characters (a value of [X3] in the drawing), from what character through the last character of the entire text body Td0 are contained in the fragment text body Ftd2 contained in the fragment text sample Ft2. The character offset length S12 specifies the data length of the character offset Sco2, for example, with 2 bits. Furthermore, in the modifier Md0, the modification of the text body Td0 is specified in units of the number of characters rather than units of bytes.

Thus, for example, when the fragment packet Pt1 has been lost in the middle of transmission, it is possible to apply the modifying effect of the modifier Md0 to the fragment text body Ftd2 included in the fragment packet Pt2 in a data reproduction apparatus that has obtained only the fragment packet Pt2.

Additionally, the character offset Sco2 may store, in units of bytes, where the fragment text body Ftd2 contained in the fragment text sample Ft2 is located in the entire text body Td0. In this case, the modifier Md0 is analyzed in a data reproduction apparatus that has obtained the fragment packet Pt2 to derive the range of the fragment text body Ftd2 in which the modifying effect should be applied. Although the correct character location may not be detected from information in units of bytes, it can be estimated to a certain extent. For example, when the character is encoded with UTF-16, a single character has a fixed length of 2 bytes, and therefore, it is possible to determine the character location by halving the number of the byte location.

Although the character offset Sco2 is included in the fragment packet Pt2, which contains the fragment text body Ftd2, it may not be necessarily included in the fragment packet Pt1, which contains the start portion of the text Tx0.

Furthermore, the fragment packet Pt2 may include the character code information, the modifier pointer, the modifier pointer length and the text indicator, described under (a) and (b).

### (d) Information stored for reproduction of fragmented modifier box

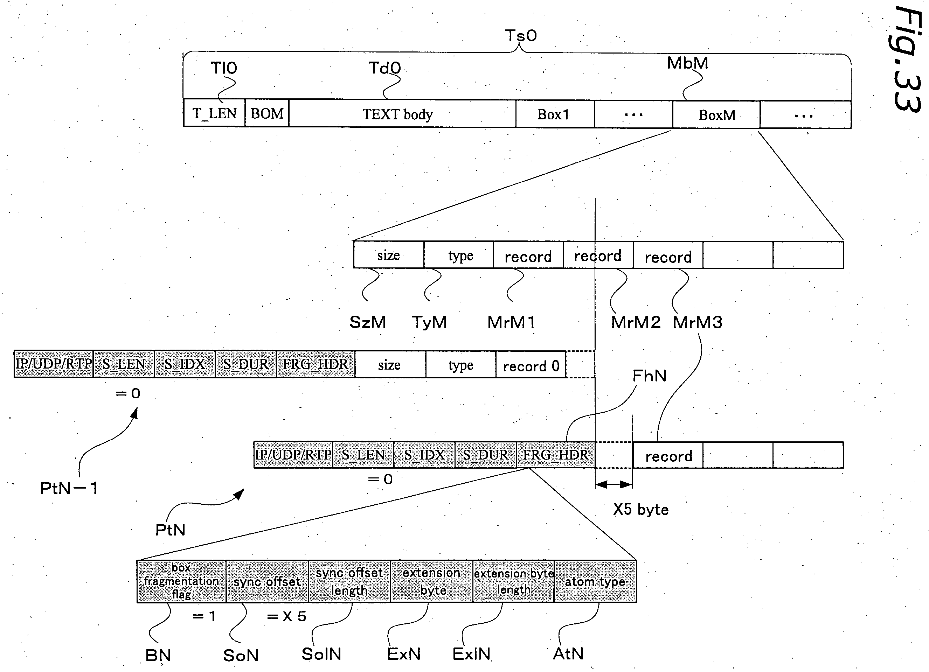

Information stored for reproduction of the fragmented modifier box is described with reference to FIGS. 33 to 36.

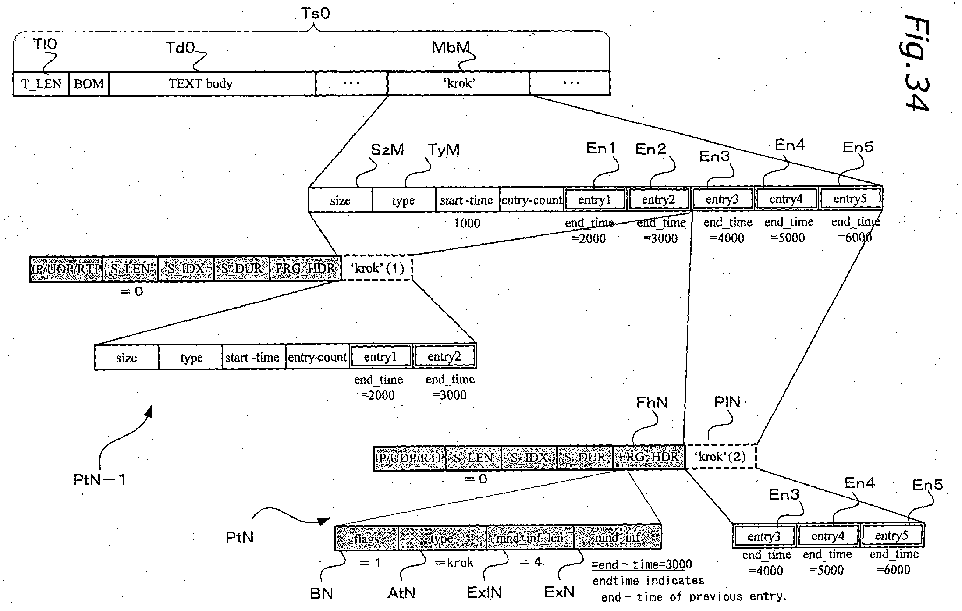

The outline of the information stored for reproduction of a fragmented modifier box MbM is described with reference to FIG. 33. It should be noted that the detailed description will be given later with reference to FIGS. 34 to 36.

In FIG. 33, a modifier box MbM contains a box size SzM of the modifier box MbM, a modification type TyM describing an modifying effect to the text body Td0 and a plurality of records MrM1, MrM2, ... describing, for example, the range in which the modifying effect should be applied. A text sample Ts0 has the fragmentation boundary in the record MrM2 of the modifier box MbM, which is the Mth modifier box. Fragment packets PtN-1 and PtN each have a portion of the fragmented modifier box MbM.

The fragment packet PtN stores, in a fragment header FhN, a box fragmentation flag BN, a sync offset SoN, a sync offset length SolN, an extension byte ExN, an extension byte length ExlN and an atom type AtN.

The box fragmentation flag BN is a flag for indicating that the fragment packet PtN has the fragmented modifier box MbM, and in the drawing, it indicates the presence of the fragmented modifier box MbM by storing a value of [1]. The sync offset SoN stores the start position (a value of [X5] in the drawing) of the record MrM3, which can be partially used, of the fragmented modifier box MbM included in the fragment packet PtN. The sync offset length SolN specifies the data length of the sync offset SoN, for example, with a 2-bit bit string. The extension byte ExN describes information necessary for reproduction of the fragmented modifier box MbM contained in the fragment packet PtN. The detailed content of the information will be described later with reference to FIGS. 34 to 36. The extension byte length ExlN specifies the data length of the extension byte ExN, for example, with a 3-bit bit string. The atom type AtN is the modification type of the modifier box MbM, and describes the same content as the modification type TyM.

Thus, for example, when the modification type TyM of the modifier box MbM or the fragment packet PtN-1, which includes other information necessary for reproduction, has been lost in the middle of transmission, it is possible to decode the fragmented modifier box MbM included by using the atom type AtN or the extension byte ExN stored in the fragment header FhN in the fragment packet PtN in a data reproduction apparatus that has obtained the fragment packet PtN. Furthermore, for example, when the fragment packet PtN-1 has been lost in the middle of transmission, it is possible to identify the position of the start of the record MrM3 included in the fragment packet PtN in the data reproduction apparatus that has obtained the fragment packet PtN, thus making it possible to use the modifying information.

Although a case has been described where the Ts0 is fragmented in the record MrM2, the effect of the present invention is not limited to this case. Specifically, fragmentation may be carried out in the box size SzM, the modification type TyM or the remaining records MrM1, MrM3,....

The information stored for reproduction of the fragmented modifier box is described in detail with reference to FIGS. 34 to 36. It should be noted that the modifier boxes in FIGS. 34 to 36 specify a karaoke modification, a character style modification and a hypertext modification, respectively.

### <<Karaoke>>

In FIG. 34, a text sample Ts0 has the fragmentation boundary in a modifier box MbM, which is the Mth modifier box. The modifier box MbM modifies a text Td0 with a karaoke style. Fragment packets PtN-1 and PtN contain the fragmented modifier box MbM.

The karaoke style modifier box MbM includes a box size SzM, a modification type TyM, a start time, an entry count and an entries En1 to En5. The box size SzM is the data length of the modifier box MbM. The modification type TyM stores a bit string indicating [krok] for indicating that the modifier box is karaoke. The start time specifies the modification start time. The entry count specifies the number of entries included in the modifier box MbM. Each of the entries En1 to En5 includes the karaoke modification end time and information specifying the characters to be modified. The modifications by the entries En2 to En5 are applied to the specified characters from the modification end times of the entries En1 to En4, which are respectively placed immediately preceding the entries En2 to En5, to the respective modification end times of the entries En2 to En5 (the modification by the entry En1 is applied from the modification start time specified by the start time to the modification end time of the entry En1).

The fragment packet PtN has the entries En3 to En5 in a payload portion PlN. That is, the modifier box MbM is fragmented at the boundary between the entry En2 and the entry En3. The fragment header FhN contains a box fragmentation flag BN, an atom type AtN, an extension byte length ExlN and an extension byte ExN. The box fragmentation flag BN indicates that the fragment packet PtN has the fragmented modifier box MbM by storing, for example, a value of [1]. The atom type AtN stores a bit string indicating [krok] for indicating that the modification type of the fragmented modifier box MbM is karaoke. The extension byte length ExlN specifies the data length of the extension byte ExN, for example, with 3-bit bit string. The extension byte ExN stores the karaoke modification end time indicated by the entry En2, which is no longer contained in the fragment packet PtN due to fragmentation.

The description here is based on that the fragment packet PtN shown in FIG. 34 does not include information corresponding to the sync offset SoN and the sync offset length SolN, described in FIG. 33. The reason is that these information sets are information sets that are no longer necessary as a result of carrying out fragmentation in accordance with the fragmentation rule, "no fragmentation should be carried out in the middle of the records MrM1, ... of the modifier box MbM" at the time of fragmenting the text sample Ts0.

Thus, for example, when the fragment packet PtN-1 has been lost in the middle of transmission, it is possible to analyze the entries En3 to En5 included in the fragment packet PtN as a karaoke style in a data reproduction apparatus that has obtained the fragment packet PtN. Furthermore, in this data reproduction apparatus, it is possible to determine the modification start time by referencing the information stored in the extension byte ExN included in the fragment header FhN for the entry En3.

### <<Character style>>

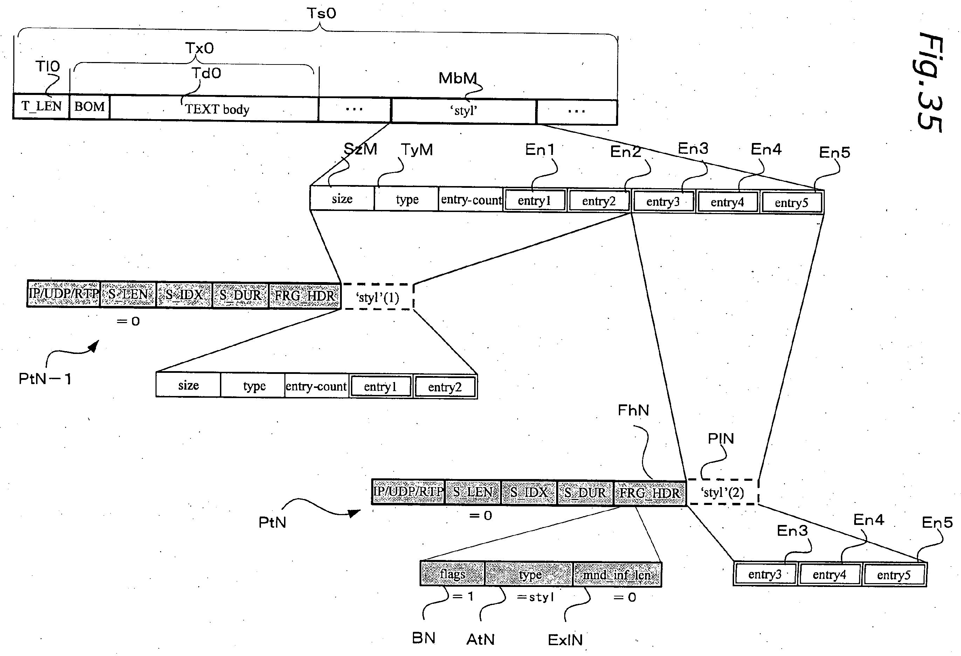

In FIG. 35, a text sample Ts0 has the fragmentation boundary in a modifier box MbM, which is the Mth modifier box. The modifier box MbM changes the character style of a text Tx0. Fragment packets PtN-1 and PtN contain the fragmented modifier box MbM.

The character style modifier box MbM includes a box size SzM, a modification type TyM, an entry count and entries En1 to En5. The box size SzM is the data length of the modifier box MbM. The modification type TyM stores a bit string indicating [styl] for indicating that the modifier box MbM is a character style. The entry count specifies the number of entries included in the modifier box MbM. Each of the entries En1 to En5 includes, for example, information specifying the range in which the character style should be applied, a font style and a font size.

The fragment packet PtN has the entries En3 to En5 in a payload portion PlN. That is, the modifier box MbM is fragmented at the boundary between the entry En2 and the entry En3. The fragment header FhN contains a box fragmentation flag BN, an atom type AtN and an extension byte length ExlN. The box fragmentation flag indicates that the fragment packet PtN includes a portion of the fragmented modifier box MbM by storing, for example, a value of [1]. The atom type AtN stores a bit string indicating [styl] for indicating that the modification type of the fragmented modifier box MbM is a character style. The extension byte length ExlN specifies the data length of the extension byte ExN, for example, with a 3-bit bit string. The extension byte ExN stores a value of [0], since there is no information necessary to be stored therein in the case of a character style.

Thus, for example, when the fragment packet PtN-1 has been lost in the middle of transmission, it is possible to analyze the entries En3 to En5 included in the fragment packet PtN as the character style in a data reproduction apparatus that has obtained the fragment packet PtN.

### <<Hypertext>>

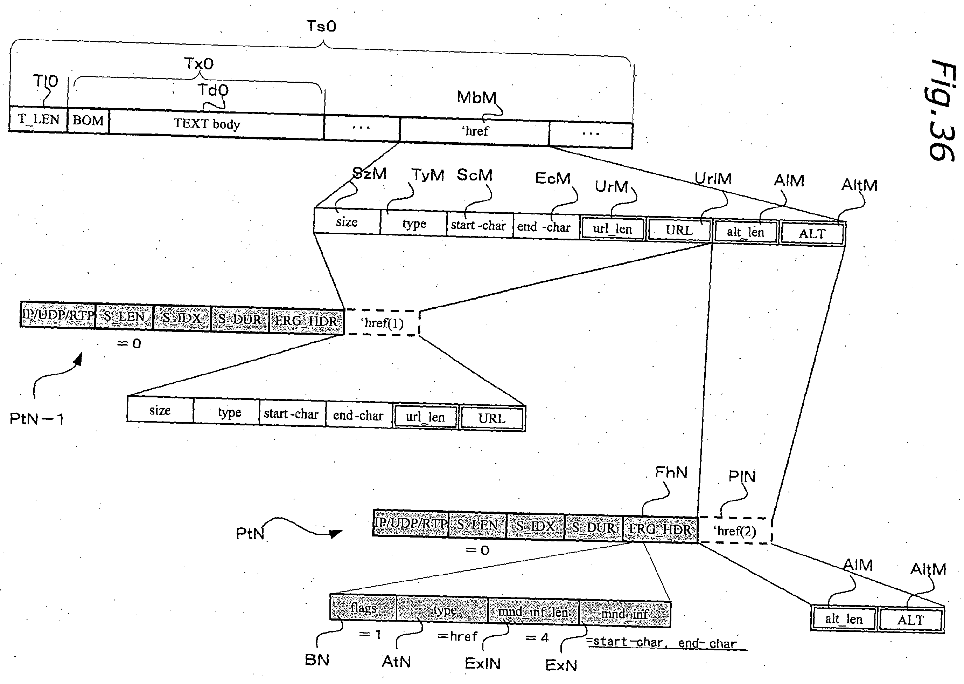

In FIG. 36, a text sample Ts0 has the fragmentation boundary in a modifier box MbM, which is the Mth modifier box. The modifier box MbM modifies the text Td0 with a hypertext style. Fragment packets PtN-1 and PtN contain the fragmented modifier box MbM.

The hypertext modifier box MbM includes a box size SzM, a modification type TyM, character string ranges ScM and EcM in which the hypertext link is applied, a URL path UrlM to which a link is made, and a URL length UrM specifying the data length of the URL path, an ALT attribute AltM specifying, for example, an alternative text and an ALT length AlM specifying the data length of the ALT attribute.

The fragment packet PtN has the ALT attribute AltM and the ALT length AlM in a payload portion PlN. A fragment header FhN contains a box fragmentation flag BN, an atom type AtN, an extension byte length ExlN and an extension byte ExN. The box fragmentation flag BN indicates that the fragment packet PtN has a portion of the fragmented modifier box MbM by storing, for example, a value of [1]. The atom type AtN stores a bit string indicating [href] for indicating that the modification type of the fragmented modifier box MbM is hypertext. The extension byte length ExlN specifies the data length of the extension byte ExN, for example, with a 3-bit bit string. The extension byte ExN stores the character string range in which the ALT attribute, which is no longer contained in the fragment packet PtN as a result of fragmentation, is applied. That is, the extension byte ExN stores information relating to the character string ranges ScM and EcM, to which the hypertext link included in the modifier box MbM is applied.

Thus, for example, when the fragment packet PtN-1 has been lost in the middle of transmission, it is possible to analyze the ALT attribute AltM and the ALT length AlM included in the fragment packet PtN as a hypertext style in a reproduction apparatus that has obtained the fragment packet PtN. Furthermore, it is possible to determine the character string range to which the ALT attribute is applied.

### (iv) Other fragment packets

### (Structure of fragment header)

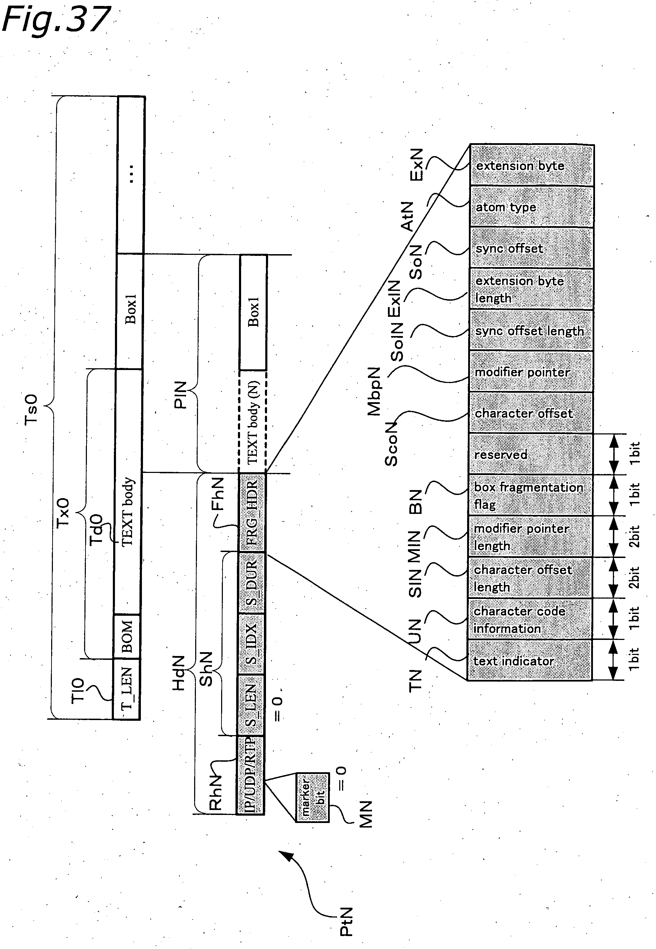

There may be cases where all the above-described information sets (a) to (d) are included in a fragment header. FIG. 37 shows an example of the structure of a header portion HdN of the fragment packet PtN. However, the arrangement of the information sets is an example, and there is no limitation to this.

The header portion HdN of the fragment packet PtN includes an RTP header RhN, a sample header ShN and a fragment header FhN. The RTP header RhN identifies whether the fragment packet PtN contains the data at the tailing end of a text sample Ts0 in a payload portion PlN from the value of a marker bit MN. In FIG. 37, the marker bit MN indicates that the fragment packet PtN does not contain the data at the tailing end of the text sample Ts0 in the payload portion, by storing a value of [0]. The sample header ShN allows the determination that the fragment packet PtN contains a portion of the fragmented text sample Ts0, by storing a value of [0] in a sample length SlnN.

The fragment header FhN contains each of the information sets described in (a) to (b) above.

### (Presence of fragment header)

In the fourth embodiment, it was explained that it "allows determination that the fragment packet contains a portion of the fragmented text sample, by storing a value of [0] in the sample length". Here, a flag indicating inclusion of a portion of the fragmented text sample in the fragment packet, and determination that the fragment packet contains a portion of the fragmented text sample may be allowed by using this flag may.

### (Modified example of character code information)

In the fourth embodiment, it has been described, "the character code of the text body is identified from the character code information, which is a one-bit flag". Here, the fragment packet may further store a byte order mark (BOM) contained in the text sample. For example, the BOM may be redundantly contained in all the fragment packets. The BOM may be stored at the start of the text body included in the fragment packet, or may be stored in a storage area provided in the fragment header.

Here, since the BOM has a variable length (0 byte, 2 bytes or 4 bytes), information describing the data length of the BOM may be further provided in the case of providing the storage region in the fragment header. Also in the case of storing the BOM at the start of the text body, the BOM located at the start of the text can be more reliably determined by describing the data length of the BOM in the fragment header.

### (3) <Data reproduction apparatus and data reproduction method>

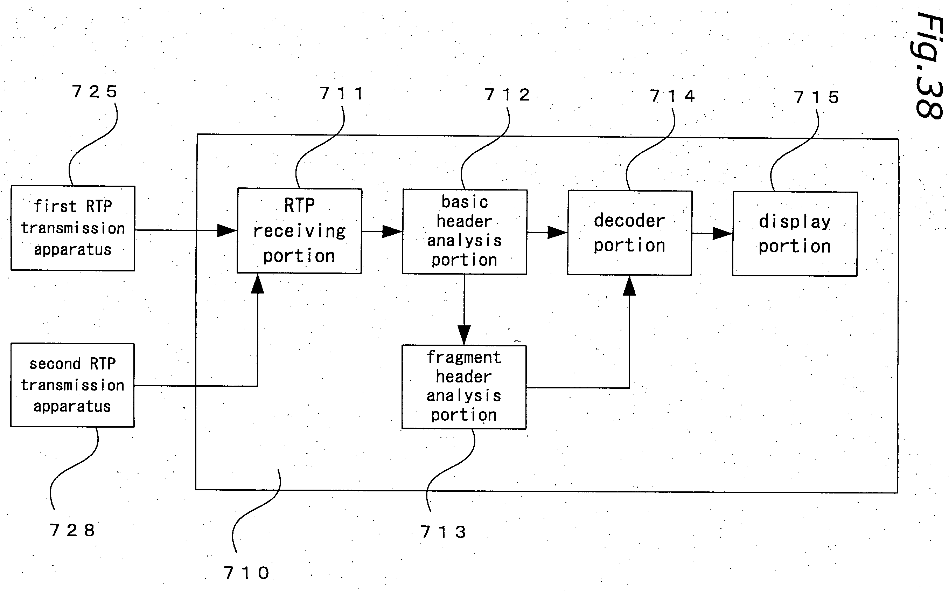

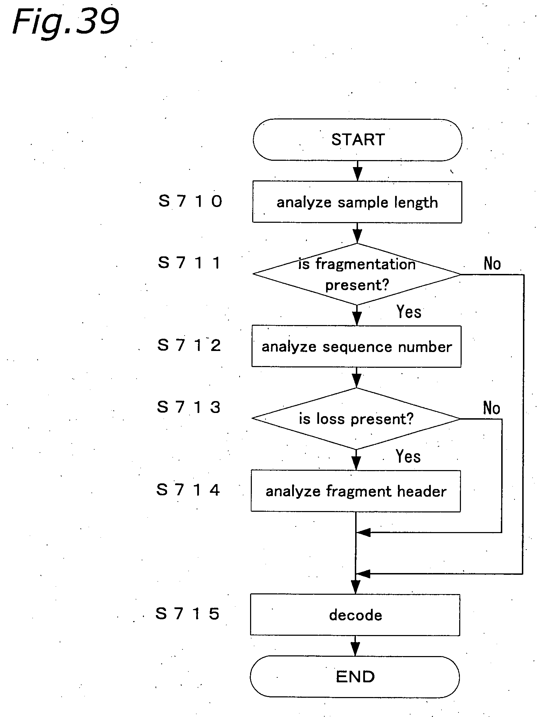

A data reproduction apparatus and a data reproduction method for reproducing an RTP packet having the above-described data structure are described with reference to FIGS. 38 and 39.

### (i) Data reproduction apparatus

FIG. 38 shows a block diagram of a data reproduction apparatus 710 for reproducing an RTP packet having the data structure described above under (2) <Data structure of RTP packet>.

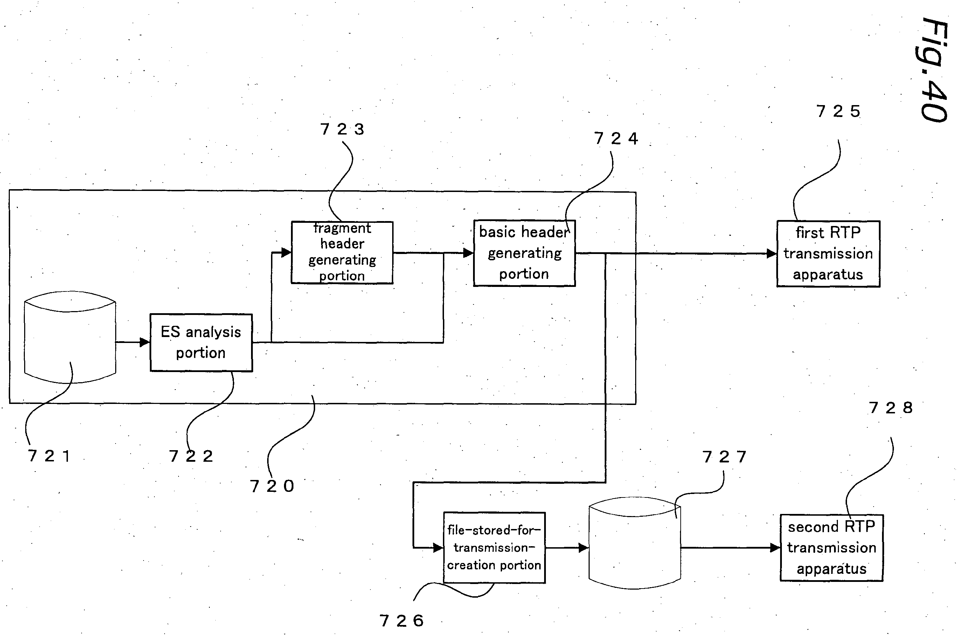

The data reproduction apparatus 710 includes an RTP receiving portion 711, a basic header analysis portion 712, a fragment header analysis portion 713, a decoder portion 714 and a display portion 715. The data reproduction apparatus 710 is an apparatus such as a computer, a mobile phone or a PDA (personal digital assistant) that carries out reproduction of Timed Text based on RTP packets transmitted from RTP transmission apparatuses 725 and 728 (see FIG. 40) that will be described later.

The RTP receiving portion 711 receives RTP packets sent from the RTP transmission apparatuses 725 and 728, and temporarily stores them in the basic header analysis portion 712.

The basic header analysis portion 712 obtains, for example, sequence numbers, time stamps and marker bits from the RTP headers of the stored RTP packets. The basic header analysis portion 712 also obtains the sample length values from the sample headers of the stored RTP packets. Based on the sequence numbers, the basic header analysis portion 712 determines the presence of any RTP packet that has been lost in the middle of transmission. Additionally, the basic header analysis portion 712 determines whether the RTP packets contain fragmented text samples, based on the sample length values. Furthermore, the basic header analysis portion 712 transmits the RTP packets to the decoder portion 714, in accordance with the time stamps.

Here, if any of a plurality of RTP packets containing portions of a single fragmented text sample has been lost in the middle of transmission, then the basic header analysis portion 712 transmits that RTP packet to the fragment header analysis portion 713.

The fragment header analysis portion 713 analyzes the fragment headers of the obtained RTP packets. That is, it obtains, from the fragment headers having the structure described in FIG. 37, information such as the text indicator, the character code information, the modifier pointer, the character offset, the box fragmentation flag, the sync offset, the extension byte and the atom type. Since these information sets have been described above under (2) <Data structure of RTP packet>, the description has been omitted.

The decoder portion 714 decodes the payload portions of the RTP packets, whose fragment headers have been analyzed, based on a result of analysis by the fragment header analysis portion 713. The decoded payload portions are displayed with the display portion 715.

With this data reproduction apparatus 710, when any of a plurality of RTP packets containing portions of a single fragmented text sample has been lost in the middle of transmission, it is possible to carry out reproduction of the payload portions of obtained RTP packets, based on the information included in the fragment headers of the obtained RTP packets.

### (ii) Data reproduction method

FIG. 39 shows a flowchart illustrating a data reproduction method for reproducing an RTP packet having the data structure described above under (2) <Data structure of RTP packet>.

When an RTP packet is received, the RTP header and the sample header of the RTP packet are analyzed. First, the sample length value included in the sample header is analyzed (step 5710), and it is determined whether that RTP packet contains any fragmented text sample (step S711).

If it is determined that the RTP packet does not contain any fragmented text sample, that is, if it is determined that the RTP packet contains the whole of a text sample, the RTP packet is decoded (step S715).

On the other hand, if it is determined that the RTP packet contains fragmented text samples, based on the sequence number included in the RTP header of the RTP packet (step S712), the presence or absence of any packet that has been lost in the middle of transmission is determined, (step S713). If it is determined that there is no packet that has been lost in the middle of transmission, a plurality of RTP packets containing fragmented text samples are decoded at once (step S715).

If it is determined that there is any packet that has been lost in the middle of transmission, the fragment header of each of the RTP packets is analyzed, then information necessary for reproduction of the fragmented text sample included in each of the RTP packets is obtained (step S714), and each of the RTP packet is decoded based on the obtained information (step S715).

With this data reproduction method, when any of a plurality of RTP packets containing portions of a single fragmented text sample has been lost in the middle of transmission, it is possible to carry out reproduction of the payload portions of obtained RTP packets, based on the information included in the fragment headers of the obtained RTP packets.

### (4) <Data multiplexing apparatus and data multiplexing method>

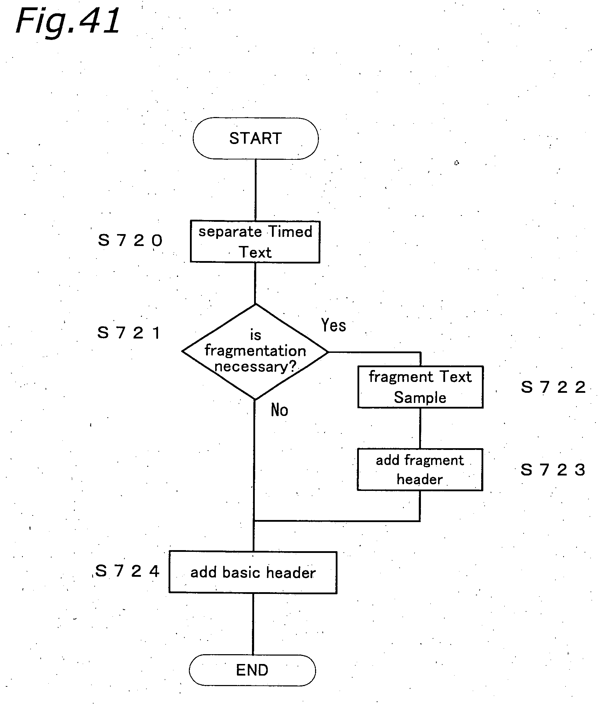

A data multiplexing apparatus and a data multiplexing method for generating an RTP packet having the data structure described above under (2) <Data structure of RTP packet> are described with reference to FIGS. 40 and 41.

### (i) Data multiplexing apparatus

FIG. 40 shows a block diagram of a data multiplexing apparatus 720 for generating an RTP packet having the data structure described above under (2) <Data structure of RTP packet>.

The data multiplexing apparatus 720 is made up of a storage portion 721 that stores Timed Text, an ES analysis portion 722 that obtains information necessary for multiplexing by analyzing Timed Text, a fragment header generating portion 723 that performs fragmentation and generates a fragment header, and a basic header generating portion 724 that generates basic headers.

The storage portion 721 stores media data, for example, in an MP4 file format (see FIG. 55). Furthermore, the storage portion 721 has the detailed information relating to the stored file. The ES analysis portion 722 obtains, from the storage portion 721, track headers, text samples, sample descriptions and sample tables. Based on the size of the text samples, it estimates the size of the RTP packet in the case of not performing fragmentation. When the estimated size exceeds the target size, it determines to carry out fragmentation of the text sample. If it determines to carry out fragmentation, then it transmits the text samples to the fragment header generating portion 723.

The fragment header generating portion 723 fragments the obtained text samples such that the size of the RTP packet approximates to the target value. Furthermore, it stores, in the fragment header, information necessary for reproduction of the fragmented text samples, and adds this to the fragmented text samples. A plurality of pairs of the fragment headers and the fragmented text samples are transmitted to the basic header generating portion 724. Here, the fragment header has, for example, the structure shown in FIG. 37; and includes information that is dependent on the content of the text samples.

The basic header generating portion 724 adds basic headers to unfragmented text samples and the fragmented text samples to create RTP packets.

Here, the basic headers refer to the RTP header and the sample header (see FIG. 26). In the case of the basic headers added to the fragmented text samples, the sample length value in the sample header stores, for example, a value of [0]. Thus, it is indicated that an RTP packet including that basic header contains a fragmented text sample. Furthermore, in the case of the basic headers added to the text sample at the tailing end of the unfragmented text samples and the fragmented text samples, the marker bit in the RTP header stores, for example, a value of [1]. On the other hand, in the case of the basic headers added to the remaining fragmented text samples, the marker bit in the RTP header stores, for example, a value of [0].

The RTP packet generated with the basic header generating portion 724 is sent to the RTP transmission apparatus 725, and further transmitted to the data reproduction apparatus 710 (see FIG. 38). Alternatively, it is sent to a file-stored-for-transmission-creation portion 726. The file-stored-for-transmission-creation portion 726 creates a server stored file for transmission, and stores it in a storage means 727. The RTP transmission apparatus 728 analyzes the server stored file, converts it to an RTP packet, and transmits the RTP packet to the data reproduction apparatus 710 (see FIG. 38).

### (ii) Data multiplexing method

FIG. 41 shows a flowchart illustrating a data multiplexing method for generating an RTP packet having the data structure as described above under (2) <Data structure of RTP packet>.

Timed Text that has been input is separated into a track header, a sample description, a sample table and text samples (step S720). Based on the size of the text samples, the size of the RTP packet in the case of not performing fragmentation is estimated, and it is determined whether the estimated size exceeds a target size (step S721). If it is determined that the estimated size does not exceed the target size, then the text samples will not be fragmented, and basic headers are added to the text samples to create RTP packets (step S724).

If it is determined that the estimated size exceeds the target size, then fragmentation process of the text samples is carried out (step S722). The fragmentation process is performed such that the size approximates to the target size and that even if a portion of the RTP packets containing the fragmented text samples has been lost, the remaining content of the RTP packets can be displayed. In addition, a fragment header is added to the fragmented text samples (step S723). The fragment header stores information necessary for reproduction of the fragmented text samples. Furthermore, basic headers are added to the fragmented text samples, to which the fragment header has been added (step S724).

Here, the basic headers refer to the RTP header and the sample header (see FIG. 26). In the case of the basic headers added to the fragmented text samples, the sample length value in the sample header stores, for example, a value of [0]. Thus, it is indicated that an RTP packet including that basic header contains fragmented text samples. Furthermore, in the case of the basic headers added to the text sample at the tailing end of the unfragmented text samples and the fragmented text samples, the marker bit in the RTP header stores, for example, a value of [1]. On the other hand, in the case of the basic headers added to the remaining fragmented text samples, the marker bit in the RTP header stores, for example, a value of [0].

### Fifth embodiment

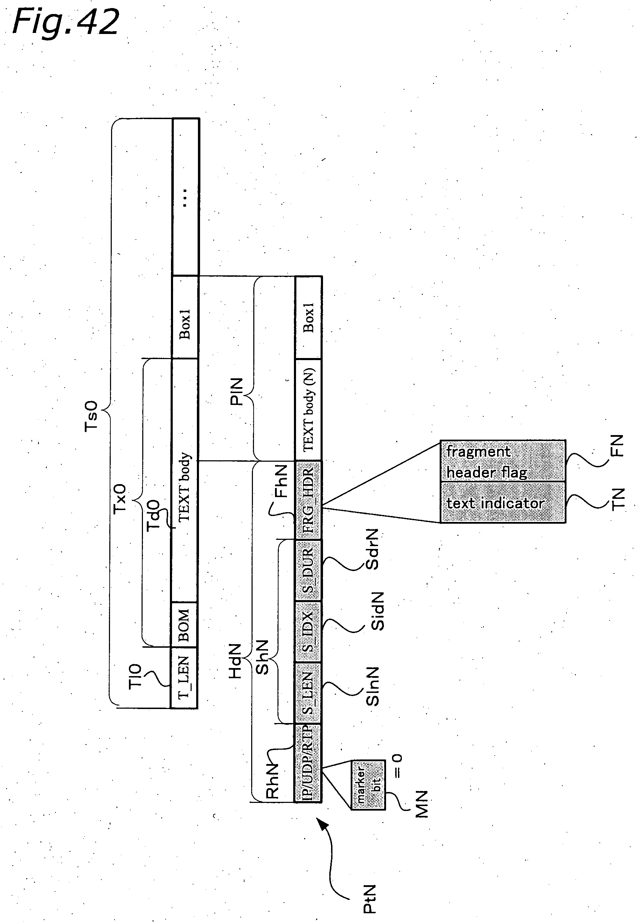

A packet data structure, a data reproduction apparatus and a data multiplexing apparatus according to a fifth embodiment of the present invention are described with reference to FIGS. 42 to 49. In addition, a data reproduction method and a data multiplexing method are described.

This embodiment is described in the order: (1) a packet data structure having flag information that minimizes the overhead of the fragment header; (2) a packet data structure that enables identification of the fragmentation state of the text sample; (3) a data reproduction apparatus and a data reproduction method for a packet having any of these packet data structures; (4) a data multiplexing apparatus and a data multiplexing method for a packet having any of these packet data structures. It should be noted that the terms used in this embodiment have the same definitions as in the fourth embodiment, unless otherwise defined.

### (1) <Packet data structure having flag information that minimize overhead of fragment header>

In the case of the fragment header FhN described with reference to FIG. 37, it is necessary to always secure data areas for storing five information sets, namely, the text indicator TN, the character code information UN, the character offset length SlN, the modifier pointer length MlN and the box fragmentation flag BN.

However, for example, when a payload portion does not contain any text body, the character code information and the character offset length are information sets that are not necessary for the fragment header added to that payload portion, resulting in a waste of the secured data areas.

Therefore, a one-bit fragment header flag is defined, in order to minimize the overhead of the fragment header. The fragment header flag indicates that the fragment header contains one of the character code information, the character offset length, the modifier pointer length and the box fragmentation flag. This fragment header flag and the text indicator are stored as essential information sets of the fragment header.

### (Information stored in fragment header)

The structure of the fragment header FhN including a fragment header flag FN and a text indicator TN is described with reference to FIG. 42. In FIG. 42, a fragment packet PtN includes a header portion HdN and a payload portion PlN. The header portion HdN contains an RTP header RhN, a sample header ShN and the fragment header FhN. Furthermore, the payload portion PlN contains a portion of a text sample Ts0.

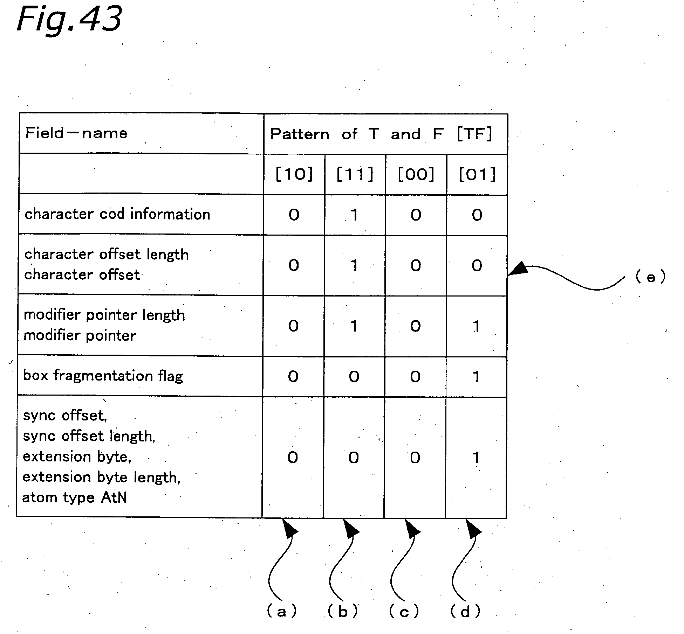

Here, the fragment header FhN contains the above-described text indicator TN and fragment header flag FN. Information included in the remaining areas of the fragment header FhN is determined as shown in FIG. 43 by the combination of the text indicator TN and the fragment header flag FN. Here, the information included in the remaining areas of the fragment header FhN is any of the information sets (a) to (d) shown under (iii) Outline of fragment header in (2) <Data structure of RTP packet> in Fourth embodiment.

FIG. 43 shows the information included in the fragment header FhN shown in FIG. 42, in relation to the combinations of the text indicator TN and the fragment header flag FN. This relationship may be logically derived from the above-described definitions of the text indicator TN and the fragment header flag FN, based on the assumption that the start of the text sample Ts0 is constituted by the text length Tl0 and the text Tx0. It should be noted that in FIG. 43 the text indicator TN is denoted as T and the fragment header flag FN as F.

When the fragment header flag FN has a value of [0], the fragment header FhN stores only 2 bits consisting of the text indicator TN and the fragment header flag FN (see rows (a) and (c) in FIG. 43). It should be noted that when a column has a value of [0], it indicates that the information is not present.

When the text indicator TN has a value of [1] and the fragment header flag FN has a value of [1], the fragment header FhN stores the character code information, the character offset length, the modifier pointer length, the character offset and the modifier pointer (see row (b) in FIG. 43).

When the text indicator TN has a value of [0] and the fragment header flag FN has a value of [1], the fragment header FhN stores the modifier pointer length, the modifier pointer, the box fragmentation flag, the sync offset, the sync offset length, the extension byte, the extension byte length and the atom type (see row (d) in FIG. 43).

Thus, for example, it is possible to obtain the values of the text indicator TN and the fragment header flag FN, and to analyze the' information contained in the fragment header FhN in a data reproduction apparatus that has obtained the fragment packet PtN. That is, it is not necessary to secure data areas for unnecessary information in the fragment header FhN, so that the bit efficiency of the transmission data is improved.

### (Information included in sample header)

Furthermore, it is possible to represent the information included in the sample headerShN shown in FIG. 42 by the combination of the text indicator TN and the fragment header flag FN.

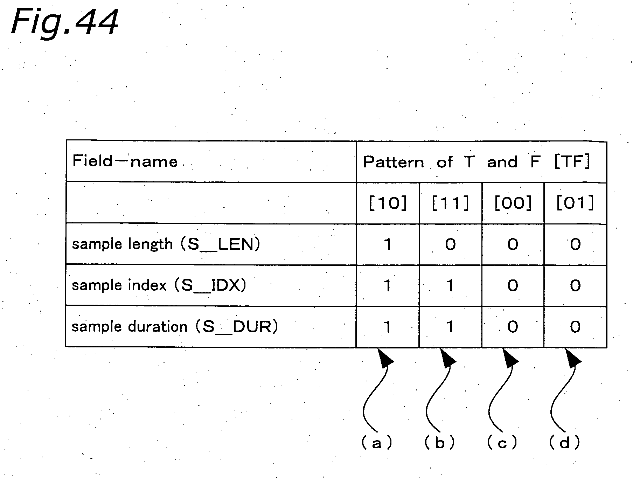

FIG. 44 shows the relationship between the combination of the text indicator TN and the fragment header flag FN, and the information included in the sample header ShN. This relationship may be logically derived from the above-described definitions of the text indicator TN and the fragment header flag FN.

When the text indicator TN has a value of [0], the fragment packet PtN does not include the sample header ShN (see rows (c) and (d) in FIG. 44).

When the text indicator TN has a value of [1] and the fragment header flag FN has a value of [0], the sample header ShN stores the sample length SlnN, the sample index SidN and the sample duration SdrN (see row (a) in FIG. 44).

When text indicator TN a value of [1] and the fragment header flag FN a value of [1], the sample header ShN stores the sample index SidN and the sample duration SdrN (see row (b) in FIG. 44).

Thus, for example, in a data reproduction apparatus that has obtained the fragment packet PtN, it is possible to obtain the values of the text indicator TN and the fragment header flag FN, and to analyze the information contained in the sample header ShN. That is, it is not necessary to secure data areas for unnecessary information in the sample header ShN, so that the bit efficiency of the transmission data is improved.

Although it has been described that the information included in the remaining areas of the fragment header FhN is any of the information sets (a) to (d) shown under (iii) Outline of fragment header in (2) <Data structure of RTP packet> in Fourth embodiment, there may be a case where any of the information sets shown in (a) to (d) may not be included as standard. In that case, FIG. 43 may be used, except for the portion related to the information that is not included as standard in the fragment header.

For example, in the case of fragmenting a text body, the character offset is provided to the fragment header to allow determination that from what character the fragment packet contains the text body. However, depending on the data multiplexing apparatus that generates the fragment packet, it may not be possible to count the number of characters. In this case, even through the text body is fragmented, no character offset is provided. In this case, reproduction is carried out in a data reproduction apparatus that has obtained the fragment packet, without considering the information of line (e) in FIG. 43.

### (2) Packet data structure that enables identification of fragmentation state of text sample

Generally, in a situation in which there is no loss in transmission of fragment packets, the fragmentation state of the text sample can be identified by monitoring the sequence number, time stamp and marker bit of the RTP header. The same time stamp is provided to fragment packets containing portions of the same fragmented text sample. Furthermore, the marker bit allows determination of the last packet of the fragment packets containing portions of the same fragmented text sample by storing, for example, a value of [1].

However, when loss has occurred in a fragment packet, it is not possible to determine that the fragment packet is the first fragment packet only by monitoring the sequence number, the time stamp and the marker bit, posing a problem to normal decoding. That is, when a plurality of packets have been lost at a transition between the text samples (a transition between the time stamps), the packet having a marker bit value of [1] has been lost, and it is therefore not possible to determine the end of the previous text sample.

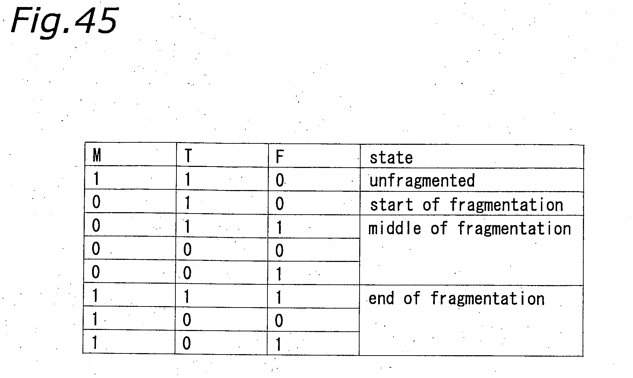

Therefore, the fragmentation state of the fragmented text sample Ts0 included in the fragment packets PtN as shown in FIG. 45, by combining the marker bit MN included in the RTP header RhN (see FIG. 42), in addition to the text indicator TN and the fragment header flag FN, defined above under (1) <Packet data structure having flag information that minimizes overhead of fragmented header>.

Here, it is assumed that the start of the text sample Ts0 is constituted by the text length Tl0 and the text Tx0, and that the fragment header contains nothing other than the text indicator and the fragment header flag in the fragment packet containing the start of the text sample. Furthermore, the marker bit MN is defined to indicate that the fragment packet PtN contains the tailing end of the text sample Ts0. It should be noted that in FIG. 45, the text indicator TN is denoted as T, the fragment header flag FN as F, and the marker bit MN as M.

Thus, it is possible to determine the fragmentation state of the text sample Ts0 by using the text indicator TN, the fragment header flag MN and the marker bit MN. Accordingly, for example, in a data reproduction apparatus that has obtained the fragment packet PtN, it is possible not only to determine that the fragment packet PtN is at the end of fragmentation (e.g., when the marker bit MN has a value of [1]), to start decoding, but also to determine that the fragment packet is at the start of fragmentation (e.g., when the text indicator TN has a value of [1] and the fragment header flag MN has a value of [0]).

### (3) <Data reproduction apparatus and data reproduction method>

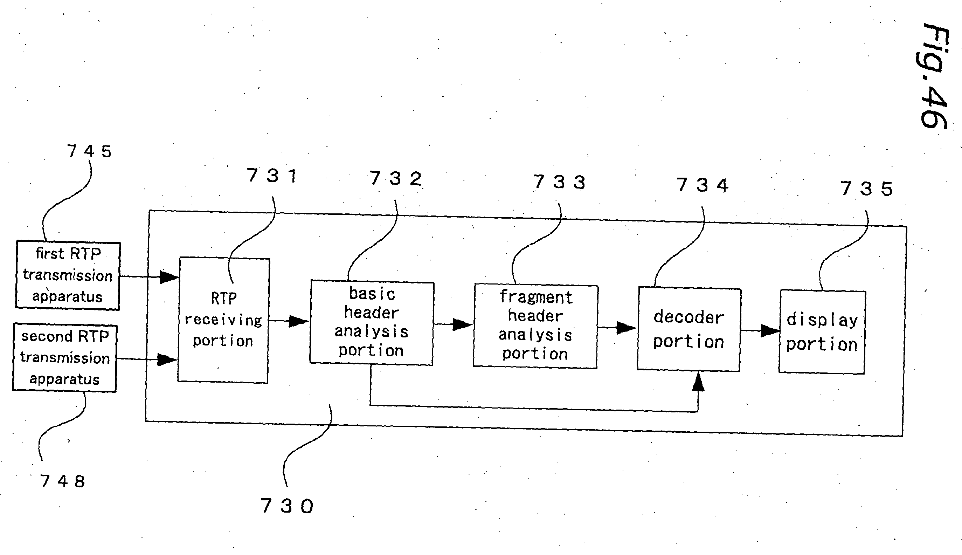

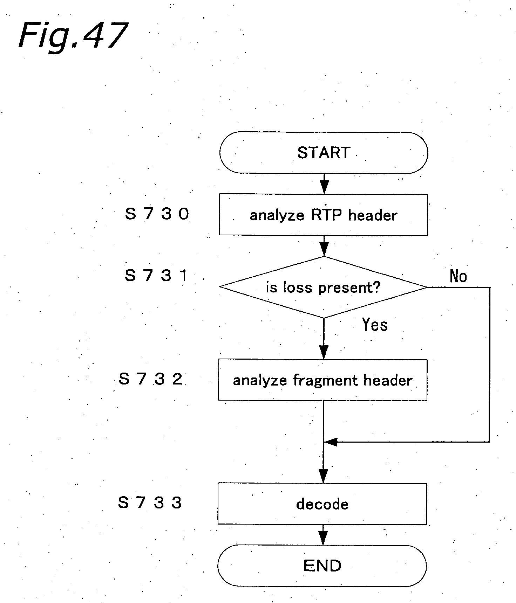

A data reproduction apparatus and a data reproduction method for reproducing an RTP packet having the above-described data structure are described with reference to FIGS. 46 and 47.

### (i) Data reproduction apparatus

FIG. 46 shows a block diagram of a data reproduction apparatus 730 for reproducing the RTP packet (see FIG. 42) having the data structure described above under (1) or (2).

Since the data reproduction apparatus 730 has substantially the same structure as the data reproduction apparatus 710 shown in FIG. 38, the description is focused on a fragment header analysis portion 733, which is the characterizing portion.

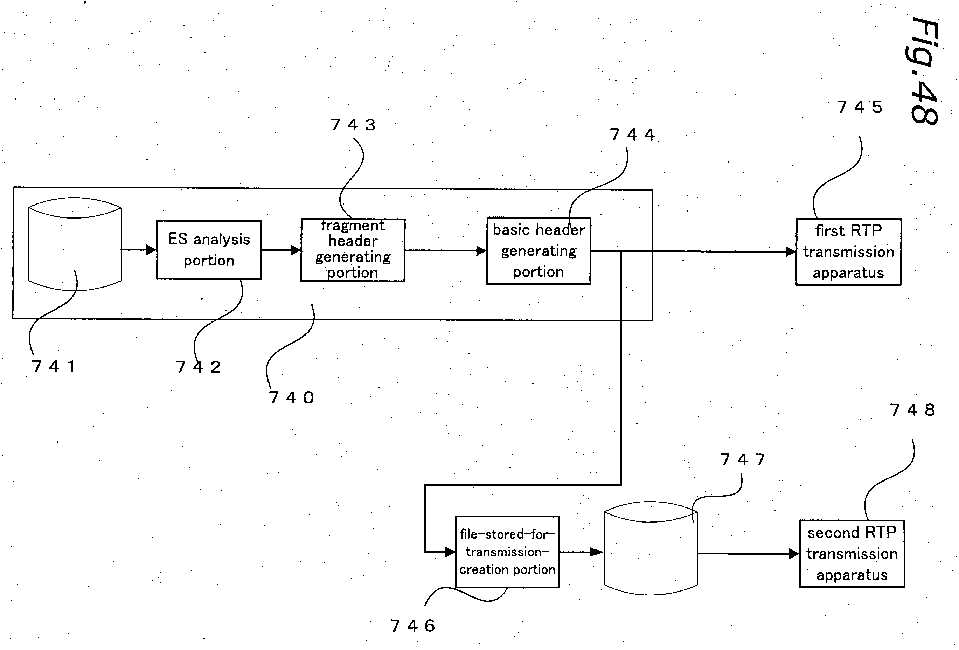

The data reproduction apparatus 730 includes an RTP receiving portion 731, a basic header analysis portion 732, a fragment header analysis portion 733, a decoder portion 734 and a display portion 735. The data reproduction apparatus 730 is an apparatus such as a computer, a mobile phone or a PDA (personal digital assistant) that carries out reproduction of Timed Text based on RTP packets transmitted from RTP transmission apparatuses 745 and 748 (see FIG. 48) that will be described later.

The RTP receiving portion 731 receives RTP packets sent from the RTP transmission apparatuses 745 and 748, and temporarily stores them in the basic header analysis portion 732.

The basic header analysis portion 732 determines the presence of any RTP packet that has been lost in the middle of transmission based on the sequence numbers.

Here, if any of a plurality of RTP packets containing portions of a given fragmented text sample has been lost in the middle of transmission, then the basic header analysis portion 732 transmits the remaining RTP packets to the fragment header analysis portion 733.

The fragment header analysis portion 733 analyzes the fragment headers of the obtained RTP packets, which have not been lost. That is, the fragment header analysis portion 733 obtains the values of the text indicator and the fragment header flag, which are essential information of the fragment header. Furthermore, based on the values, it determines the presence or absence of information of the fragment header and the sample header shown in FIGS. 43 and 44, and obtains the respective information sets.

Further, the fragment header analysis portion 733 determines the fragmentation state of the text sample shown in FIG. 45 based on the combination of the values of the text indicator, the fragment header flag and the marker bit.

The decoder portion 734 determines the timing of the decoding based on the information of the fragment header and the fragmentation state of the text sample that has been obtained by the fragment header analysis portion 733.

Additionally, when the RTP packets have been transmitted without any loss, the RTP packets are analyzed by the basic header analysis portion 732, then transmitted to the decoder portion 734 to be decoded.

### (ii) Data reproduction method

FIG. 47 shows a flowchart illustrating a data reproduction method for reproducing an RTP packet having the data structure described above under (1) or (2).

When an RTP packet is received, the RTP header of the RTP packet is analyzed (step S730), and the presence or absence of any packet that has been lost is determined based on the sequence number (step S731). At the same time, the marker bit is obtained.

If it is determined that there is no packet that has been lost, the RTP packet is decoded (step S733).

If it is determined that there is any loss in the RTP packet, the fragment header is analyzed. Specifically, the values of the text indicator and the fragment header flag are obtained, and the presence or absence of the information of the fragment header shown in FIGS. 43 and 44 is determined based on the values. Furthermore, the respective information sets are obtained (step S732). At the same time, the fragmentation state of the text sample shown in FIG. 45 is also determined based on the combination of the values of the text indicator, the fragment header flag and the marker bit.

Based on the information sets obtained in the step S732, the RTP packet is decoded (step S733).

### (4) <Data multiplexing apparatus and data multiplexing method>

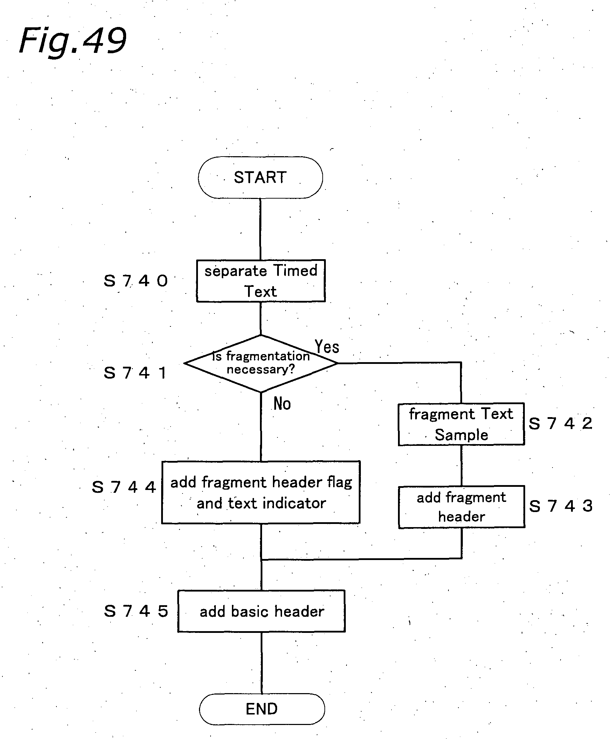

A data multiplexing apparatus and a data multiplexing method for creating an RTP packet having the above-described data structure are described with reference to FIGS. 48 and 49.

### (i) Data multiplexing apparatus

FIG. 48 shows a block diagram of a data multiplexing apparatus 740 for creating an RTP packet having the data structure described above under (1) or (2).

The data multiplexing apparatus 740 is made up of a storage portion 741 that stores Timed Text, an ES analysis portion 742 that obtains information necessary for multiplexing by analyzing Timed Text, a fragment header generating portion 743 that performs fragmentation and generated a fragment header, and a basic header generating portion 744 that generates basic headers.

The storage portion 741 stores media data, for example, in an MP4 file format (see FIG. 55). Furthermore, the storage portion 741 has the detailed information relating to the stored file. The ES analysis portion 742 obtains, from the storage portion 741, a track header, text samples, a sample description and a sample table, and the text samples are transmitted to the fragment header generating portion 743.

The fragment header generating portion 743 fragments the obtained text samples such that size of the RTP packet approximates to the target value. It should be noted that if the size of the RTP packet does not exceed the target value, then the fragmentation will not be carried out. The fragment header generating portion 743 also stores information necessary for reproduction of the fragmented text samples in the fragment headers, and adds the fragmented headers to the fragmented text samples. Furthermore, appropriate values of the fragment header flag and the text indicator are stored. On the other hand, appropriate values of the fragment header flag and the text indicator are added also to the unfragmented text samples. These information sets are transmitted to the basic header creation portion 744.

The basic header generating portion 744 adds basic headers to the unfragmented text samples and the fragmented text samples to creates RTP packets. Here, the basic headers refer to the RTP header and the sample header (see FIG. 26). It should be noted that the sample header is added based on the stored fragment header flag and text indicator (see FIG. 44). Furthermore, in the basic headers, the marker bit stores a value suitable for the fragmentation state in the text samples included in the payload portion of the RTP packet.

The RTP packet created with the basic header generating portion 744 is sent to the RTP transmission apparatus 745, and further transmitted to the data reproduction apparatus 730 (see FIG. 46). Alternatively, it is sent to a file-stored-for-transmission-creation portion 746. The file-stored-for-transmission-creation portion 746 creates a server stored file for transmission, and stores it to a storage means 747. The RTP transmission apparatus 748 analyzes the server stored file, converts it to an RTP packet, and transmits the RTP packet to the data reproduction apparatus 730 (see FIG. 46).

### (ii) Data multiplexing method

FIG. 49 shows a flowchart illustrating a data multiplexing method for creating an RTP packet having the data structure as described above under (1) or (2).

Timed Text that has been input is separated into a track header, a sample description, a sample table and text samples (step S740).

Based on the size of the text samples, the size of the RTP packet in the case of not performing fragmentation is estimated, and if it is determined the estimated size exceeds the target size (step S741), then fragmentation process of the text samples is carried out (step S742). The fragmentation process is performed at such positions that the size approximates to the target size and that even if a portion of the RTP packets containing the fragmented text samples has been lost, the remaining content of the RTP packet can be displayed. In addition, a fragment header is added to the fragmented text samples (step S743). The fragment header stores information necessary for reproduction of the fragmented text samples, the fragment header flag and the text indicator. Basic headers are added to the fragmented text samples, to which the fragment header has been added (step 5745).

On the other hand, in the case of not performing the fragmentation, the fragment header flag and the text indicator are added to the text samples (step S744). Furthermore, the basic headers are added to the text samples (step 5745).

Here, the basic headers refer to the RTP header and the sample header.

### Appendices relating to fourth embodiment and fifth embodiment

Content of appendices

### Appendix 1

A packet data structure for transmitting reproduction data containing text data provided with modifying information and successively reproducing the reproduction data with a reproduction apparatus, comprising:
a payload portion including fragment reproduction data that is a fragmented portion of the reproduction data; and
a header portion including fragment presence information indicating that the payload portion contains the fragment reproduction data, and fragment reproduction data-reproduction information that is necessary for reproduction of the fragment reproduction data.

### Appendix 2

A packet data structure for transmitting reproduction data containing text data provided with modifying information and successively reproducing the reproduction data with a reproduction apparatus, comprising:
a payload portion including fragment reproduction data that is a fragmented portion of the reproduction data; and
a header portion including character code information for identifying a character code of a fragmented portion of the text data contained in the fragment reproduction data.

### Appendix 3

The packet data structure according to appendix 2,
wherein the header portion further includes first data length information indicating a data length of the character cod information.

### Appendix 4

The packet data structure according to appendix 2,
wherein the character code information is a one-bit flag for discriminating between two kinds of the character codes.

### Appendix 5

A packet data structure for transmitting reproduction data containing text data provided with modifying information and successively reproducing the reproduction data with a reproduction apparatus, comprising:
a payload portion including fragment reproduction data that is a fragmented portion of the reproduction data; and
a header portion including first location information that is location information of the modifying information in the fragment reproduction data.

### Appendix 6

The packet data structure according to appendix 5,
wherein the fragment reproduction data contains at least a portion of the text data and the modifying information that is placed subsequently to at least a portion of the text data, and
wherein the first location information is a data length of the text data contained in the fragment reproduction data.

### Appendix 7

The packet data structure according to appendix 5,
wherein the modifying information contains a plurality of partial modifying information,
wherein the fragment reproduction data contains a fragmented portion of first partial modifying information, and second partial modifying information that is placed subsequently to the fragmented portion of the first partial modifying information, and
wherein the first location information is a data length of the fragmented portion of the first partial modifying information.

### Appendix 8

The packet data structure according to appendix 6 or 7,
wherein the header portion further includes text presence information indicating that the fragment reproduction data contains at least a portion of the text data.

### Appendix 9

A packet data structure for transmitting reproduction data containing text data provided with modifying information and successively reproducing the reproduction data with a reproduction apparatus, comprising:
a payload portion including fragment reproduction data that is a fragmented portion of the reproduction data; and
a header portion including second location information that is location information, in the text data, of a fragment text data that is a fragmented portion of the text data contained in the fragment reproduction data.

### Appendix 10

The packet data structure according to appendix 9,
wherein the second location information contains location information of the fragment text data in units of the number of characters in the text.

### Appendix 11

A packet data structure for transmitting reproduction data containing text data provided with modifying information and successively reproducing the reproduction data with a reproduction apparatus, comprising:
a payload portion including fragment reproduction data that is a fragmented portion of the reproduction data; and
a header portion including modification type information that is information indicating a modification type of partial modifying information contained in the modifying information and that is not contained in the fragment reproduction data.

### Appendix 12

A packet data structure for transmitting reproduction data containing text data provided with modifying information and successively reproducing the reproduction data with a reproduction apparatus, comprising:
a payload portion including fragment reproduction data that is a fragmented portion of the reproduction data; and
a header portion including third location information that is unit modifying information constituting partial modifying information contained in the modifying information and that is location information of first unit modifying information contained in the fragment reproduction data.

### Appendix 13

The packet data structure according to appendix 12,
wherein the header portion further includes second data length information indicating a data length of the third location information.

### Appendix 14

A packet data structure for transmitting reproduction data containing text data provided with modifying information and successively reproducing the reproduction data with a reproduction apparatus, comprising:
a payload portion including fragment reproduction data that is a fragmented portion of the reproduction data; and
a header portion including second unit modifying information that is unit modifying information constituting partial modifying information contained in the modifying information and that is not contained in the fragment reproduction data.

### Appendix 15

The packet data structure according to appendix 14,
wherein the header portion further includes third data length information indicating a data length of the second unit modifying information.

### Appendix 16

A packet data structure for transmitting reproduction data containing text data provided with modifying information and successively reproducing the reproduction data with a reproduction apparatus, comprising:
a payload portion including fragment reproduction data that is a fragmented portion of the reproduction data; and
a header portion that is added to the payload portion and that includes text presence information and reproduction information-presence information,
wherein the text presence information indicates that the fragment reproduction data contains at least a portion of the text data, and
wherein the reproduction information-presence information indicates that the header portion contains fragment reproduction data-reproduction information that is necessary for reproduction of the fragment reproduction data.

### Appendix 17

The packet data structure according to appendix 16,
wherein the header portion further includes fragment reproduction data-location information indicating that the fragment reproduction data is data that is located at the end of the reproduction data.

### Appendix 18

A data reproduction apparatus for reproducing reproduction data from a packet having the packet data structure according to appendix 1, comprising:
a fragmentation determining means for determining, from the fragment presence information, that the payload portion contains the fragment reproduction data; and
a data reproducing means for reproducing the fragment reproduction data from the fragment reproduction data-reproduction information, based on a determination result of the fragmentation determining means.

### Appendix 19

A data reproduction apparatus for reproducing reproduction data from a packet having the packet data structure according to appendix 2, comprising:
a character code determining means for determining, from the character code information, a character code of a fragmented portion of the text data contained in the fragment reproduction data; and
a data reproducing means for reproducing the fragment reproduction data based on a determination result of the character code determining means.

### Appendix 20

A data reproduction apparatus for reproducing reproduction data from a packet having the packet data structure according to appendix 5, comprising:
a first location information-obtaining means for obtaining, from the first location information, location information of the modifying information in the fragment reproduction data; and
a data reproducing means for reproducing the fragment reproduction data based on the location information obtained by the first location information-obtaining means.

### Appendix 21

A data reproduction apparatus for reproducing reproduction data from a packet having the packet data structure according to appendix 9, comprising:
a second location information-obtaining means for obtaining, from the second location information, location information, in the text data, of fragment text data that is a fragmented portion of the text data contained in the fragment reproduction data; and
a data reproducing means for reproducing the fragment reproduction data based on the location information obtained by the second location information-obtaining means.

### Appendix 22

A data reproduction apparatus for reproducing reproduction data from a packet having the packet data structure according to appendix 11, comprising:
a modification type obtaining means for obtaining, from the modification type information, a modification type of the partial modifying information contained in the fragment reproduction data; and
a data reproducing means for reproducing the fragment reproduction data based on the modification type obtained by the modification type obtaining means.

### Appendix 23

A data reproduction apparatus for reproducing reproduction data from a packet having the packet data structure according to appendix 12, comprising:
a first unit modifying information-obtaining means for obtaining the first unit modifying information from the third location information; and
a data reproducing means for reproducing the reproduction data based on the first unit modifying information obtained by the first unit modifying information-obtaining means.

### Appendix 24

A data reproduction apparatus for reproducing reproduction data from a packet having the packet data structure according to appendix 14, comprising:
a second unit modifying information-obtaining means for obtaining the second unit modifying information; and
a data reproducing means for reproducing the reproduction data based on the second unit modifying information obtained by the second unit modifying information-obtaining means.

### Appendix 25

A data reproduction apparatus for reproducing reproduction data from a packet having the packet data structure according to appendix 16, comprising:
a reproduction information determining means for determining fragment reproduction data-reproduction information included in the fragment reproduction data, based on the text presence information and the reproduction information-presence information; and
a data reproducing means for reproducing the reproduction data based on a determination result of the reproduction information determining means.

### Appendix 26

A data reproduction apparatus for reproducing reproduction data' from a packet having the packet data structure according to appendix 17, comprising:
a fragmentation state determining means for determining a fragmentation state of the fragment reproduction data based on the text presence information, the reproduction information-presence information and the fragment reproduction data-location information; and
a reproduction control means for controlling reproduction of the fragment reproduction data based on a determination result of the fragmentation state determining means.

### Description of appendices

The packet data structure described in appendix 1 is a packet data structure for transmitting reproduction data containing text data provided with modifying information and successively reproducing the reproduction data with a reproduction apparatus, including: a payload portion; and a header portion. The payload portion includes fragment reproduction data that is a fragmented portion of the reproduction data. The header portion includes fragment presence information indicating that the payload portion contains the fragment reproduction data, and fragment reproduction data-reproduction information that is necessary for reproduction of the fragment reproduction data.

The reproduction data contains, for example, text samples in Timed Text (hereinafter, the same applies in this section). The fragment reproduction data-reproduction information is, for example, information that has been included in the information contained in the reproduction data necessary for reproduction and that is no longer contained in a portion of fragment reproduction data due to fragmentation of the reproduction data, or information that has been newly required for reproduction of fragment reproduction data because the reproduction data has been fragmented (hereinafter, the same applies in this section).

According to the packet data structure of the present invention, it is possible with the fragment presence information to identify that the reproduction data has been fragmented. Furthermore, it is possible with the fragment reproduction data-reproduction information to reproduce the fragment reproduction data of a newly obtained packet even when several packets have been lost in the middle of transmission.

The packet data structure described in appendix 2 is a packet data structure for transmitting reproduction data containing text data provided with modifying information and successively reproducing the reproduction data with a reproduction apparatus, including a payload portion; and a header portion. The payload portion includes fragment reproduction data that is a fragmented portion of the reproduction data. The header portion includes character code information for identifying a character code of a fragmented portion of the text data contained in the fragment reproduction data.

The text data includes, for example, a character code at the start portion, and a portion of the fragment reproduction data will not contain this character code due to fragmentation of the reproduction data. In Timed Text, the character code is encoded with UTF-8 or UTF-16 Big Endian of the Unicode standard. The character code is determined, for example, with a bit string called BOM (byte order mark).

According to the packet data structure of the present invention, the character code information for determining the character code of the fragment reproduction data is included in the header portion, so that it is possible to reproduce the fragment reproduction data in a normal character code even when the a packet including the character code of the text data contained in the reproduction data has been lost in the middle of transmission.

The packet data structure described in appendix 3 is the packet data structure according to appendix 2, wherein the header portion further includes first data length information indicating a data length of the character cod information.

The first data length information is a bit string for specifying the data length of the character code information, for example, as a byte length.

According to the packet data structure of the present invention, it is possible with the first data length information to use character code information having a variable length, and also to reliably determine the character code information.

The packet data structure described in appendix 4 is the packet data structure according to appendix 2, wherein the character code information is a one-bit flag for discriminating between two kinds of the character codes.

According to the packet data structure of the present invention, it is possible with the one-bit flag to determine which of UTF-8 or UTF-16 Big Endian, for example, is used to encode the fragment reproduction data.

The packet data structure described in appendix 5 is a packet data structure for transmitting reproduction data containing text data provided with modifying information and successively reproducing the reproduction data with a reproduction apparatus, including: a payload portion; and a header portion. The payload portion includes fragment reproduction data that is a fragmented portion of the reproduction data. The header portion includes first location information that is location information of the modifying information in the fragment reproduction data.

The first location information specifies the location of the modifying information, for example, as a byte length from the start of the payload portion.

According to the packet data structure of the present invention, it is possible to identify the modifying information in the fragment reproduction data, for example, even when a packet containing the data length of the text data included in text samples in Timed Text has been lost in the middle of transmission. Consequently, it is possible to reliably decode the modifying information, thus niaking it possible to prevent an incorrect text from being displayed due to confusion between the modifying information and the text data.

The packet data structure described in appendix 6 is the packet data structure according to appendix 5, wherein the fragment reproduction data contains at least a portion of the text data and the modifying information that is placed subsequently to at least a portion of the text data. Furthermore, the first location information is a data length of the text data contained in the fragment reproduction data.

The fragment reproduction data contains the text data from the start of the payload portion, and the data length is specified, for example, as a byte length.

According to the packet data structure of the present invention, it is possible to reliably decode the modifying information, thus making it possible to prevent an incorrect text from being displayed due to confusion between the modifying information and the text data.

The packet data structure described in appendix 7 is the packet data structure according to appendix 5, wherein the modifying information contains a plurality of partial modifying information. The fragment reproduction data contains a fragmented portion of first partial modifying information, and second partial modifying information that is placed subsequently to the fragmented portion of the first partial modifying information. The first location information is a data length of the fragmented portion of the first partial modifying information.

The fragmented first partial modifying information is placed from the start of the payload portion, and the data length is specified, for example, as a byte length.

According to the packet data structure of the present invention, it is possible to reliably decode the second partial modifying information.

The packet data structure described in appendix 8 is the packet data structure according to appendix 6 or 7, wherein the header portion further includes text presence information indicating that the fragment reproduction data contains at least a portion of the text data.

According to the packet data structure of the present invention, even if packets having the packet data structure according to appendices 6 and 7 are present together at the time of transmitting a plurality of reproduction data, it is possible to distinguish them by the presence or absence of the text data.

The packet data structure described in appendix 9 is a packet data structure for transmitting reproduction data containing text data provided with modifying information and successively reproducing the reproduction data with a reproduction apparatus, including: a payload portion; and a header portion. The payload portion includes fragment reproduction data that is a fragmented portion of the reproduction data. The header portion includes second location information that is location information, in the text data, of a fragment text data that is a fragmented portion of the text data contained in the fragment reproduction data.

The modifying information specifies the modification range of the text data, for example, in units of bytes or units of number characters of the text body. The second location information is, for example, information representing the start position of the fragment text data in the text data, for example, in units of bytes or in units of the number of characters of the text body.

According to the packet data structure of the present invention, it is possible with the second location information to determine the range of the fragment text data in which modification should be provided, thus making it possible to use the modifying effect for the fragment text data.

The packet data structure described in appendix 10 is the packet data structure according to appendix 9, wherein the second location information contains location information of the fragment text data in units of the number of characters in the text.

The modifying information specifies the modification range of the text data, for example, in units of the number of characters of the text body.

According to the packet data structure of the present invention, it is possible with the second location information to determine the range of the character string or the fragment text data to which modification should be provided, thus making it possible to use an modifying effect for the fragment text data.

The packet data structure described in appendix 11 is a packet data structure for transmitting reproduction data containing text data provided with modifying information and successively reproducing the reproduction data with a reproduction apparatus, including: a payload portion; and a header portion. The payload portion includes fragment reproduction data that is a fragmented portion of the reproduction data. The header portion includes modification type information that is information indicating a modification type of partial modifying information contained in the modifying information and that is not contained in the fragment reproduction data.

The partial modifying information is, for example, a modifier of a text sample in Timed Text.

According to the packet data structure of the present invention, for example, when the fragment reproduction data no longer contains the information indicating the modification type of the partial modifying information due to fragmentation of the reproduction data, it is possible with the modification type information included in the header portion to use the partial modifying information included in the fragment reproduction data.

The packet data structure described in appendix 12 is A packet data structure for transmitting reproduction data containing text data provided with modifying information and successively reproducing the reproduction data with a reproduction apparatus, including: a payload portion; and a header portion. The payload portion including fragment reproduction data that is a fragmented portion of the reproduction data. The header portion including third location information that is unit modifying information constituting partial modifying information contained in the modifying information and that is location information of first unit modifying information contained in the fragment reproduction data.

According to the packet data structure of the present invention, for example, when the fragment reproduction data contains a portion of the fragmented partial modifying information due to fragmentation of the reproduction data, it is possible to determine the first unit modifying information of the fragmented partial modifying information, thus making it possible to use an modifying effect for the text data.

The packet data structure described in appendix 13 is the packet data structure according to appendix 12, wherein the header portion further includes second data length information indicating a data length of the third location information.

According to the packet data structure of the present invention, it is possible to more reliably determine the third location information that is necessary to identify the first modifying information, thus making it possible to more reliably identify the first unit modifying information.

The packet data structure described in appendix 14 is a packet data structure for transmitting reproduction data containing text data provided with modifying information and successively reproducing the reproduction data with a reproduction apparatus, including: a payload portion; and a header portion. The payload portion includes fragment reproduction data that is a fragmented portion of the reproduction data. The header portion includes second unit modifying information that is unit modifying information constituting partial modifying information contained in the modifying information and that is not contained in the fragment reproduction data.

The second unit modifying information is, for example, information necessary to use the unit modifying information that has been contained in the unit modifying information contained in the fragment reproduction data and that is no longer contained in the fragment reproduction data due to fragmentation.

According to the packet data structure of the present invention, it is possible with the second unit modifying information to use the fragmented modifying information contained in the fragment reproduction data.

The packet data structure described in appendix 15 is the packet data structure according to appendix 14, wherein the header portion further includes third data length information indicating a data length of the second unit modifying information.

The second unit modifying information is information that is dependent of the modification type of the modifying information.

According to the packet data structure of the present invention, it is possible with the third data length information to more reliably identify the second unit modifying information.

The packet data structure described in appendix 16 is a packet data structure for transmitting reproduction data containing text data provided with modifying information and successively reproducing the reproduction data with a reproduction apparatus, including: a payload portion; and a header portion. The payload portion including fragment reproduction data that is a fragmented portion of the reproduction data. The header portion is added to the payload portion and includes text presence information and reproduction information-presence information. Furthermore, the text presence information indicates that the fragment reproduction data contains at least a portion of the text data. The reproduction information-presence information indicates that the header portion contains fragment reproduction data-reproduction information that is necessary for reproduction of the fragment reproduction data.

The fragment reproduction data-reproduction information is, for example, information for using the character code information contained in the fragment reproduction data or the modifying information contained in the fragment reproduction data.

The type of the information included in the fragment reproduction data-reproduction information is dependent on the text presence information. Accordingly, the type of the information included in the fragment reproduction data-reproduction information can be determined by the combination of the text presence information and the reproduction information-presence information.

According to the packet data structure of the present invention, it is possible to determine the information included in the portion reproduction data-reproduction information by the combination of the text presence information and the reproduction information-presence information, without allocating a bit string to all the information included in the fragment reproduction data-reproduction information. That is, it is possible to increase the bit efficiency, while improving packet loss tolerance.

The packet data structure described in appendix 17 is the packet data structure according to appendix 16, wherein the header portion further includes fragment reproduction data-location information indicating that the fragment reproduction data is data that is located at the end of the reproduction data.

By the combination of the text presence information, the reproduction information-presence information and the fragment reproduction data-location information, it is possible to determine the fragmentation state of the fragment reproduction data.

According to the packet data structure of the present invention, the fragmentation state of the fragment reproduction data is determined. Accordingly, it is also possible to determine the timing of the start of reproduction of the fragment reproduction data.

The data reproduction apparatus described in appendix 18 is a data reproduction apparatus for reproducing reproduction data from a packet having the packet data structure according to appendix 1, including: a fragmentation determining means; and a data reproducing means. The fragmentation determining means determines, from the fragment presence information, that the payload portion contains the fragment reproduction data. The data reproducing means reproduces the fragment reproduction data from the fragment reproduction data-reproduction information, based on a determination result of the fragmentation determining means.

The data reproducing means analyzes the packet based on a determination result of the fragmentation determining means: That is, when it determines that the fragment reproduction data is contained in the payload portion, it can analyze the fragment reproduction data-reproduction information, and to reproduce the fragment reproduction data.

According to the data reproduction apparatus of the present invention, it is possible to reproduce the obtained fragment reproduction data even when several packets have been lost in the middle of transmission.

The data reproduction apparatus described in appendix 19 is A data reproduction apparatus for reproducing reproduction data from a packet having the packet data structure according to appendix 2, including: a character code determining means; and a data reproducing means. The character code determining means determines, from the character code information, a character code of a fragmented portion of the text data contained in the fragment reproduction data. The data reproducing means reproduces the fragment reproduction data based on a determination result of the character code determining means.

The data reproducing means analyzes the packet based on a determination result of the character code determining means. That is , it can determine the character code of the text data contained in the fragment reproduction data, and to reproduce the fragment reproduction data.

According to the data reproduction apparatus of the present invention, even when several packets have been lost in the middle of transmission, it is possible to reproduce the obtained fragment reproduction data in a normal character code.

The data reproduction apparatus described in appendix 20 is a data reproduction apparatus for reproducing reproduction data from a packet having the packet data structure according to appendix 5, including: a first location information-obtaining means; and a data reproducing means. The first location information-obtaining means obtains, from the first location information, location information of the modifying information in the fragment reproduction data. The data reproducing means reproduces the fragment reproduction data based on the location information obtained by the first location information-obtaining means.

The data reproducing means analyzes the packet based on the first location information obtained by the first location information-obtaining means. That is, it determines, from the first location information, the modifying information in the fragment reproduction data, and reproduces the fragment reproduction data.

According to the data reproduction apparatus of the present invention, even when several packets have been lost in the middle of transmission, it is possible to use the modifying effect for the obtained fragment reproduction data.

The data reproduction apparatus described in appendix 21 is a data reproduction apparatus for reproducing reproduction data from a packet having the packet data structure according to appendix 9, including: a second location information-obtaining means; and a data reproducing means. The second location information-obtaining means obtains, from the second location information, location information, in the text data, of fragment text data that is a fragmented portion of the text data contained in the fragment reproduction data. The data reproducing means reproduces the fragment reproduction data based on the location information obtained by the second location information-obtaining means:

The modifying information specifies the modification range of the text data, for example, in units of bytes or units of number characters of the text body. The second location information is, for example, information representing the start position of the fragment text data in the text data, for example, in units of bytes or in units of the number of characters of the text body.

The data reproducing means analyzes the packet based on the second location information obtained by the second location information-obtaining means. That is, it determines, from the second location information, the range of the fragment text data in which modification is provided, and reproduces the fragment text data.

According to the data reproduction apparatus of the present invention, even when several packets have been lost in the middle of transmission, it is possible to use the modifying effect for the obtained fragment text data.

The data reproduction apparatus described in appendix 22 is A data reproduction apparatus for reproducing reproduction data from a packet having the packet data structure according to appendix 11, including: a modification type obtaining means; and a data reproducing means. The modification type obtaining means obtains, from the modification type information, a modification type of the partial modifying information contained in the fragment reproduction data. The data reproducing means reproduces the fragment reproduction data based on the modification type obtained by the modification type obtaining means.

The partial modifying information is, for example, a modifier of a text sample in Timed Text.

According to the data reproduction apparatus of the present invention, for example, when the fragment reproduction data no longer contains the modification type of the partial modifying information due to fragmentation of the reproduction data, it is possible with the modification type information included in the header portion to use the partial modifying information included in the fragment reproduction data.

The data reproduction apparatus described in appendix 23 is a data reproduction apparatus for reproducing reproduction data from a packet having the packet data structure according to appendix 12, including: a first unit modifying information-obtaining means; and a data reproducing means. The first unit modifying information-obtaining means obtains the first unit modifying information from the third location information. The data reproducing means reproduces the reproduction data based on the first unit modifying information obtained by the first unit modifying information-obtaining means.

The data reproducing means analyzes the packet based on the first unit modifying information obtained by the first unit modifying information-obtaining means.

According to the data reproduction apparatus of the present invention, for example, when the fragment reproduction data contains a portion of the fragmented partial modifying information, it is possible to distinguish the first unit modifying information from the fragmented partial modifying information, and to use the modification effect for the text data.

The data reproduction apparatus described in appendix 24 is a data reproduction apparatus for reproducing reproduction data from a packet having the packet data structure according to appendix 14, including: a second unit modifying information-obtaining means; and a data reproducing means. The second unit modifying information-obtaining means obtains the second unit modifying information. The data reproducing means reproduces the reproduction data based on the second unit modifying information obtained by the second unit modifying information-obtaining means.

The data reproducing means analyzes the packet based on the second unit modifying information obtained by the second unit modifying information-obtaining means.

According to the data reproduction apparatus of the present invention, it is possible with the second unit modifying information to use the fragmented modifying information contained in the fragment reproduction data.

The data reproduction apparatus described in appendix 25 is a data reproduction apparatus for reproducing reproduction data from a packet having the packet data structure according to appendix 16, including: a reproduction information determining means; and a data reproducing means. The reproduction information determining means determines fragment reproduction data-reproduction information included in the fragment reproduction data, based on the text presence information and the reproduction information-presence information. The data reproducing means reproduces the reproduction data based on a determination result of the reproduction information determining means.

The fragment reproduction data-reproduction information is, for example, information for using the character code information of the text data contained in the fragment reproduction data or the modifying information contained in the fragment reproduction data.

The type of the information included in the fragment reproduction data-reproduction information is dependent on the text presence information. Accordingly, the type of the information included in the fragment reproduction data-reproduction information can be determined by the combination of the text presence information and the reproduction information-presence information.

According to the data reproduction apparatus of the present invention, it is possible to determine the information included i the fragment reproduction data-reproduction information by the combination of the text presence information and the reproduction information-presence information.

The data reproduction apparatus described in appendix 26 is a data reproduction apparatus for reproducing reproduction data from a packet having the packet data structure according to appendix 17, including: a fragmentation state determining means; and a reproduction control means. The fragmentation state determining means determines a fragmentation state of the fragment reproduction data based on the text presence information, the reproduction information-presence information and the fragment reproduction data-location information. The reproduction control means controls reproduction of the fragment reproduction data based on a determination result of the fragmentation state determining means.

According to the packet data structure of the present invention, the fragmentation state of the fragment reproduction data is determined. Accordingly, the reproduction control means can determine the timing of start of reproduction of the fragment reproduction data.

### Sixth embodiment

By recording a program for realizing the data transmission method, the data receiving method, the data reproduction method or the data multiplexing method shown in the above-described embodiments in a recording medium such as a flexible disk, it is possible to readily perform the processes shown in the above-described embodiments in an independent computer system.

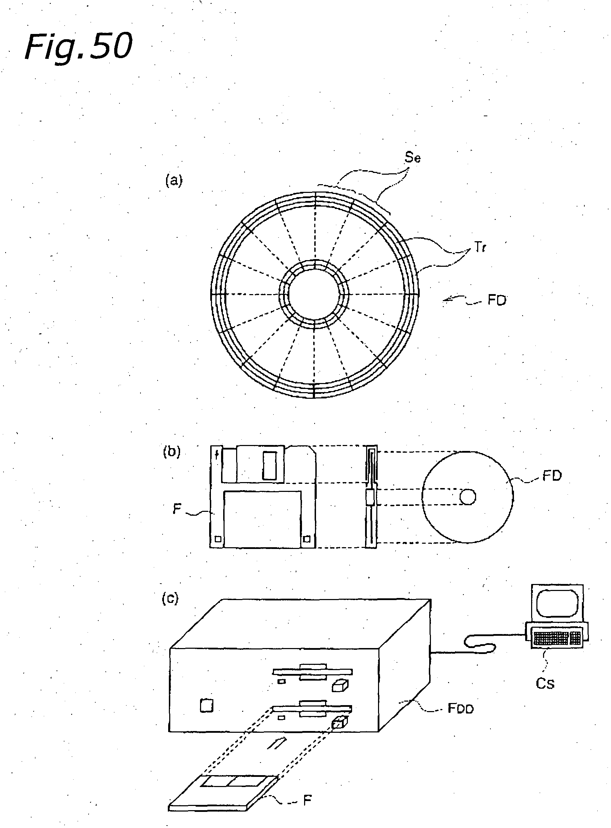

FIG. 50 is a diagram illustrating a case where the data transmission method, the data receiving method, the data reproduction method or the data multiplexing method according to the above-described embodiments is performed by a computer system using a program recorded in a recording medium such as a flexible disk.

FIG. 50(b) shows the appearance of a flexible disk viewed from the front, the cross-sectional structure and the flexible disk, and FIG. 50(a) shows an example of a physical format of the flexible disk serving as a recording medium body. A flexible disk FD is contained in a case F, and a plurality of tracks Tr are formed concentrically from the outer periphery to the inner periphery on the surface of the disk, with each track divided into 16 sectors Se in an angular direction. Therefore, in a flexible disk storing the above-described program, the program is recorded in an area allocated on the flexible disk FD.

Additionally, FIG. 50(c) shows a configuration for carrying out recording/reproduction of the above-described program in the flexible disk FD. In the case of recording the above-described program for realizing the data transmission method, the data receiving method, the data reproduction method or the data multiplexing method in the flexible disk FD, the program is written from a computer system Cs through a flexible disk drive. Furthermore, in the case of constructing the data transmission method, the data receiving method, the data reproduction method or the data multiplexing method described above in the computer system using the program in the flexible disk, the program is read from the flexible disk with the flexible disk drive, and transferred to the computer system.

Although a flexible disk is used as the recording medium in the above description, the present invention can be similarly performed using an optical disk. Additionally, the recording medium is not limited to these, and the present invention can be similarly performed using any medium such as IC card or ROM cassette that is capable of recording a program.

### Seventh embodiment

Hereinafter, application examples of the packet data structure, the data transmission apparatus, the data receiving apparatus, the data reproduction apparatus or the data multiplexing apparatus shown in the above-described embodiments, and a system using the same will be described.

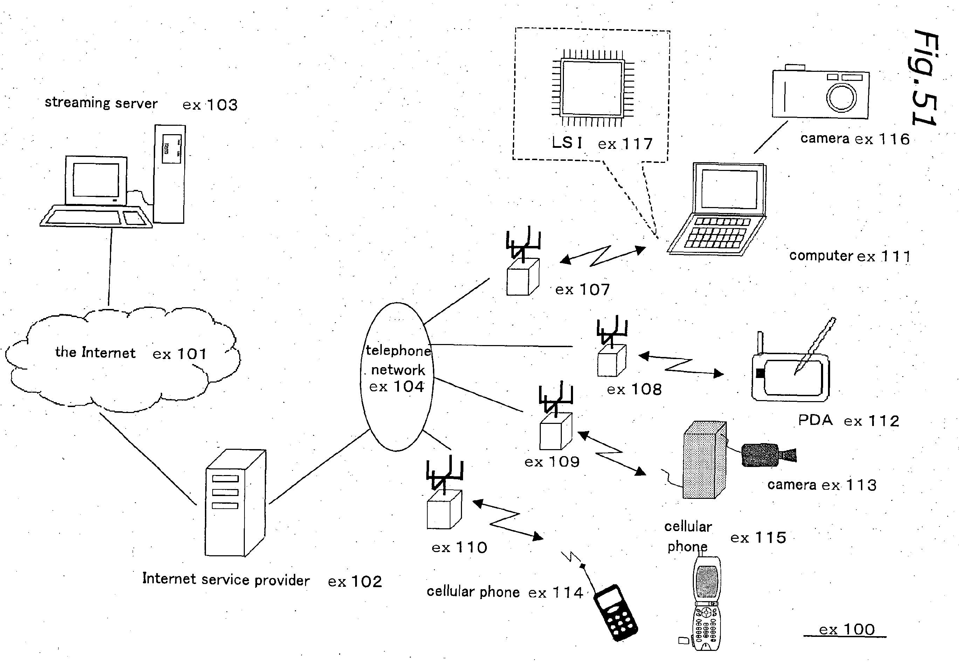

FIG. 51 is a block diagram showing an overall structure of a content providing system ex100 that realizes a content delivering service. An area where a communication service is provided is divided into cells of a desired size, and base stations ex107-ex110 that are fixed radio stations are provided in the cells.

This content providing system ex100 includes a computer ex111, a personal digital assistant (PDA) ex112, a camera ex113, a cellular phone ex114, a cellular phone with camera ex115 and other equipment that are connected to the Internet ex101 for example via an internet service provider ex102, a telephone network ex104 and base stations ex107-ex110.

However, the content providing system ex100 can adopt any combination for connection without being limited to the combination shown in FIG. 51. In addition, each of the devices can be connected directly to the telephone network ex104 without the base stations ex107-ex110 that are fixed radio stations.

The camera ex113 is a device such as a digital video camera that can obtain a moving image. In addition, the cellular phone may be any type of PDC (Personal Digital Communications) method, CDMA (Code Division Multiple Access) method, W-CDMA (Wideband-Code Division Multiple Access) method, or GSM (Global System for Mobile Communications) method, or a cellular phone of PHS (Personal Handyphone System).

In addition, the streaming server ex103 is connected to the camera ex113 via the base station ex109 and the telephone network ex104, so that live delivery can be performed on the basis of coded data transmitted by a user of the camera ex113. The coding process of the obtained data may be performed by the camera ex113 or by a server for transmitting data. In addition, the moving image data obtained by the camera ex116 may be transmitted to the streaming server ex103 via the computer ex111. The camera ex116 is a device that can take a still image like a digital camera and a moving image. In this case, coding of the moving image data'may be performed by the camera ex116 or by the computer ex111. In addition, the coding process may be performed by an LSI ex117 in the computer ex111 or the camera ex116. Note that it is possible to incorporate software for coding and decoding images into a storage medium (a CD-ROM, a flexible disk, a hard disk or the like) that is a recording medium readable by the computer ex111. Furthermore, the cellular phone with camera ex115 may transmit the moving image data. In this case, the moving image data is coded by the LSI in the cellular phone ex115.

In this content providing system ex100, content (for example, a moving image of a music concert) that the user is recording with the camera ex113 or the camera ex116 are coded and transmitted to the streaming server ex103, while the streaming server ex103 delivers a stream of the content data to a client who made a request. The client may be the computer ex111, the PDA ex112, the camera ex113, the cellular phone ex114 or the like that can decode the coded data. Thus, in the content providing system ex100, the client can receive and reproduce the coded data. The system can realize personal broadcasting when the client receives, decodes and reproduces the stream in real time.

In addition, the streaming server ex103 may be performed as the data transmission apparatus or the data multiplexing apparatus of the present invention. The computer ex111, the PDA ex112, the camera ex113 and the cellular phone ex114 may be perfoemed as the data receiving apparatus or the data reproduction apparatus. In this way, it is possible to obtain media data stored in an MP4 file format from streaming server ex103 by means of the computer ex111, the PDA ex112, the camera ex113 and the cellular phone ex114, and display Timed Text by the streaming.

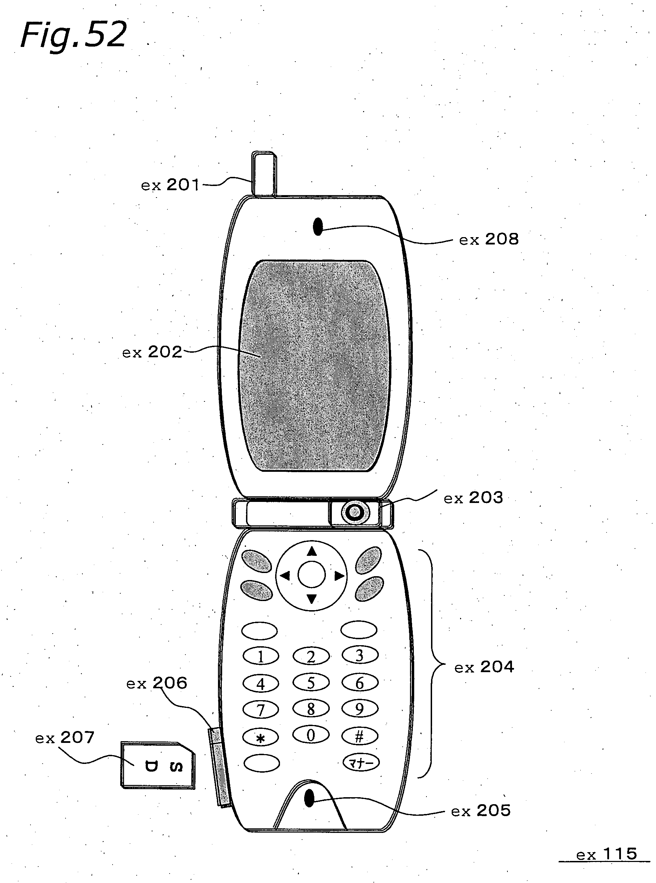

FIG. 52 shows the cellular phone ex115 that utilizes the packet data structure, the data receiving apparatus, the data reproduction apparatus and the data multiplexing apparatus of the present invention. The cellular phone ex115 includes an antenna ex201 for transmitting and receiving radio waves with the base station ex110, a camera portion ex203 such as a CCD camera that can take a still image, a display portion ex202 such as a liquid crystal display for displaying images obtained by the camera portion ex203 or images received by the antenna ex201 after the image data are decoded, a main body portion including a group of operating keys ex204, a sound output portion ex208 such as a speaker for producing sounds, a sound input portion ex205 such as a microphpne for receiving sounds, a recording medium ex207 for storing coded data or decoded data such as data of taken moving images or still images, data of received e-mails, moving images or still images, and a slot portion ex206 that enables the recording medium ex207 to be attached to the cellular phone ex115. The recording medium ex207 such as an SD card includes a plastic case housing a flash memory element that is one type of EEPROM (Electrically Erasable and Programmable Read Only Memory) nonvolatile memory that is electronically rewritable and erasable.

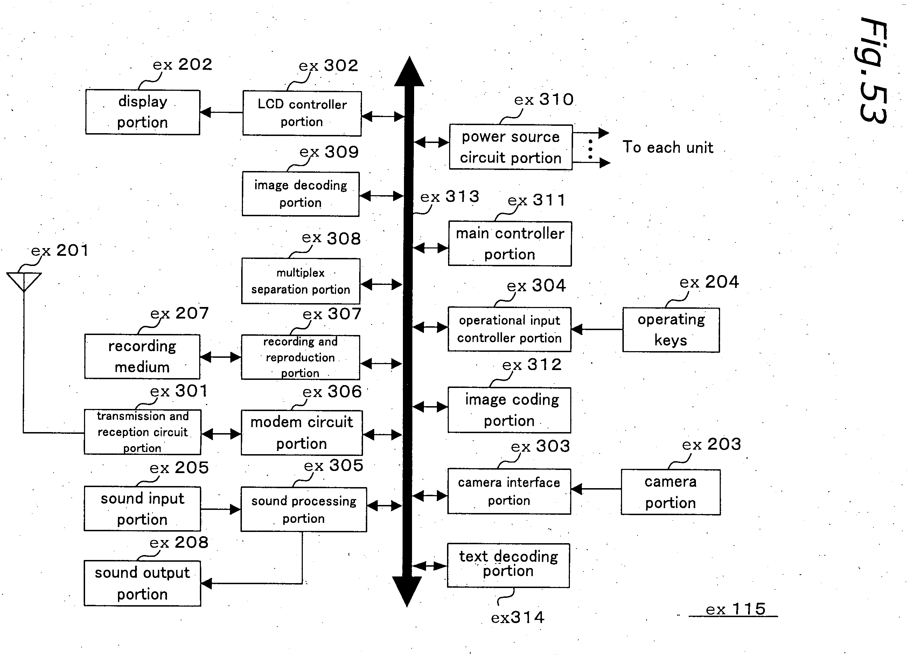

Furthermore, the cellular phone ex115 will be described with reference to FIG. 53. The cellular phone ex115 includes a main controller portion ex311 for controlling each portion of the main body portion having the display portion ex202 and the operating keys ex204, a power source circuit portion ex310, an operational input controller portion ex304, an image coding portion ex312, a camera interface portion ex303, an LCD (Liquid Crystal Display) controller portion ex302, an image decoding portion ex309, a multiplex separation portion ex308, a recording and reproduction portion ex307, a modem circuit portion ex306 and a sound processing portion ex305, which are connected to each other via a synchronizing bus ex313.

When the user turns on a clear and power key, the power source circuit portion ex310 supplies power from a battery pack to each portion so that the digital cellular phone with camera ex115 is activated.

The cellular phone ex115 converts a sound signal collected by the sound input portion ex205 during a sound communication mode into digital sound data by the sound processing portion ex305 under control of the main controller portion ex311 that includes a CPU, a ROM and a RAM. The digital sound data are processed by the modem circuit portion ex306 as a spectrum spreading process and are processed by the transmission and reception circuit portion ex301 as a digital to analog conversion process and a frequency conversion process. After that, the data are transmitted via the antenna ex201. In addition, the cellular phone ex115 amplifies a signal that is received by the antenna ex201 during the sound communication mode and performs the frequency conversion process and an analog to digital conversion process on the data, which is processed by the modem circuit portion ex306 as a spectrum reverse spreading process and is converted into a analog sound signal by the sound processing portion ex305. After that, the analog sound signal is delivered by the sound output portion ex208.

Furthermore, when transmitting electronic mail during a data communication mode, text data of the electronic mail are entered by using the operating keys ex204 of the main body portion and are given to the main controller portion ex311 via the operational input controller portion ex304. The main controller portion ex311 performs the spectrum spreading process on the text data by the modem circuit portion ex306 and performs the digital to analog conversion process and the frequency conversion process by the transmission and reception circuit portion ex301. After that, the data are transmitted to the base station ex110 via the antenna ex201.

When transmitting image data during the data communication mode, the image data obtained by the camera portion ex203 are supplied to the image coding portion ex312 via the camera interface portion ex303. In addition, if the image data are not transmitted, it is possible to display the image data obtained by the camera portion ex203 directly by the display portion ex202 via the camera interface portion ex303 and an LCD controller portion ex302.

The image coding portion ex312 converts the image data supplied from the camera portion ex203 into the coded image data by compressing and coding the data, and the coded image data are supplied to the multiplex separation portion ex308. In addition, the cellular phone ex115 collects sounds by the sound input portion ex205 while the camera portion ex203 is taking the image, and the digital sound data is supplied from the sound processing portion ex305 to the multiplex separation portion ex308.

The multiplex separation portion ex308 performs multiplexing of the coded image data supplied from the image coding portion ex312 and the sound data supplied from the sound processing portion ex305 by a predetermined method. Multiplexed data obtained as a result are processed by the modem circuit portion ex306 as a spectrum spreading process and are processed by the transmission and reception circuit portion ex301 as a digital to analog conversion process and a frequency conversion process. After that, the data are transmitted via the antenna ex201.

When receiving moving image file data that are linked to a web page during the data communication mode, a signal received from the base station ex110 via the antenna ex201 is processed by the modem circuit portion ex306 as a spectrum reverse spreading process. Multiplexed data obtained as a result are supplied to the multiplex separation portion ex308.

In addition, in order to decode multiplexed data received via the antenna ex201, the multiplex separation portion ex308 separates a coded bit stream of image data in the multiplexed data from a coded bit stream of sound data. Then, the multiplex separation portion ex308 supplies the coded image data to the image decoding portion ex309 via the synchronizing bus ex313 and supplies the sound data to the sound processing portion ex305. Then, in the MP4 file, Timed Text track is supplied to the text decoding portion ex314.

Next, the image decoding portion ex309 generates reproduction moving image data by decoding the coded bit stream of the image data and supplies the data to the display portion ex202 via the LCD controller portion ex302. Thus, the moving image data included in a moving image file that is linked to a home page can be displayed. In this case, the sound processing portion ex305 converts the sound data into an analog sound signal, which is supplied to the sound output portion ex208. Thus, sound data included in the moving image file that is linked to a home page can be reproduced. In addition, the text decoding portion ex314 reproduces text samples as discribed in the above embodiments, supplies the data to the display portion ex202 via the LCD controller portion ex302, and displays the data synchronously with the reproduction moving image data.

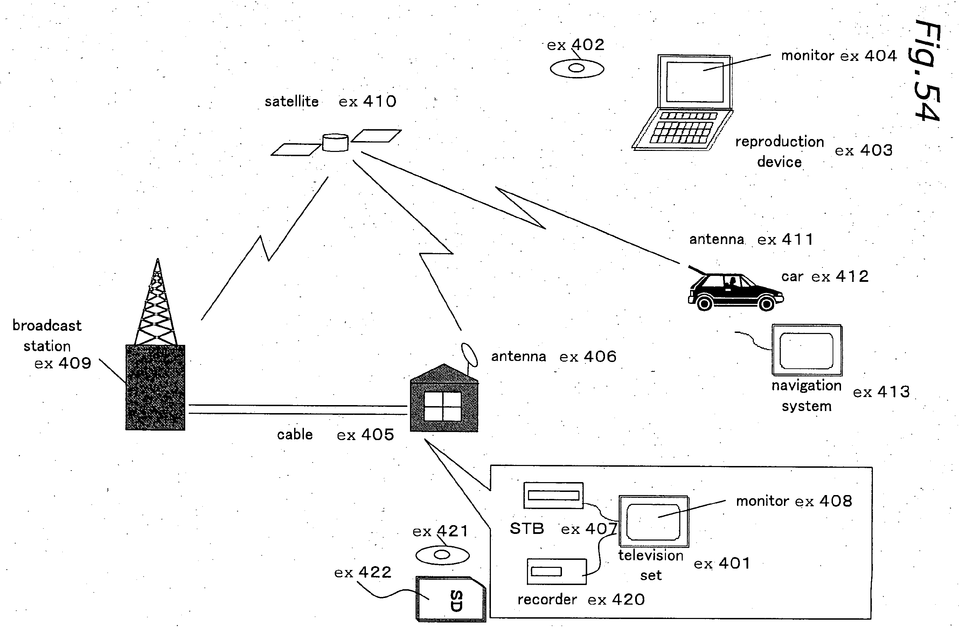

Note that the present invention is not limited to the example of the system described above. Digital broadcasting by satellite or terrestrial signals has been a recent topic of discussion. As shown in FIG. 54, the data transmission apparatus, the data receiving apparatus, the data multiplexing apparatus or the data reproduction apparatus of the present invention can be incorporated into the digital broadcasting system, too.

More specifically, in a broadcast station ex409, a coded bit stream of image information is sent to a communication or a broadcasting satellite ex410 via a radio wave. The broadcasting satellite ex410 that received the coded bit stream of image information sends radio waves for broadcasting. These radio waves are received by an antenna ex406 of a house equipped with a satellite broadcasting reception facility, and a device such as a television set (a receiver) ex401 or a set top box (STB) ex407 decodes the coded bit stream and reproduces the same. In addition, a reproduction device ex403 for reading and decoding a coded bit stream that is recorded on a storage medium ex402 such as a CD or a DVD that is a recording medium may be equipped with the data receiving apparatus and the data reproduction apparatus. In this case, the reproduced image signal and text track are displayed on a monitor ex404. In addition, it is possible to mount the data receiving apparatus or the data reproduction apparatus of the present invention in a set top box ex407 that is connected to a cable ex405 for a cable television or the antenna ex406 for a satellite or surface wave broadcasting, so that the image can be reproduced on a monitor ex408 of the television set. In this case, it is possible to incorporate the data receiving apparatus or the data reproduction apparatus of the present invention not into the set top box but into the television set. In addition, it is possible that a car ex412 equipped with an antenna ex411 receives a signal from the broadcasting satellite ex410 or the base station ex107 and reproduces the moving image on a display of a navigation system ex413 in the car ex412.

Furthermore, it is possible to record the image signal in a recording medium. As a specific example, there is a recorder ex420 such as a DVD recorder for recording image signals on a DVD disk ex421 or a disk recorder for recording image signals on a hard disk. Furthermore, it is possible to record on an SD card ex422. In addition, in case that the recorder ex420 includes the data reproduction apparatus of the present invention, it is possible to reproduce image signals recorded on a DVD disk ex421 or a SD card ex422 via the image signal processing device, so as to display on the monitor ex408.

Note that in the structure of the navigation system ex413 shown in FIG. 54, the camera portion ex203, the camera interface portion ex303 and the image coding portion ex312 can be omitted. This can be also applied to the computer ex111 and the television set (the receiver) ex401.

In addition, the terminal device such as the cellular phone ex114 may include three types of assemblies. A first type is a transmission and reception terminal having both the coder and the decoder, a second type is a transmission terminal having only a coder and a third type is a reception terminal having only a decoder.

Thus, the packet data structure, the data transmission apparatus, the data transmission method, the data receiving apparatus, the data receiving method, the data reproduction apparatus and the data multiplexing apparatus shown in the above-described embodiments can be used for any device and system described above, so that effects described above can be obtained.

### Eighth embodiment

The present invention is not limited to the above-described embodiments, various alterations and modifications may be made without departing from the scope of the present invention. Furthermore, the methods described in the above-described embodiments may also be realized as a program, using a computer or the like.

### Industrial Applicability

The transmission data structure according to the present invention is applicable, for example, to data for text transmission, which is required to provide a transmission data structure suitable for using Timed Text in the streaming type distribution.

## Claims

1. A transmission data structure of data for text transmission for transferring data for text reproduction relating to reproduction of text data and successively reproducing the data for text reproduction with a data receiving apparatus, comprising:
full text header data relating to reproduction of the text data as a whole;
fragment text data containing fragmented portions of the text data; and
fragment text header data placed for each instance of the fragment text data and relating to individual reproduction of the fragment text data.

2. The transmission data structure of data for text transmission according to claim 1,
wherein the fragment text header data contains reproduction time period information relating to a reproduction time period of the fragment text data.

3. The transmission data structure of data for text transmission according to claim 1 or 2,
wherein the fragment text header data contains data length information relating to a data length of the fragment text data.

4. The transmission data structure of data for text transmission according to any of claims 1 to 3,
wherein the full text header data contains text reproduction information containing information relating to a reproduction area of the text data, and format information containing information relating to a format of the fragment text data.

5. The transmission data structure of data for text transmission according to claim 4,
wherein the full text header data further contains data length configuration information for configuring a data length of the fragment text header data.

6. The transmission data structure of data for text transmission according to claim 4 or 5,
wherein the fragment text header data contains an index indicating a relation between the fragment text data and the format information.

7. The transmission data structure of data for text transmission according to any of claims 4 to 6,
wherein the data for text transmission comprises a plurality of packets, and
wherein the text reproduction information is packetized in a different type from the fragment text data and the fragment text header data.

8. The transmission data structure of data for text transmission according to claim 7,
wherein the format information is packetized in the same type as the text reproduction information.

9. The transmission data structure of data for text transmission according to claim 7,
wherein the format information is packetized in the same type as the fragment text data and the fragment text header data.

10. The transmission data structure of data for text transmission according to claim 9,
wherein the format information includes a plurality of format information units, and
wherein the format information unit is placed for each instance of the fragment text data.

11. The transmission data structure of data for text transmission according to any of claims 1 to 10,
wherein the data for text transmission is data that is transmitted as multiplexed data.

12. A data receiving method for data for text transmission, comprising:
a receiving process of receiving data for text transmission having the transmission data structure according to any of claims 1 to 11; and
a reproducing process of successively reproducing fragmented portions of the text data contained in the fragment text data, based on the full text header data, the fragment text data and the fragment text header data that are contained in the data for text transmission.

13. A data receiving apparatus for data for text transmission, comprising:
a receiving unit operable to receive data for text transmission having the transmission data structure according to any of claims 1 to 11; and
a reproducing unit operable to successively reproduce fragmented portions of the text data contained in the fragment text data, based on the full text header data, the fragment text data and the fragment text header data that are contained in the data for text transmission.

14. A data receiving program for performing, with a computer, a data receiving method for data for text transmission having the transmission data structure according to any of claims 1 to 11,
wherein the data receiving program lets the computer perform the data receiving method comprising:
a receiving process of receiving data for text transmission having the transmission data structure according to any of claims 1 to 11; and
a reproducing process of successively reproducing fragmented portions of the text data contained in the fragment text data, based on the full text header data, the fragment text data and the fragment text header data that are contained in the data for text transmission.

15. A transmission data structure of data for text transmission for transferring and successively reproducing data for text reproduction relating to reproduction of text data,
wherein the data for text reproduction contains a plurality of instances of fragment text data obtained by fragmenting the text data, and text header data containing information for reproducing the fragment text data,
wherein the data for text transmission comprises a plurality of packets,
wherein the fragment text data are placed in each of the packets in an order in which they are displayed,
wherein the packet contains reproduction time information of each instance of the fragment text data, and
wherein a second packet contains fragment text data whose reproduction time information overlaps that of fragment text data of a first packet preceding the second packet.

16. The transmission data structure of data for text transmission according to claim 15,
wherein the number of the fragment text data contained in the packet is determined as such a number that the packet is transmitted in a bandwidth substantially corresponding to a transmission channel bandwidth secured for transmission of the data for text transmission.

17. The transmission data structure of data for text transmission according to claim 15 or 16,
wherein the data for text transmission is data that is transmitted as multiplexed data

18. A data receiving method for data for text transmission having the transmission data structure according to any of claims 15 to 17, comprising:
a time obtaining process of obtaining a time Tn indicated by reproduction time information of each instance of the fragment text data of the first packet, and a time Ta indicated by reproduction time information of the first fragment text data of the second packet; and
a replacing process of replacing fragment text data whose time Tn is equal to or later than the time Ta in the first packet by fragment text data that has overlapping reproduction time information in the second packet.

19. A data receiving method for data for text transmission having the transmission data structure according to any of claims 15 to 17, comprising:
a reception delay determining process of determining whether a receiving time Td of first fragment text data is later than a time Tn indicated by reproduction time information of the first fragment text data and is earlier than a time Tn+1 indicated by reproduction time information of subsequent second fragment text data; and
a reproducing process of reproducing the first fragment text data from the receiving time Td to the time Tn+1, if the determination is positive.

20. The data receiving method for data for text transmission according to claim 19,
wherein, in the reproducing process, reproduction of the first fragment text data is started from a reproduction state of the point when the time Tn to the receiving time Td has elapsed in the first fragment text data.

21. A data receiving apparatus for data for text transmission having the transmission data structure according to any of claims 15 to 17, comprising:
a time obtaining unit operable to obtain a time Tn indicated by reproduction time information of each instance of the fragment text data of the first packet, and a time Ta indicated by reproduction time information of the first fragment text data of the second packet; and
a replacing unit operable to replace fragment text data whose time Tn is equal to or later than the time Ta in the first packet by fragment text data that has'overlapping reproduction time information in the second packet.

22. A data receiving apparatus for data for text transmission having the transmission data structure according to any of claims 15 to 17, comprising:
a reception delay determining unit operable to determine whether a receiving time Td of first fragment text data is later than a time Tn indicated by reproduction time information of the first fragment text data and is earlier than a time Tn+1 indicated by reproduction time information of subsequent second fragment text data; and
a reproducing unit operable to reproduce the first fragment text data from the receiving time Td to the time Tn+1, if the determination is positive.

23. The data receiving apparatus for data for text transmission according to claim 22,
wherein, in the reproducing unit, reproduction of the first fragment text data is started from a reproduction state of the point when the time Tn to the receiving time Td has elapsed in the first fragment text data.

24. A data receiving program for performing, with a computer, a data receiving method for data for text transmission having the transmission data structure according to any of claims 15 to 17,
wherein the data receiving program lets the computer perform the data receiving method for the data for text transmission comprising:
a time obtaining process of obtaining a time Tn indicated by reproduction time information of each instance of the fragment text data of the first packet, and a time Ta indicated by reproduction time information of the first fragment text data of the second packet; and
a replacing process of replacing fragment text data whose time Tn is equal to or later than the time Ta in the first packet by fragment text data that has overlapping reproduction time information in the second packet.

25. A data receiving program for performing, with a computer, a data receiving method for data for text transmission having the transmission data structure according to any of claims 15 to 17,
wherein the data receiving program lets the computer perform the data receiving method for the data for text transmission comprising:
a reception delay determining process of determining whether a receiving time Td of first fragment text data is later than a time Tn indicated by reproduction time information of the first fragment text data and is earlier than a time Tn+1 indicated by reproduction time information of subsequent second fragment text data; and
a reproducing process of reproducing the first fragment text data from the receiving time Td to the time Tn+1, if the determination is positive.

26. The data receiving program for data for text transmission according to claim 25,
wherein, in the reproducing process, reproduction of the first fragment text data is started from a reproduction state of the point when the time Tn to the receiving time Td has elapsed.
